# EUROPEAN PATENT APPLICATION

(11) **EP 3 557 179 A2**
(43) Date of publication of application: **23.10.2019**
(21) Application number: 19168842.3
(22) Date of filing: 12.04.2019
(51) Int. Cl.: F41G 11/00, F16B 21/02, F16B 35/06, F16B 5/02

(54) **UNIVERSAL INTERFACE SYSTEM, FASTENER APPARATUS AND ACCESSORY RAIL SYSTEM**

(30) Priority: 21.04.2018 US 201862660984 P; 22.07.2018 US 201862701827 P; 26.07.2018 US 201862703868 P; 24.09.2018 US 201862735845 P; 16.10.2018 US 201816162339
(71) Applicant: Maxim Defense Industries, LLC, St. Cloud, MN 56301 (US)
(72) Inventor: Windfeldt, Michael G., St. Augusta, MN 55320 (US); McDonald, Joel N., Alexandria, MN 56308 (US)
(74) Representative: Kiwit, Benedikt

(57) **Abstract**

A fastener apparatus (200) for a universal interface system (10) is disclosed. The fastener apparatus may include a body (160), an interior fastener (206), an exterior fastener (202), and a spring (204). The fastener apparatus may form part of an accessory for a universal interface system. The universal interface system may include an object (14) such as a firearm hand guard, and an accessory (16) such as a mounting rail. The object may include a mounting surface (124), a locking surface (126), and an elongated slot (22) extending from the mounting surface to the locking surface. The accessory may be fixed to the mounting surface. The universal interface system may include a ready configuration (258), a rotated configuration (262), and a locked configuration (266). The universal interface system further may include a released configuration (260), and a deployed configuration (264). The universal interface system may be used to secure accessories to a weapon.

## Description

### CROSS REFERENCE TO RELATED APPLICATIONS

This application claims the benefit of U.S. Provisional Application No. 62/660,984 filed on April 21, 2018. This application claims the benefit of U.S. Provisional Application No. 62/701,827 filed on July 22, 2018. This application claims the benefit of U.S. Provisional Application No. 62/703,868 filed on July 26, 2018. This application claims the benefit of U.S. Provisional Application No. 62/735,845 filed on September 24, 2018. The disclosure of each of these applications is incorporated by reference herein in their entirety.

### FIELD OF THE INVENTION

The present invention generally relates to components for a fastener apparatus. More particularly, this invention relates to a system for attaching accessories to small arms weapons or other equipment.

### BACKGROUND

Fasteners and fastener systems may be used with tactical accessories to configure small arms weapons to individual preferences and mission requirements. Versatile weapons accessories may increase operator survivability and lethality by enhanced weapon performance. Accordingly, a need exists for improvements in mounting tactical accessories to small arms weapons.

### SUMMARY

Hence, the present invention is directed toward a universal interface system, as well as a fastener apparatus for securing an accessory (*e*.*g*., an accessory mounting rail, foregrip, tactical light, sling mount or other accessories) to an elongated slot on an object (*e*.*g*., a firearm handguard). The present invention is further directed toward an accessory rail system. For instance, a fastener apparatus for a universal interface system is disclosed. In one example, the fastener apparatus may include a body, an interior fastener, an exterior fastener, and a spring. The body may include a first surface, a second surface spaced from the first surface; a first bore in the first surface, and a second bore in the second surface. The first bore may include an end wall spaced from the first surface, and a side wall which extends from the first surface to the end wall. The second bore in the second surface may extend from the second surface to the end wall, the first bore and the second bore forming a first counterbore in the body. The interior fastener may include a distal end. The distal end of the interior fastener may be positioned near the second surface. The exterior fastener may include a proximal end. The proximal end of the exterior fastener being mated to the interior fastener. Also, the proximal end of the exterior fastener may be positioned in the first bore. The spring may be housed in the first bore between the proximal end of the exterior fastener and the end wall.

The fastener apparatus may include a first operational configuration in which the proximal end of the exterior fastener is spaced a first distance from the distal end of the interior fastener, and the interior fastener is biased toward the second surface by the spring. Additionally, the fastener apparatus may include a second operational configuration in which the exterior fastener compresses the spring and positions the interior fastener away from the second surface. The fastener apparatus may include a third operational configuration in which the proximal end of the exterior fastener is spaced a second distance from the distal end of the interior fastener, the second distance being less than the first distance.

The interior fastener may include an elongated base having a first longitudinal axis. The elongated base may include a lower surface, a first side proximate to the lower surface, a second side proximate to the first side, and a third side proximate to the first side and the lower surface, as well as a shoulder next to the elongated base. The shoulder may have a second longitudinal axis. The shoulder may include a first sidewall-segment proximate to the first side of the elongated base, and an end surface spaced from the second side of the elongated base along the second longitudinal axis. The interior fastener may further include a screw thread proximate to the end surface for receiving a mating fastener. The third side of the elongated base may include a notch. The notch may include a first interior sidewall, the first interior sidewall extending from the third side to the lower surface of the elongated base. The interior fastener further may include a shaft extending from the end surface. The shaft may be in parallel alignment with the second longitudinal axis. The shaft may be externally threaded with the screw thread.

The shoulder may include a first cross-sectional profile normal to the second longitudinal axis. The first cross-sectional profile may have a non-circular shape. The first cross-sectional profile may include a first straight wall segment proximate the first side surface; and a second straight wall segment spaced from the first straight wall segment. The first cross-sectional profile further may include a first curved wall segment between the first straight side wall segment and the second straight wall segment, as well as a second curved wall segment between the first straight side wall segment and the second straight wall segment. The first curved wall segment may possess a first radius of curvature, and the second curved wall segment may possess a second radius of curvature. The first radius of curvature may be substantially equal to the second radius of curvature.

Further, the first cross-sectional profile may include a third curved wall segment abutting the first straight wall segment, and a fourth curved wall segment spaced from the first wall segment. The third curved wall segment may possess a third radius of curvature, and the fourth curved wall segment may possess a fourth radius of curvature. The third radius of curvature may be substantially equal to the fourth radius of curvature. Moreover, the first radius of curvature may be substantially equal to the third radius of curvature. The first cross-sectional profile further may include a third straight wall segment between the first curved wall segment and the second curved wall segment, and a fourth straight wall segment between the third curved wall segment and the fourth curved wall segment. The first cross-sectional profile may have a first plane of symmetry and a second plane of symmetry. The first cross-sectional profile may have a rounded square shape.

Further, a method of fixing an accessory rail to a slotted object is disclosed. For instance, the slotted object may include a mounting surface, a locking surface, and an elongated slot extending from the mounting surface to the locking surface. The method may include providing an accessory rail with a fastener apparatus. The fastener apparatus may include an interior fastener, an exterior fastener, and a spring. The interior fastener may include an elongated base. The method may further include positioning the accessory rail on the mounting surface, moving the elongated base through the elongated slot and past the locking surface of the slotted object. Additionally, the method may include rotating the elongated base until the elongated base is oriented transverse to the elongated slot, and the spring biasing the shoulder into the elongated slot. The method further may include positioning the elongated base against the locking surface, and rotating the exterior fastener with respect to the shoulder to clamp the slotted object and the accessory rail between the elongated base and the mating fastener.

Also, a universal interface system is disclosed. For example, the universal interface system may include an object and an accessory. The object may include a mounting surface, a locking surface, and an elongated slot extending from the mounting surface to the locking surface. The accessory may include a fastener apparatus and the accessory may be fixed to the mounting surface. The universal interface system may include a ready configuration, a rotated configuration, and a locked configuration. Additionally, the universal interface system may include a released configuration, and a deployed configuration.

### DESCRIPTION OF THE DRAWINGS

In the accompanying drawings, which form a part of the specification and are to be read in conjunction therewith, and in which like reference numerals (or designations) are used to indicate like parts in the various views:
**FIG. 1** is a perspective view of a firearm equipped with an exemplary embodiment of a universal interface system of the present invention;
**FIG. 2** is a detail view of the exemplary universal interface system of **FIG. 1**;
**FIG. 3** is a top perspective view of an exemplary accessory rail and an exemplary fastener apparatus in accordance with the present invention;
**FIG. 4** is a bottom perspective view of the accessory rail and fastener apparatus of **FIG. 3**;
**FIG. 5** is a bottom view of the accessory rail and fastener apparatus of **FIG. 3**;
**FIG. 6** is a top partial exploded view of the accessory rail and fastener apparatus of **FIG. 3**;
**FIG. 7** is a bottom view of the accessory rail and fastener apparatus of **FIG. 6**;
**FIG. 8** is a top perspective view of the accessory rail of **FIG. 3**;
**FIG. 9** is a bottom perspective view of the accessory rail of **FIG. 3**;
**FIG. 10** is a front view of the accessory rail of **FIG.** 3;
**FIG. 11** is a side view of the accessory rail of **FIG.** 3;
**FIG. 12** is a cross-sectional view of the accessory rail of **FIG. 11** along line **12**-**12**;
**FIG. 13** is a cross-sectional view of the accessory rail of **FIG. 10** along line **13**-**13**;
**FIG. 14** is a top perspective view of a fastener of the fastener apparatus of **FIG. 3**;
**FIG. 15** is a side view of the fastener of **FIG. 14**;
**FIG. 16** is a bottom perspective view of the fastener of **FIG. 14**;
**FIG. 17** is a top view of the fastener of **FIG. 14**;
**FIG. 18** is a top perspective view of a coil spring of the fastener apparatus of **FIG. 3**;
**FIG. 19** is a side view of a coil spring of **FIG. 18**;
**FIG. 20** is a top view of the coil spring of **FIG. 18**;
**FIG. 21** is a top perspective view of an exemplary T-nut in accordance with the present invention;
**FIG. 22** is a top view of the T-nut of **FIG. 21**;
**FIG. 23** is a side view of the T-nut of **FIG. 21**;
**FIG. 24** is a front view of the T-nut of **FIG. 21**;
**FIG. 25** is a bottom view of the T-nut of **FIG. 21**;
**FIG. 26** is a bottom perspective view of the T-nut of **FIG. 21**;
**FIG. 27** is a top perspective view of an exemplary locking nut in accordance with the present invention;
**FIG. 28** is a top view of the locking nut of **FIG. 27**;
**FIG. 29** is a side view of the locking nut of **FIG. 27**;
**FIG. 30** is a front view of the locking nut of **FIG. 27**;
**FIG. 31** is a bottom view of the locking nut of **FIG. 27**;
**FIG. 32** is a bottom perspective view of the locking nut of **FIG. 27**;
**FIG. 33** is a partial view of an exemplary embodiment of an accessory interface system in a ready configuration, as viewed from the mounting surface side of the accessory interface system;
**FIG. 34** is a partial view of the accessory interface system of **FIG. 33**, as viewed from the locking surface side of the accessory interface system;
**FIG. 35** is another view of the accessory interface system of **FIG. 34** in a latched configuration;
**FIG. 36** is another view of the accessory interface system of **FIG. 34**, in a locked configuration;
**FIG. 37** is a cross-sectional view of the accessory interface system of **FIG. 33** along line **37-37**;
**FIG. 38** is a cross-sectional view of the accessory interface system of **FIG. 33** along line **38-38**;
**FIG. 39** is a cross-sectional view of the accessory interface system of **FIG. 35** along line **39-39**;
**FIG. 40** is a cross-sectional view of the accessory interface system of **FIG. 35** along line **40-40**;
**FIG. 41** is a cross-sectional view of the accessory interface system of **FIG. 36** along line **41-41**;
**FIG. 42** is a cross-sectional view of the accessory interface system of **FIG. 36** along line **42-42**;
**FIG. 43** is a top partial exploded view of another embodiment of an accessory rail and fastener apparatus in accordance with the present invention;
**FIG. 44** is a bottom view of the accessory rail and fastener apparatus of **FIG. 43**;
**FIG. 45** is a cross-sectional view of the accessory rail of **FIG. 43** along line **45-45**;
**FIG. 46** is a cross-sectional view of the accessory rail of **FIG. 43** along line **46-46**;
**FIG. 47** is a top perspective view of a fastener of the fastener apparatus of **FIG. 43**;
**FIG. 48** is a side view of the fastener of **FIG. 47**;
**FIG. 49** is a bottom perspective view of the fastener of **FIG. 47**;
**FIG. 50** is a top view of the fastener of **FIG. 47**;
**FIG. 51** is a top perspective view of an exemplary locking bolt in accordance with the present invention;
**FIG. 52** is a top view of the locking bolt of **FIG. 51**;
**FIG. 53** is a side view of the locking nut of **FIG. 51**;
**FIG. 54** is a front view of the locking nut of **FIG. 51**;
**FIG. 55** is a bottom view of the locking nut of **FIG. 51**;
**FIG. 56** is a bottom perspective view of the locking nut of **FIG. 51**;
**FIG. 57** is a top perspective view of an exemplary T-bolt in accordance with the present invention;
**FIG. 58** is a top view of the T-bolt of **FIG. 57**;
**FIG. 59** is a side view of the T-bolt of **FIG. 57**;
**FIG. 60** is a front view of the T-bolt of **FIG. 57**;
**FIG. 61** is a bottom view of the T-bolt of **FIG. 57**;
**FIG. 62** is a bottom perspective view of the T-bolt of **FIG. 57**;
**FIG. 63** is a partial view of another exemplary embodiment of accessory interface system in a ready configuration from the mounting surface side of the accessory interface system;
**FIG. 64** is a partial view of the accessory interface system of **FIG. 63** from the locking surface side of the accessory interface system;
**FIG. 65** is another view of the accessory interface system of **FIG. 64** in a rotated configuration;
**FIG. 66** is another view of the accessory interface system of **FIG. 64**, in a locked configuration;
**FIG. 67** is a cross-sectional view of the accessory interface system of **FIG. 63** along line **67-67**;
**FIG. 68** is a cross-sectional view of the accessory interface system of **FIG. 63** along line **68-68**;
**FIG. 69** is another view of the accessory interface system of **FIG. 67** in a deployed configuration;
**FIG. 70** is another view of the accessory interface system of **FIG. 68** in a deployed configuration;
**FIG. 71** is a cross-sectional view of the accessory interface system of **FIG. 65** along line **71-71**;
**FIG. 72** is a cross-sectional view of the accessory interface system of **FIG. 65** along line **72-72**;
**FIG. 73** is another view of the accessory interface system of **FIG. 71** in a latched configuration;
**FIG. 74** is another view of the accessory interface system of **FIG. 72** in a latched configuration;
**FIG. 75** is a cross-sectional view of the accessory interface system of **FIG. 66** along line **75-75**;
**FIG. 76** is a cross-sectional view of the accessory interface system of **FIG. 66** along line **76-76**;
**FIG. 77** is a top partial exploded view of another embodiment of an accessory rail and fastener apparatus in accordance with the present invention;
**FIG. 78** is a bottom view of the accessory rail and fastener apparatus of **FIG. 77**;
**FIG. 79** is a plan view of two exemplary 2-slot accessory rails connected to four exemplary slots of a handguard, in accordance with an embodiment of a universal interface system of the present invention;
**FIG. 80** is a plan view of one exemplary 4-slot accessory rail connected to four exemplary slots of a handguard, in accordance with an embodiment of a universal interface system of the present invention;
**FIG. 81** is a plan view of two exemplary 2-slot accessory rails and one 1-slot accessory rail connected to five exemplary slots of a handguard, in accordance with an embodiment of a universal interface system of the present invention;
**FIG. 82** is a plan view of one exemplary 5-slot accessory rail connected to five exemplary slots of a handguard, in accordance with an embodiment of a universal interface system of the present invention;
**FIG. 83** is a plan view of an exemplary set of modular accessory rails having in accordance with an aspect of the present invention;
**FIG. 84** is a plan view of an exemplary kit including an exterior fastener, a resilient member, and an interior fastener for creating a fastener apparatus in accordance with the present invention;
**FIG. 85** is a cross-sectional view of **FIG. 24** along line **85-85**;
**FIG. 86** is a cross-sectional view of **FIG. 30** along line **86-86**;
**FIG. 87** is a cross-sectional view of **FIG. 54** along line **87-87**;
**FIG. 88** is a cross-sectional view of **FIG. 60** along line **88-88**;
**FIG. 89** is a top partial exploded view of another embodiment of an accessory rail and fastener apparatus in accordance with the present invention;
**FIG. 90** is a bottom view of the accessory rail and fastener apparatus of **FIG. 89**;
**FIG. 91** is a top perspective view of an exemplary locking bolt of **FIG. 89**;
**FIG. 92** is a top view of the locking bolt of **FIG. 91**;
**FIG. 93** is a side view of the locking nut of **FIG. 91**;
**FIG. 94** is a front view of the locking nut of **FIG. 91**;
**FIG. 95** is a bottom view of the locking nut of **FIG. 91**;
**FIG. 96** is a bottom perspective view of the locking nut of **FIG. 91**;
**FIG. 97** is an exploded view of the locking bolt of **FIG. 91**;
**FIG. 98** is an exploded view of another embodiment of the locking bolt of **FIG. 91**;
**FIG. 99** is a cross-sectional view of another embodiment of an accessory interface system of **FIG. 63** in a ready configuration;
**FIG. 100** is another view of the accessory interface system of **FIG. 99** in a deployed configuration;
**FIG. 101** is another cross-sectional view of the accessory interface system of **FIG. 99** in a latched configuration.
**FIG. 102** is another view of the accessory interface system of **FIG. 101** in a locked configuration.
**FIG. 103** is another cross-sectional view of yet another embodiment of the accessory interface system of **FIG. 99** in a latched configuration.
**FIG. 104** is another view of the accessory interface system of **FIG. 103** in a locked configuration.
**FIG. 105** is a cross-sectional view of **FIG. 91** along line **105-105**;
**FIG. 106** is a cross-sectional view of another exemplary locking bolt of **FIG. 91** along line **105-105**;

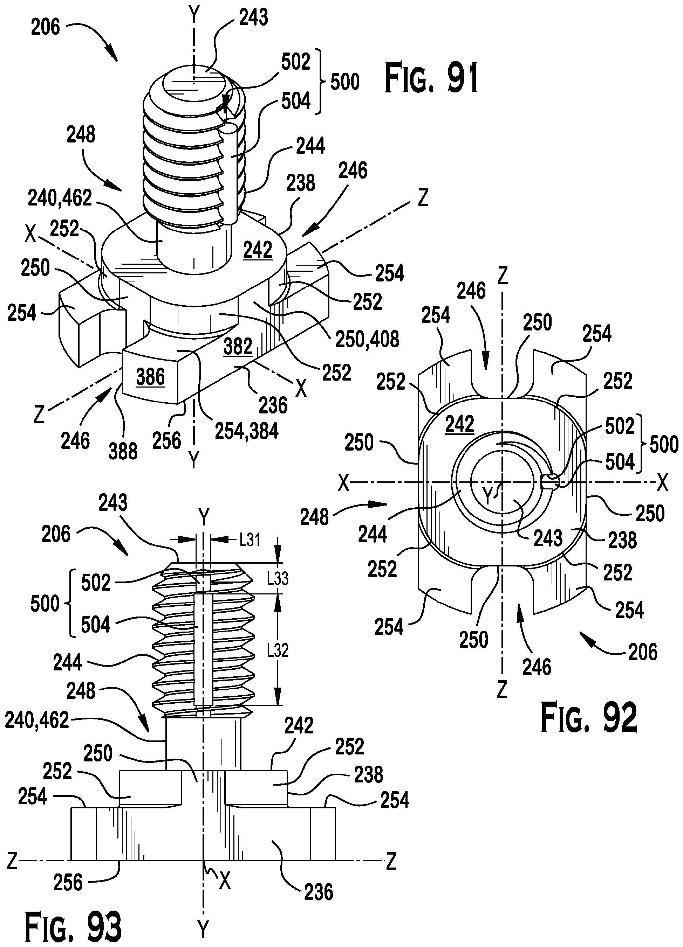

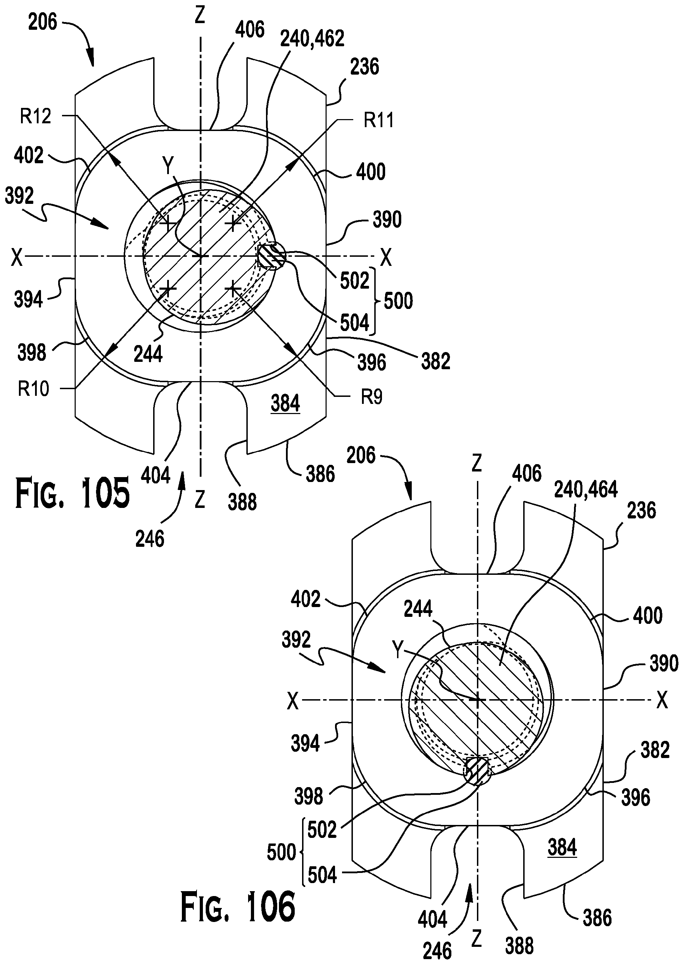

**FIG. 106** is a cross-sectional view of another exemplary locking bolt of **FIG. 91** along line **105-105**;

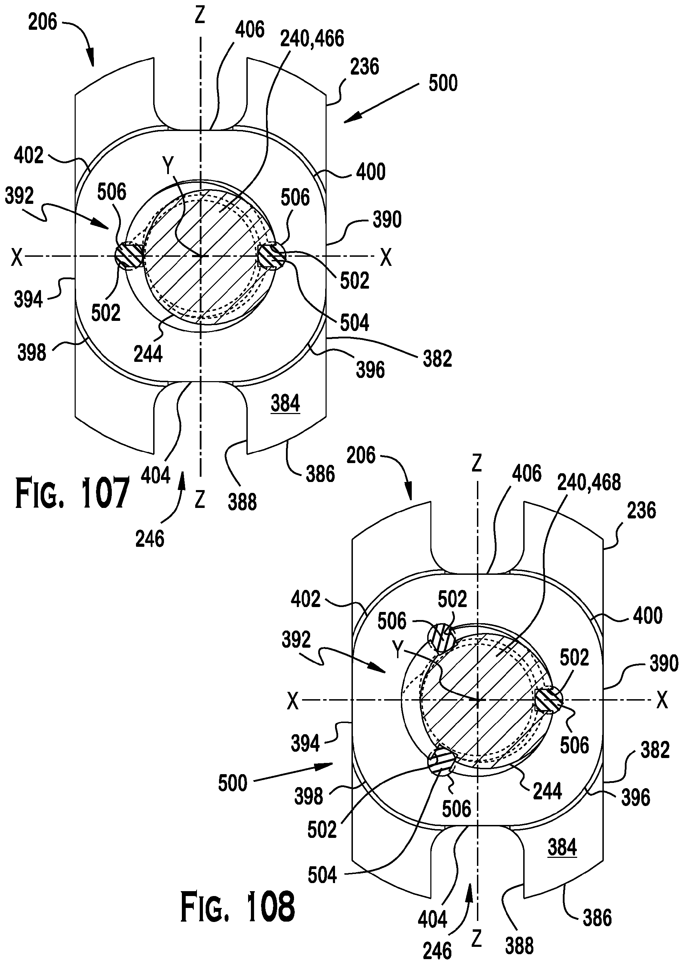

**FIG. 107** is a cross-sectional view of another exemplary locking bolt of **FIG. 91** along line **105-105**;
FIG. 108 is a cross-sectional view of another exemplary locking bolt of **FIG. 91** along line **105-105**;

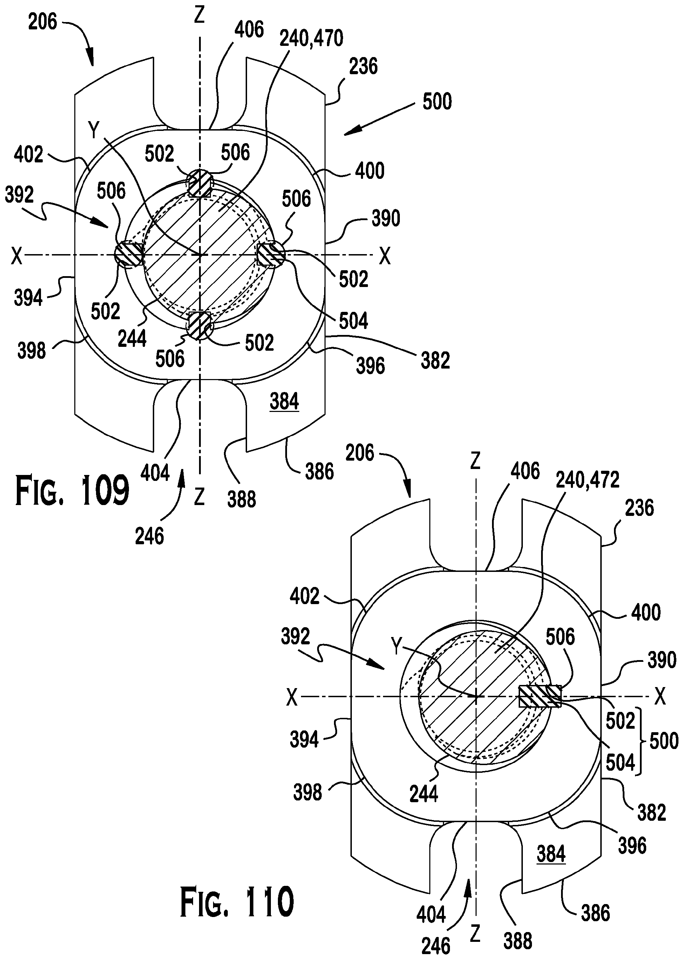

**FIG. 109** is a cross-sectional view of another exemplary locking bolt of **FIG. 91** along line **105-105**;
**FIG. 110** is a cross-sectional view of another exemplary locking bolt of **FIG. 91** along line **105-105**;

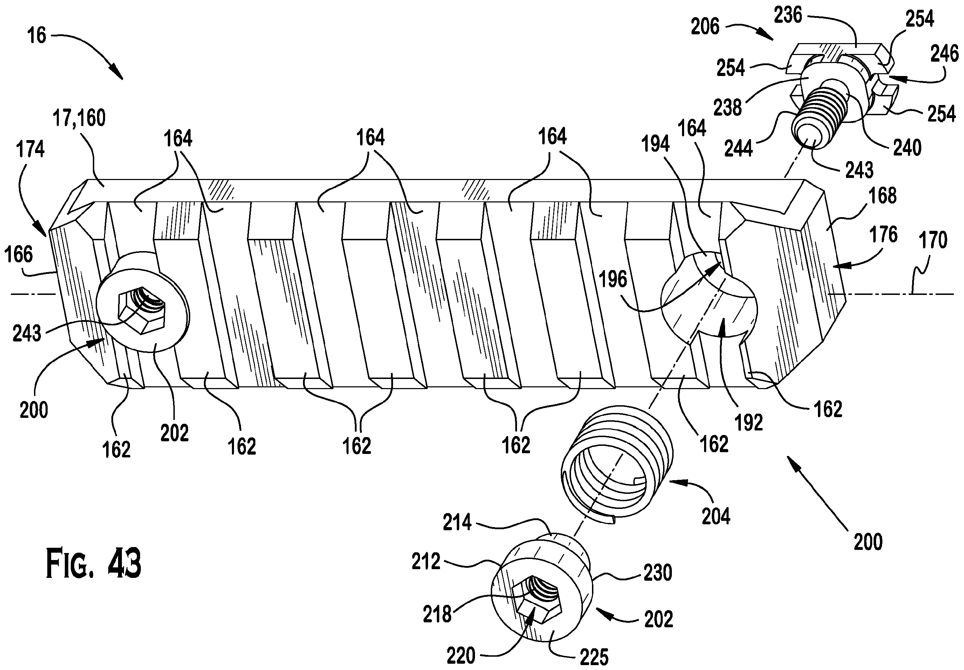

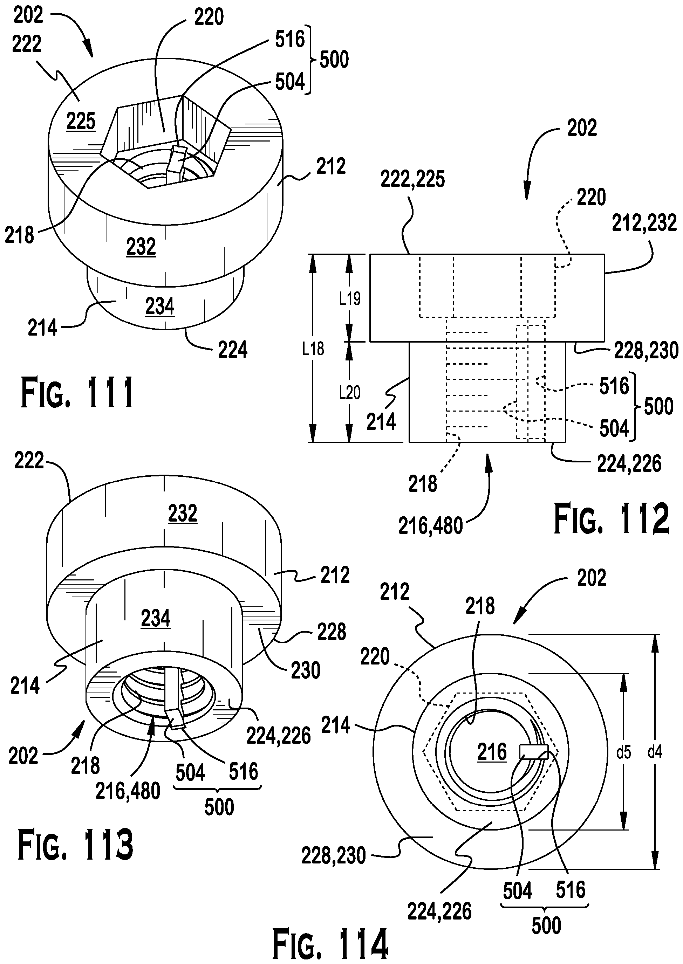

**FIG. 111** is a top perspective view of another exemplary fastener of the fastener apparatus of **FIG. 43**;
**FIG. 112** is a side view of the fastener of **FIG. 111**;
**FIG. 113** is a bottom perspective view of the fastener of **FIG. 111**;
**FIG. 114** is a top view of the fastener of **FIG. 111**;

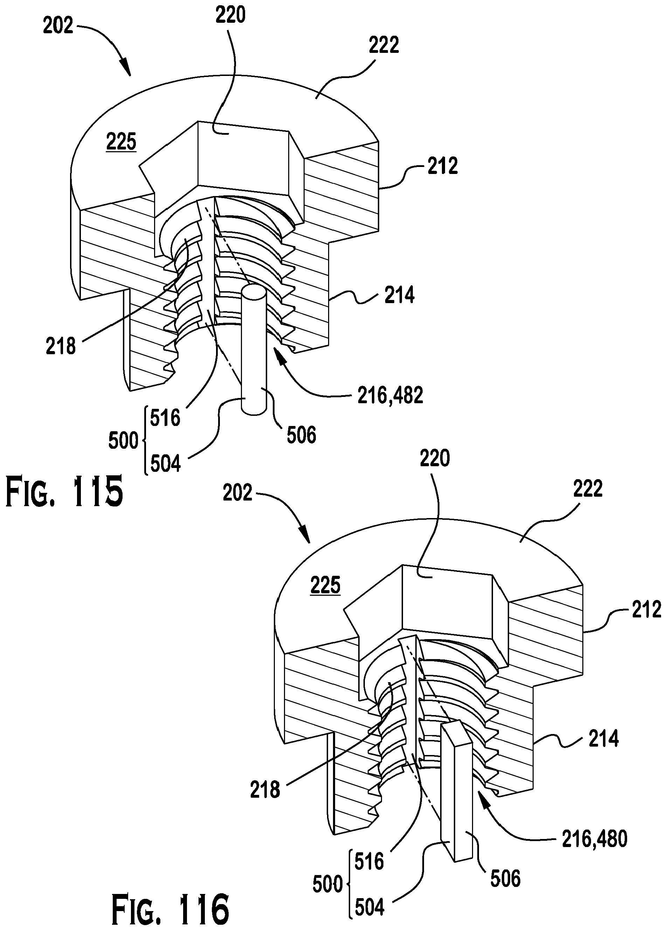

**FIG. 115** is an exploded cross-sectional view of the fastener of **FIG. 111** along line **115-115**;
**FIG. 116** is an exploded cross-sectional view of another embodiment of the fastener of **FIG. 111** along line **115-115**;

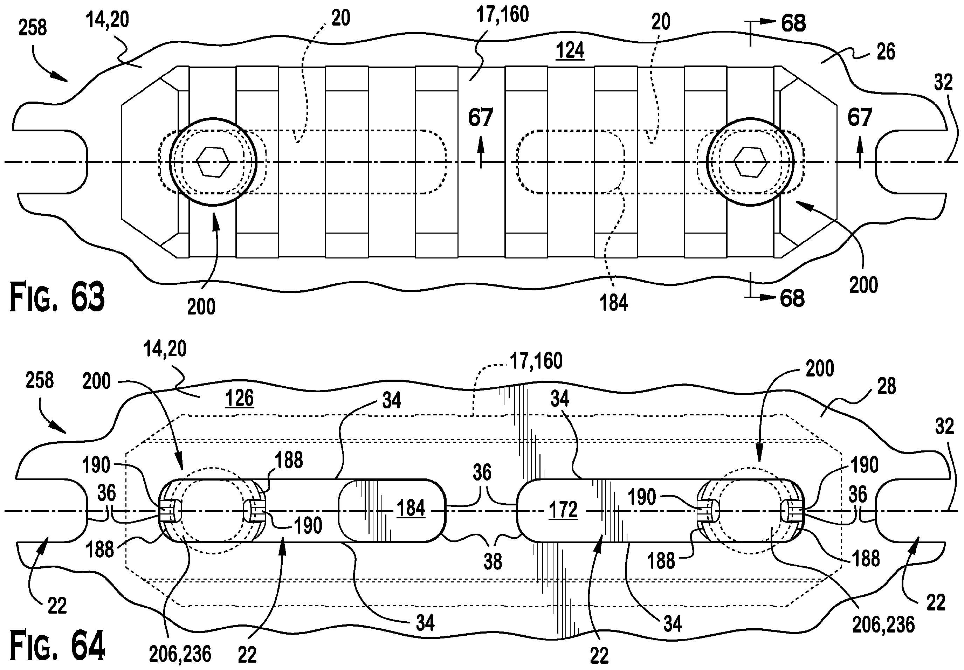

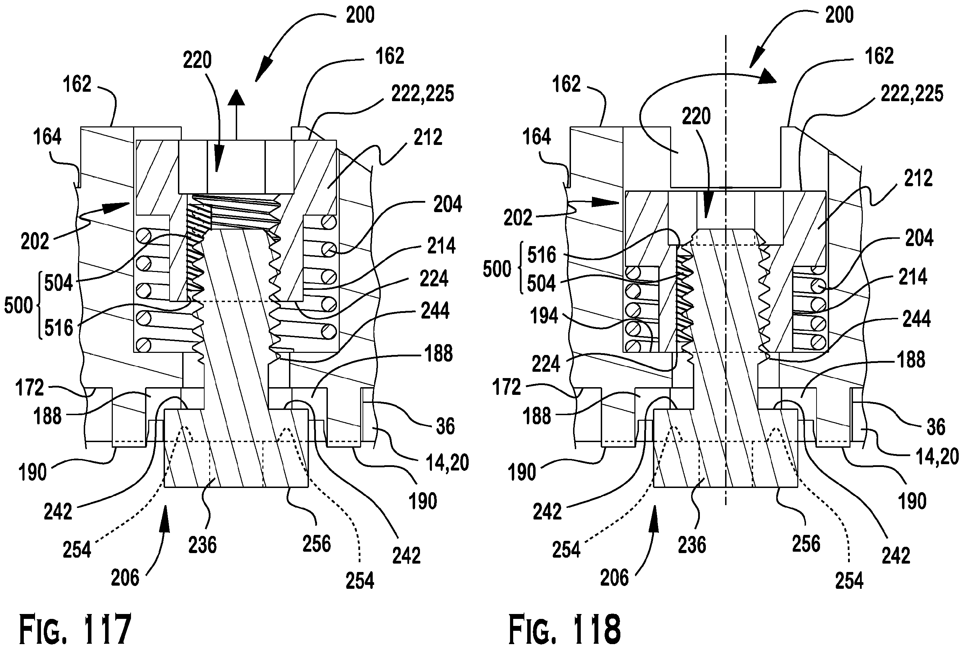

**FIG. 117** is cross-sectional view of another embodiment of the accessory interface system of **FIG. 63** in a latched configuration.
**FIG. 118** is another view of the accessory interface system of **FIG. 117** in a locked configuration.

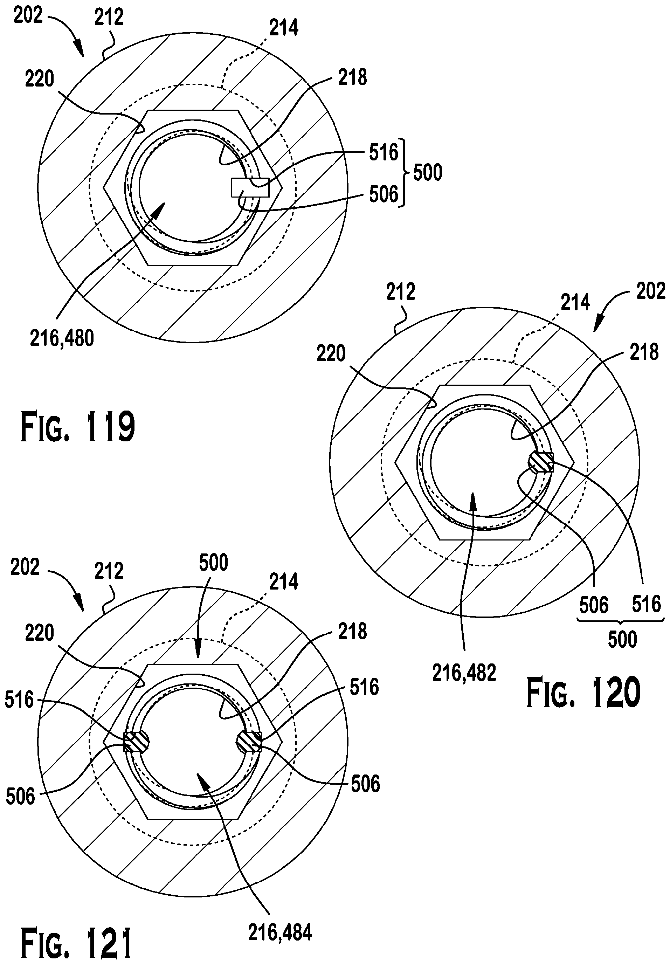

**FIG. 119** is a cross-sectional view of **FIG. 111** along line **119-119**;
**FIG. 120** is a cross-sectional view of another exemplary fastener of **FIG. 111** along line **119-119**;
**FIG. 121** is a cross-sectional view of another exemplary fastener of **FIG. 111** along line **119-119**;

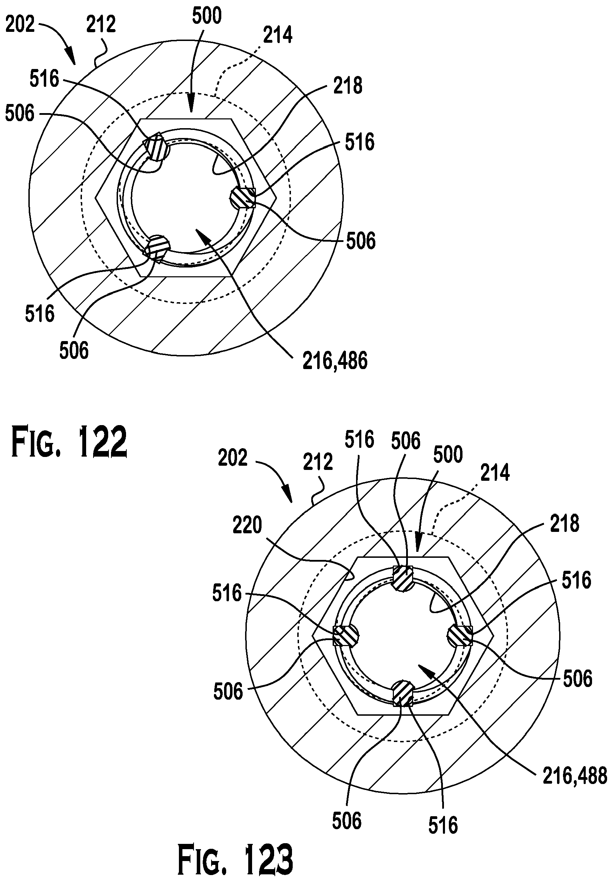

**FIG. 122** is a cross-sectional view of another exemplary fastener of **FIG. 111** along line **119-119**;
**FIG. 123** is a cross-sectional view of yet another exemplary fastener of **FIG. 111** along line **119-119**;

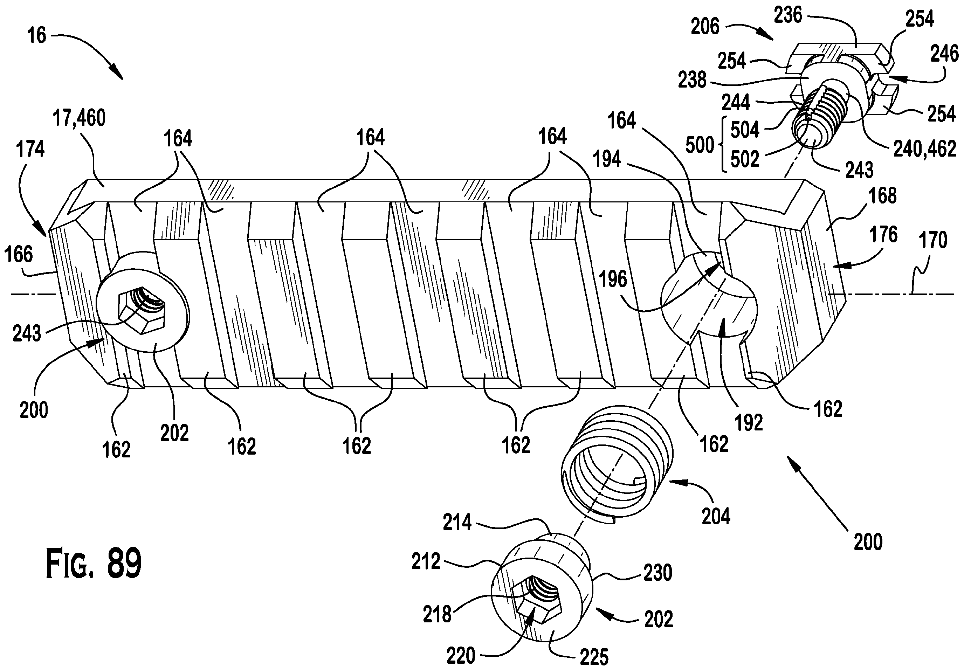

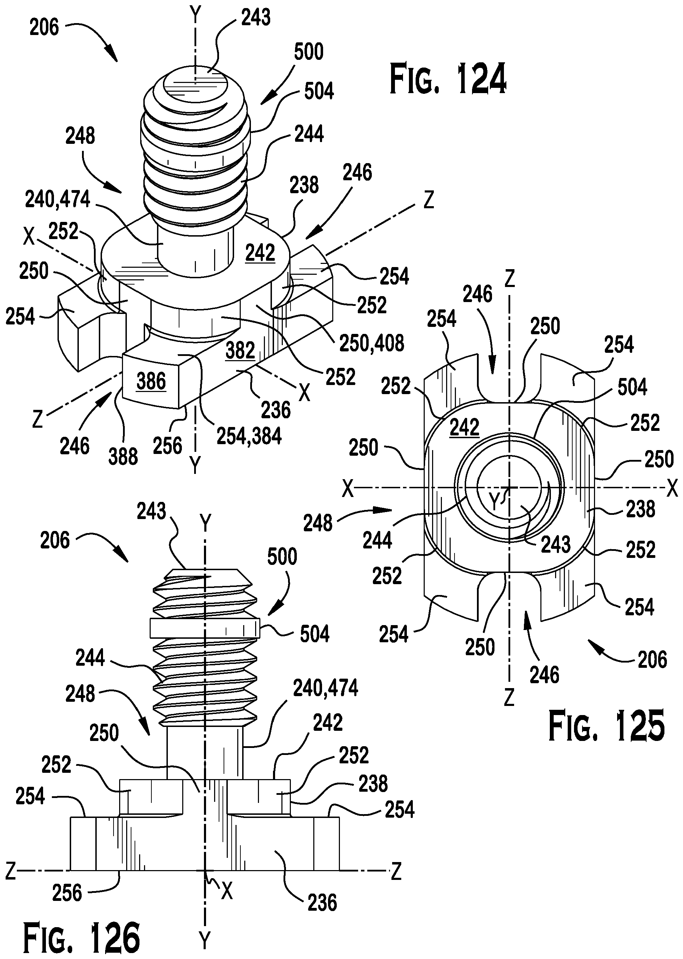

**FIG. 124** is a top perspective view of another exemplary locking bolt of **FIG. 89**;
**FIG. 125** is a top view of the locking bolt of **FIG. 121**;
**FIG. 126** is a side view of the locking nut of **FIG. 121**;

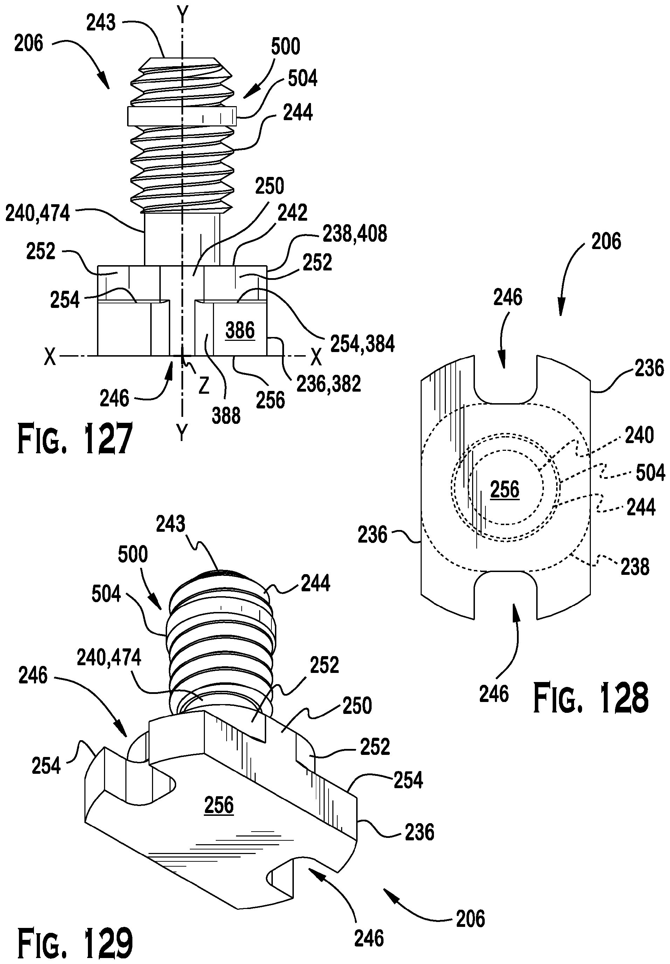

**FIG. 127** is a front view of the locking nut of **FIG. 121**;
**FIG. 128** is a bottom view of the locking nut of **FIG. 121**;
**FIG. 129** is a bottom perspective view of the locking nut of **FIG. 121**;

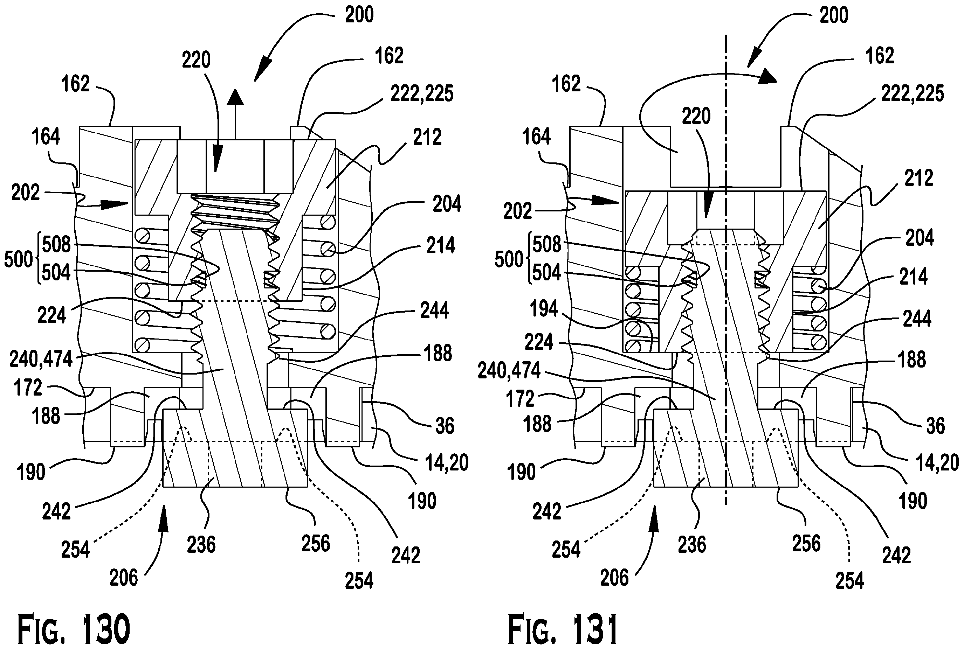

**FIG. 130** is cross-sectional view of another embodiment of the accessory interface system of **FIG. 63** in a latched configuration.
**FIG. 131** is another view of the accessory interface system of **FIG. 130** in a locked configuration.

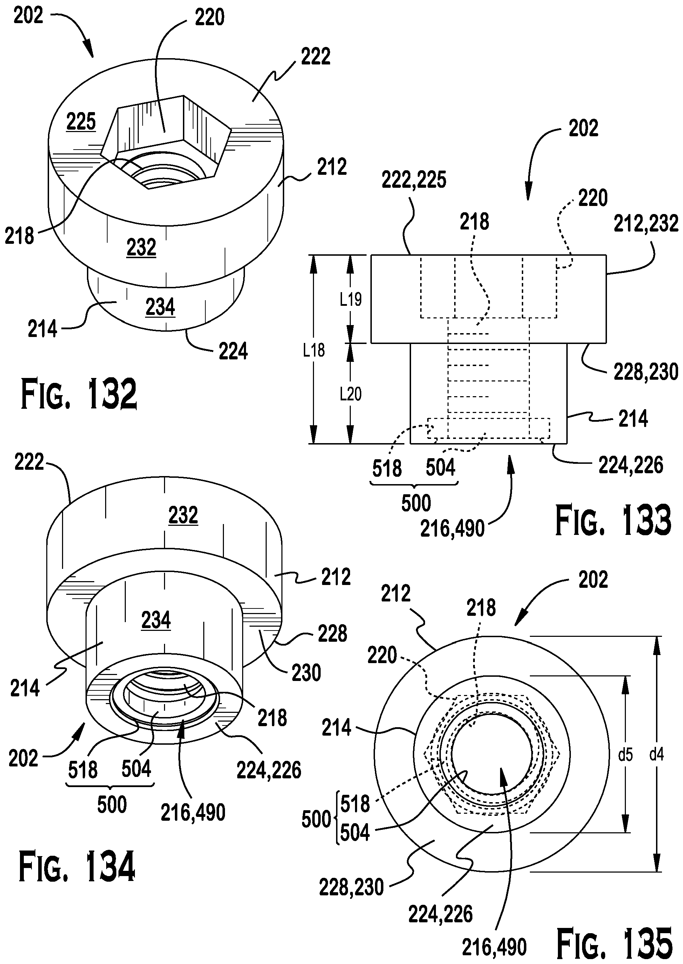

**FIG. 132** is a top perspective view of another exemplary fastener of the fastener apparatus of **FIG. 43**;
**FIG. 133** is a side view of the fastener of **FIG. 132**;
**FIG. 134** is a bottom perspective view of the fastener of **FIG. 132**;
**FIG. 135** is a top view of the fastener of **FIG. 132**;

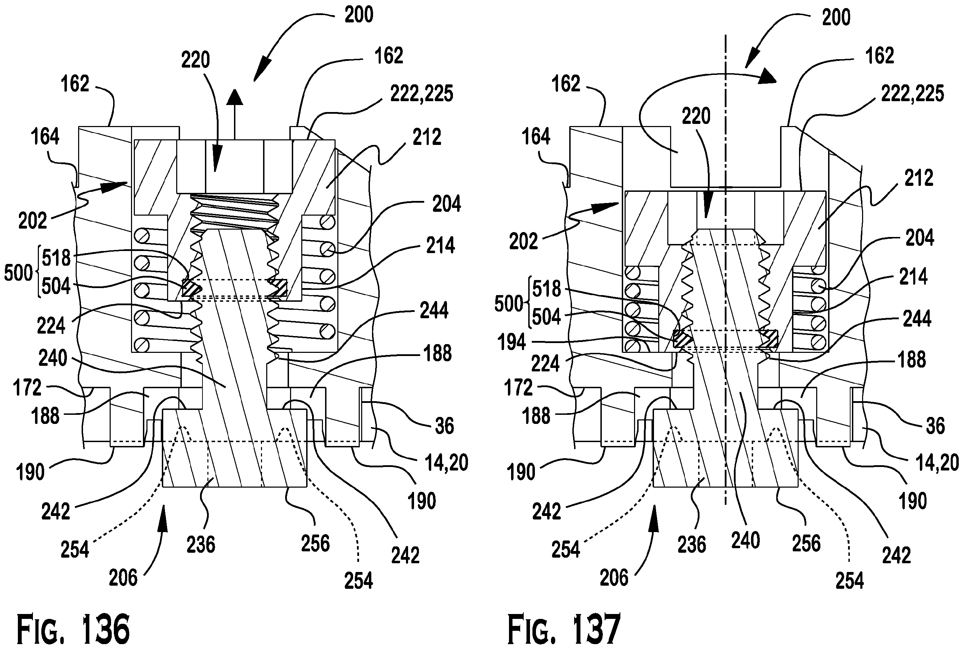

**FIG. 136** is cross-sectional view of another embodiment of the accessory interface system of **FIG. 63** in a latched configuration.
**FIG. 137** is another view of the accessory interface system of **FIG. 136** in a locked configuration.

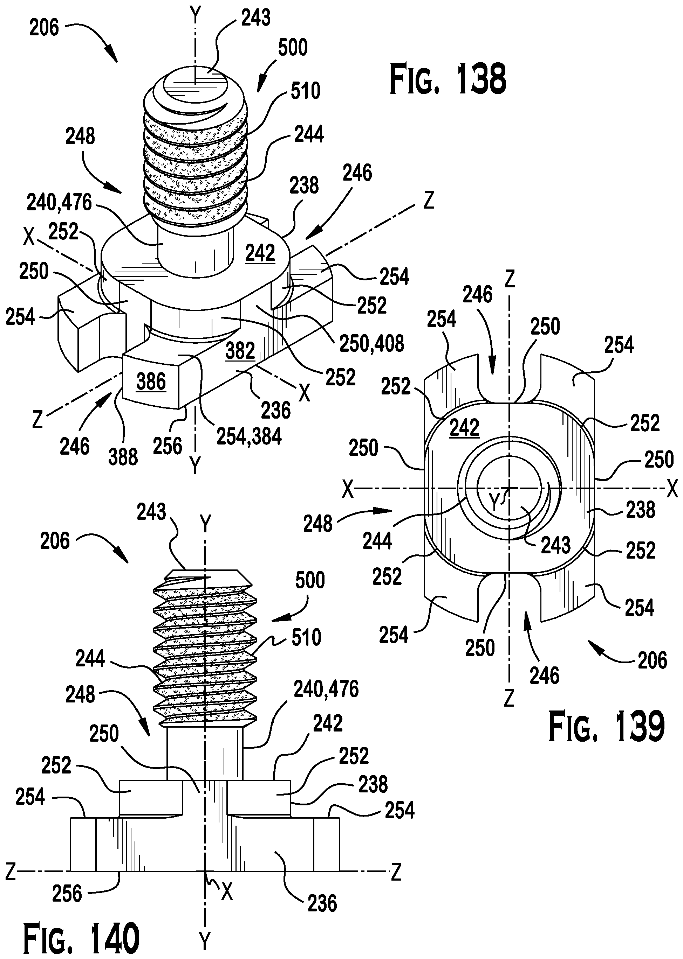

**FIG. 138** is a top perspective view of another exemplary locking bolt of **FIG. 89**;
**FIG. 139** is a top view of the locking bolt of **FIG. 138**;
**FIG. 140** is a side view of the locking nut of **FIG. 138**;

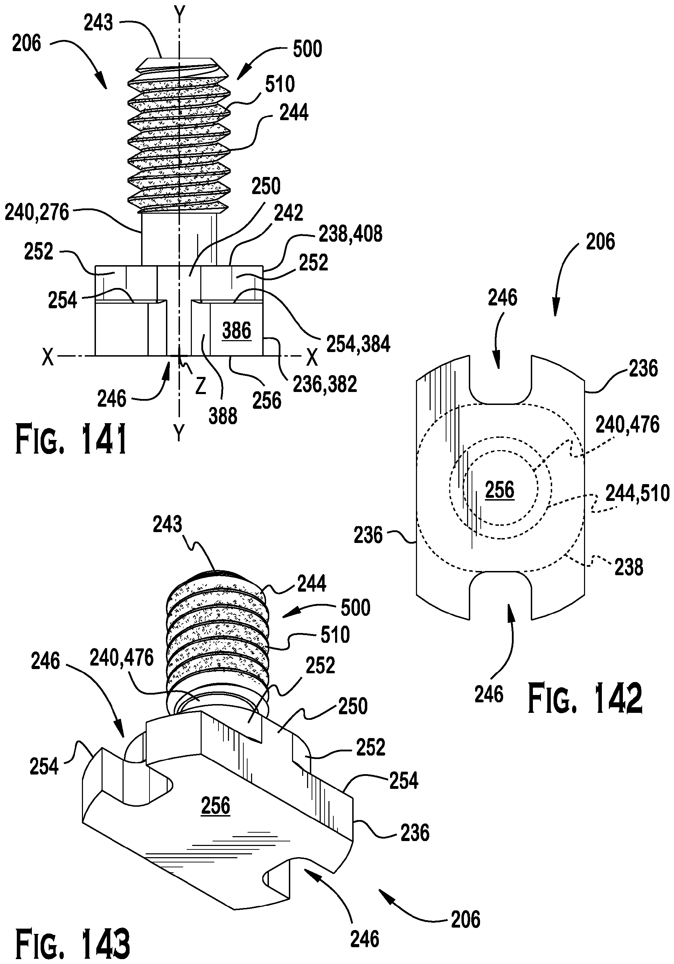

**FIG. 141** is a front view of the locking nut of **FIG. 138**;
**FIG. 142** is a bottom view of the locking nut of **FIG. 138**;
**FIG. 143** is a bottom perspective view of the locking nut of **FIG. 138**;

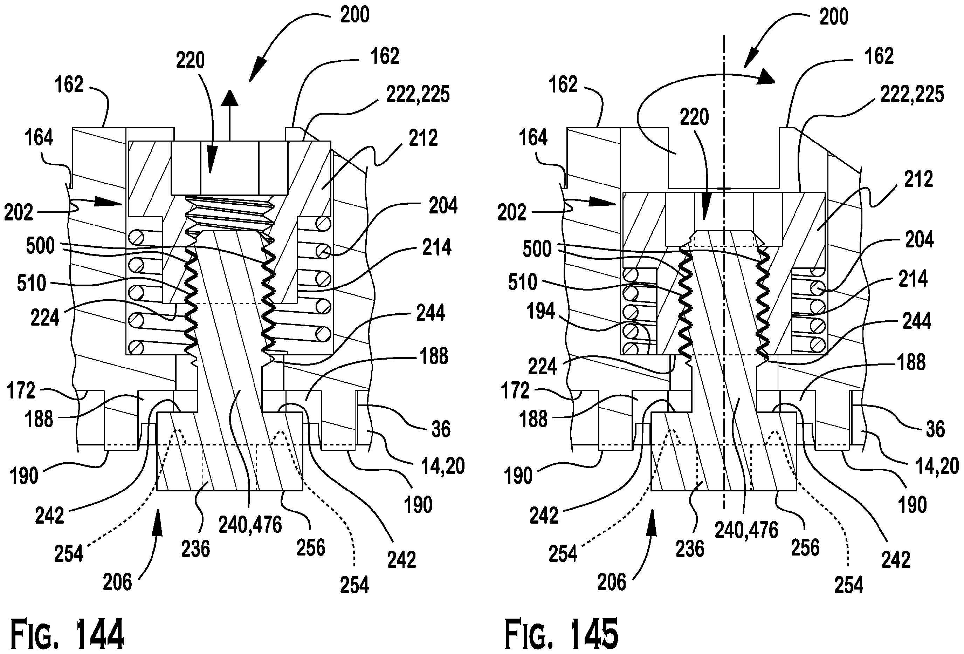

**FIG. 144** is cross-sectional view of another embodiment of the accessory interface system of **FIG. 63** in a latched configuration.
**FIG. 145** is another view of the accessory interface system of **FIG. 144** in a locked configuration.

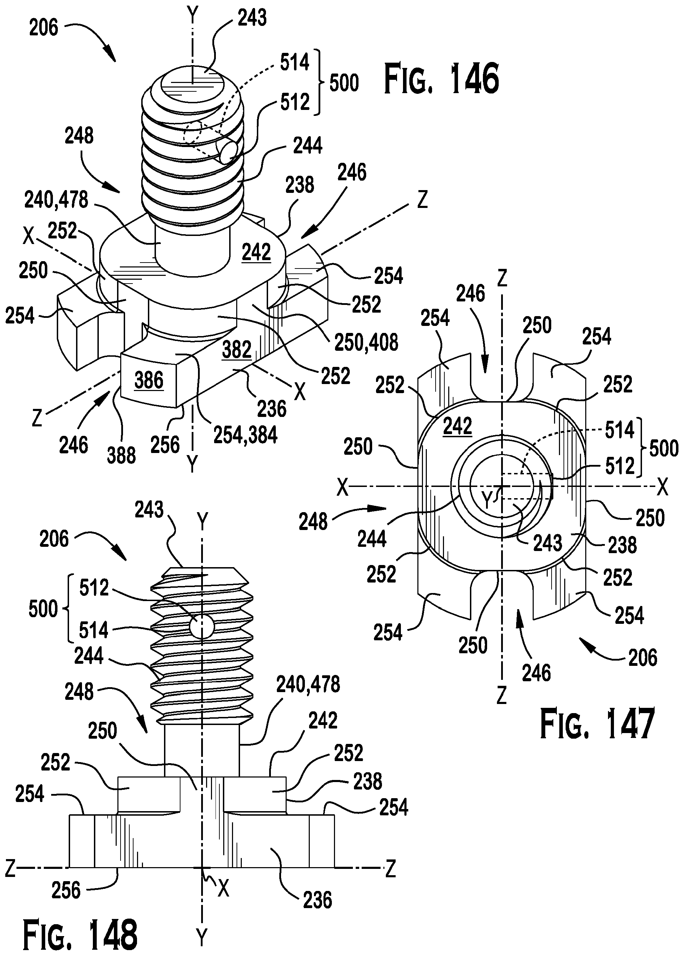

**FIG. 146** is a top perspective view of another exemplary locking bolt of **FIG. 89**;
**FIG. 147** is a top view of the locking bolt of **FIG. 146**;
**FIG. 148** is a side view of the locking nut of **FIG. 146**;

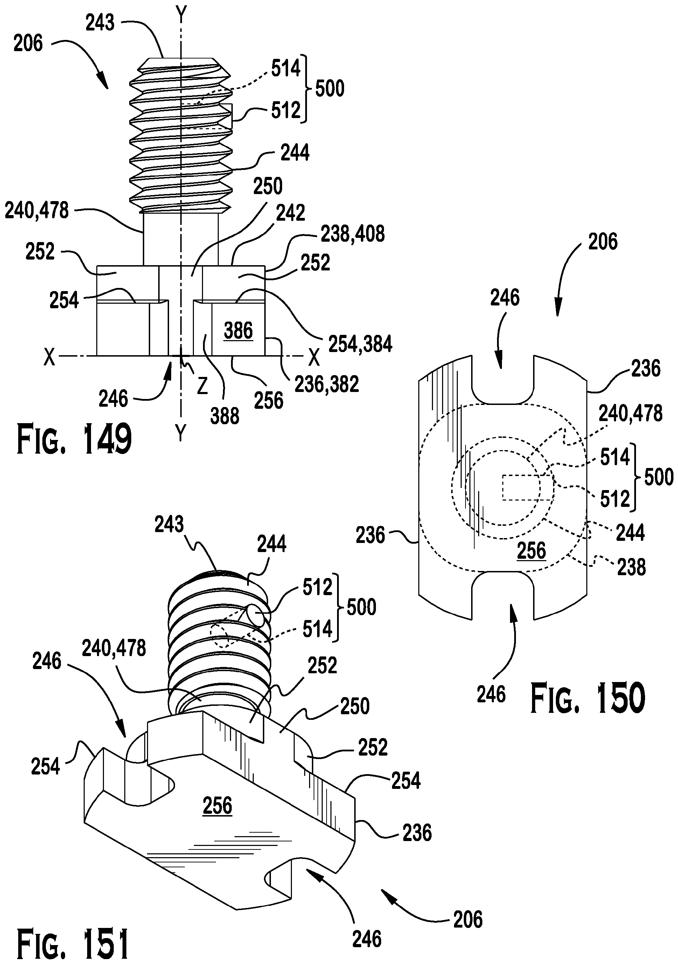

**FIG. 149** is a front view of the locking nut of **FIG. 146**;
**FIG. 150** is a bottom view of the locking nut of **FIG. 146**;
**FIG. 151** is a bottom perspective view of the locking nut of **FIG. 146**;

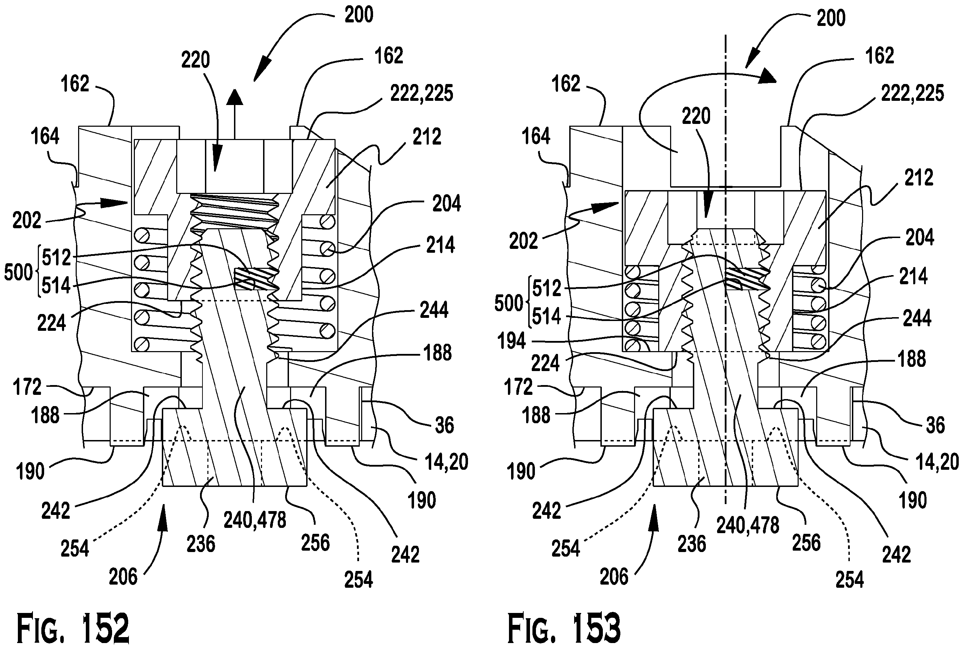

**FIG. 152** is cross-sectional view of another embodiment of the accessory interface system of **FIG. 63** in a latched configuration.
**FIG. 153** is another view of the accessory interface system of **FIG. 15244** in a locked configuration.

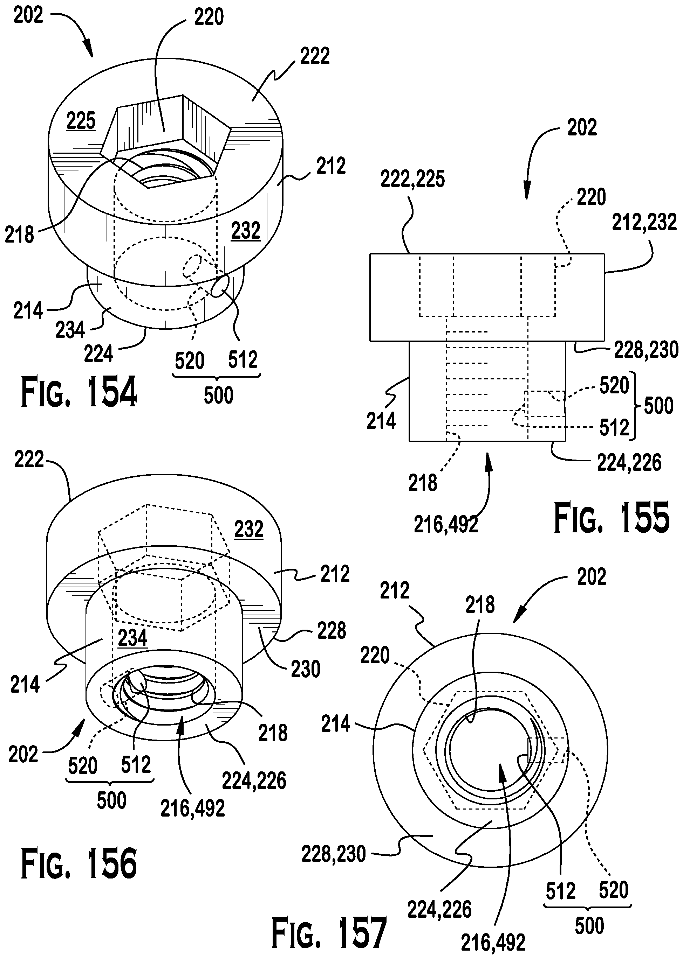

**FIG. 154** is a top perspective view of another exemplary fastener of the fastener apparatus of **FIG. 43**;
**FIG. 155** is a side view of the fastener of **FIG. 154**;
**FIG. 156** is a bottom perspective view of the fastener of **FIG. 154**;
**FIG. 157** is a top view of the fastener of **FIG. 154**;

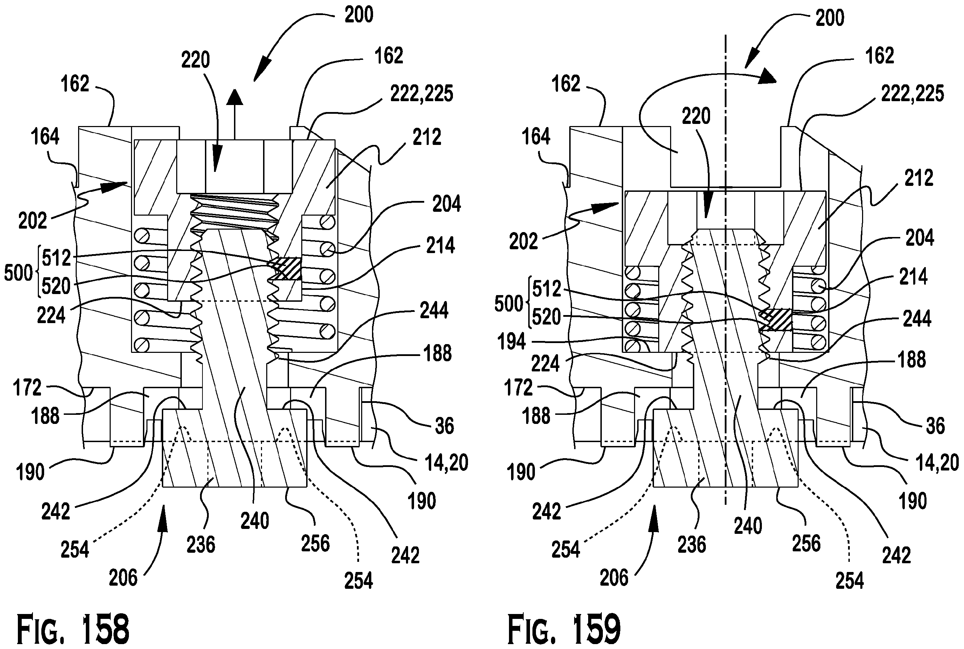

**FIG. 158** is cross-sectional view of another embodiment of the accessory interface system of **FIG. 63** in a latched configuration.
**FIG. 159** is another view of the accessory interface system of **FIG. 158** in a locked configuration.

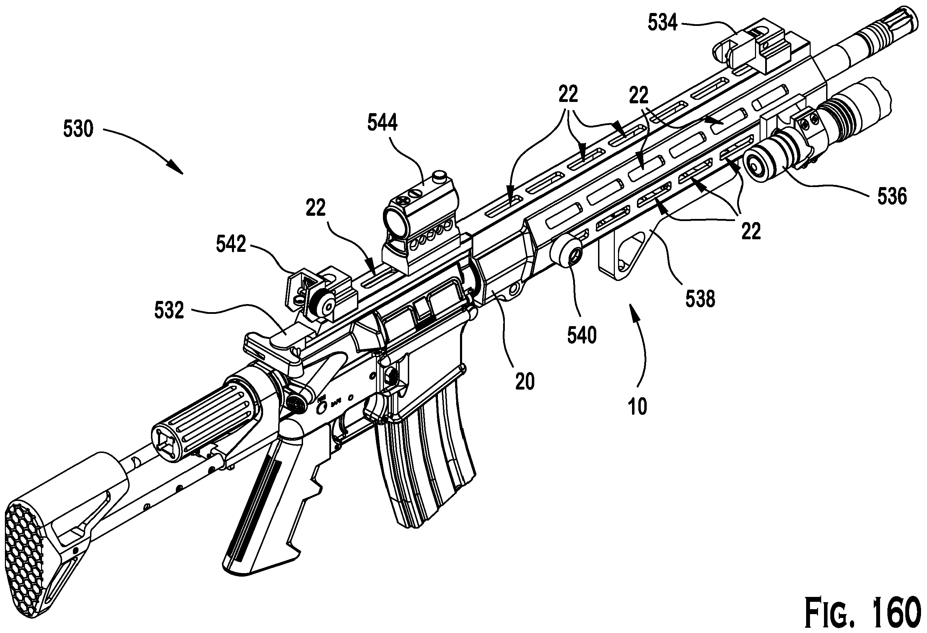

**FIG. 160** is a perspective view of a firearm equipped with another exemplary embodiment of the universal interface system of the present invention;

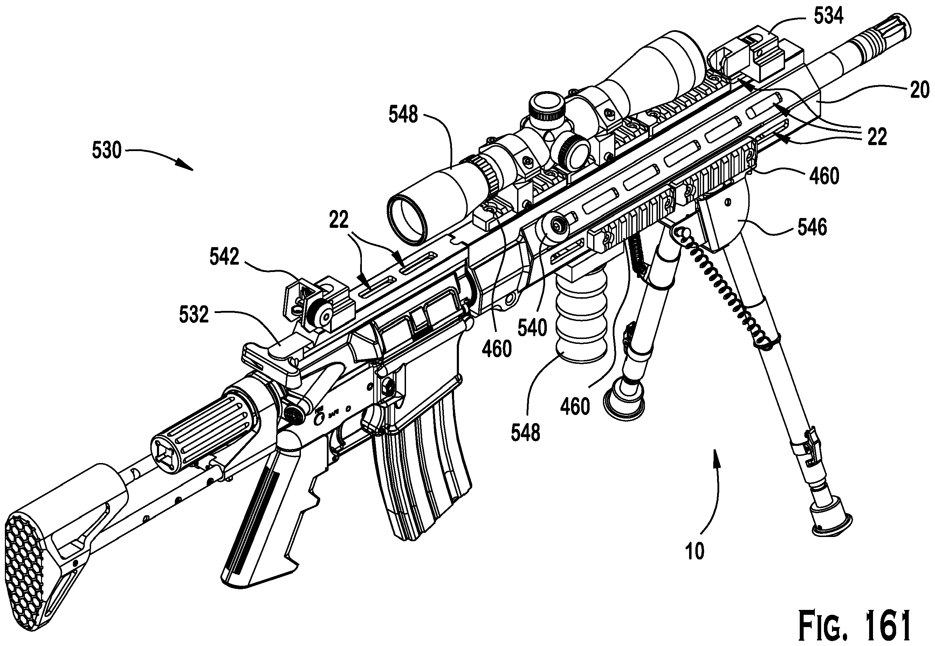

**FIG. 161** is a perspective view of the exemplary front sight of **FIG. 160**;

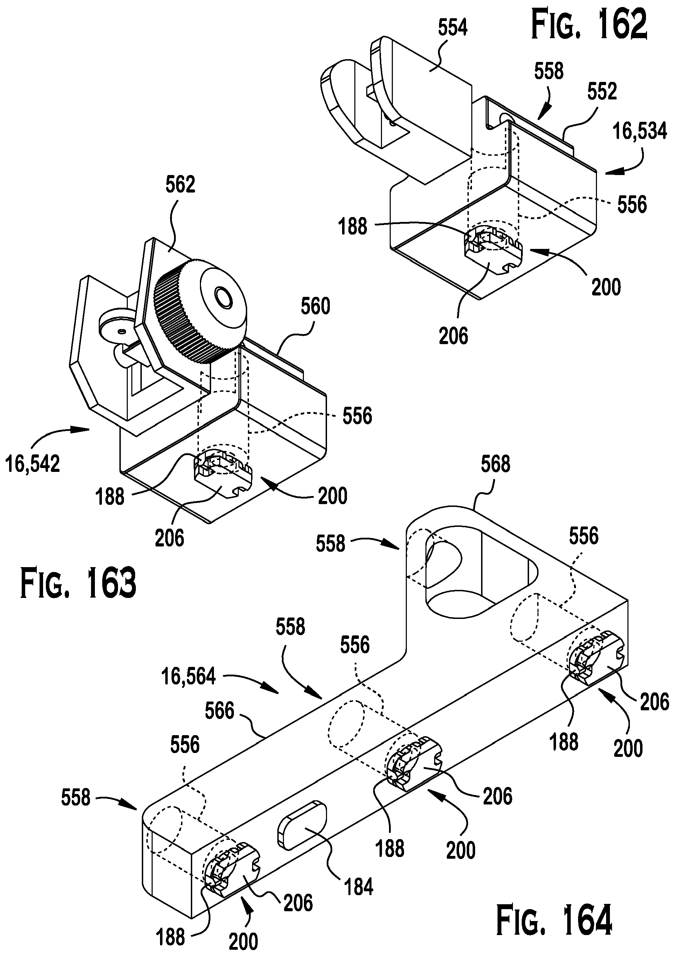

**FIG. 162** is a perspective view of the exemplary rear sight of **FIG. 160**;
**FIG. 163** is a perspective view of the exemplary angled foregrip of **FIG. 160**;
**FIG. 164** is a perspective view of the exemplary tactical flashlight of **FIG. 160**;

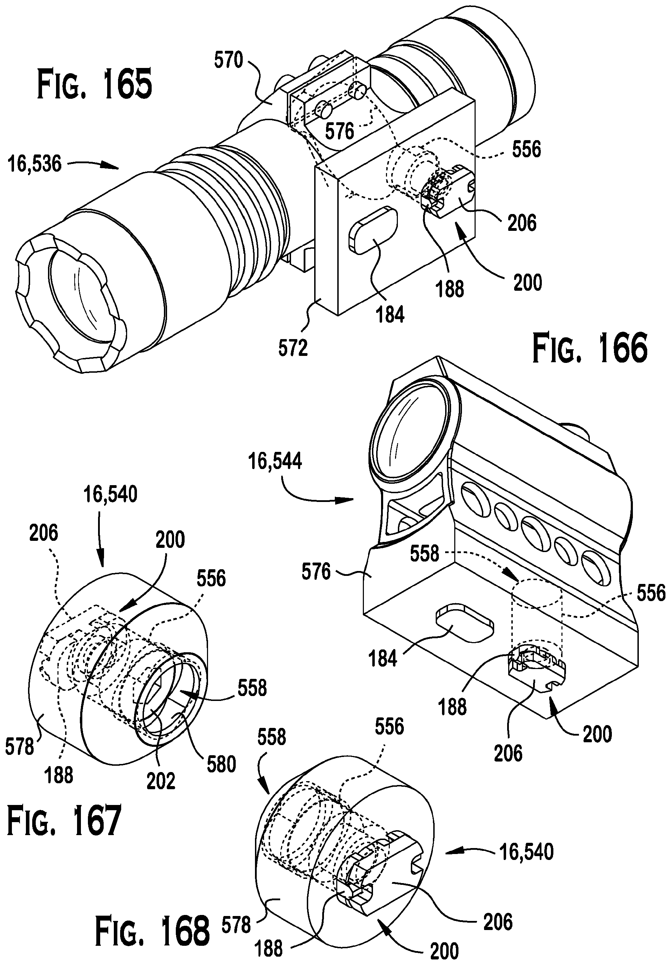

**FIG. 165** is a perspective view of the exemplary optical sight of **FIG. 160**;
**FIG. 166** is a front perspective view of the exemplary quick disconnect mount of **FIG. 160**;
**FIG. 167** is a rear perspective view of the exemplary quick disconnect mount of **FIG. 166**;
**FIG. 168** is a perspective view of the exemplary vertical foregrip of **FIG. 160**;

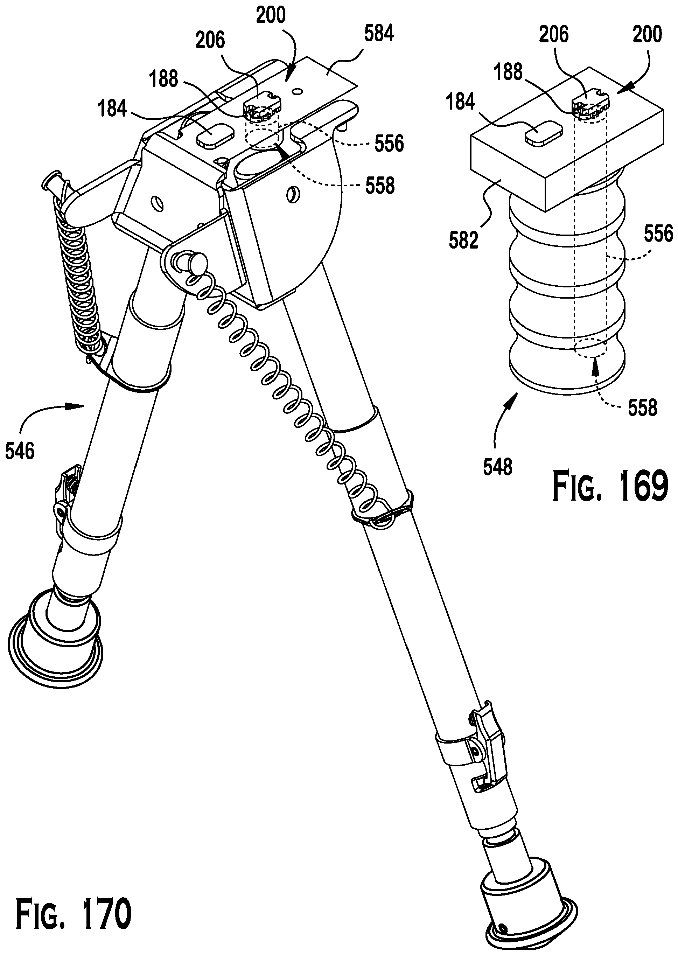

**FIG. 169** is a perspective view of the exemplary bipod of **FIG. 160**;

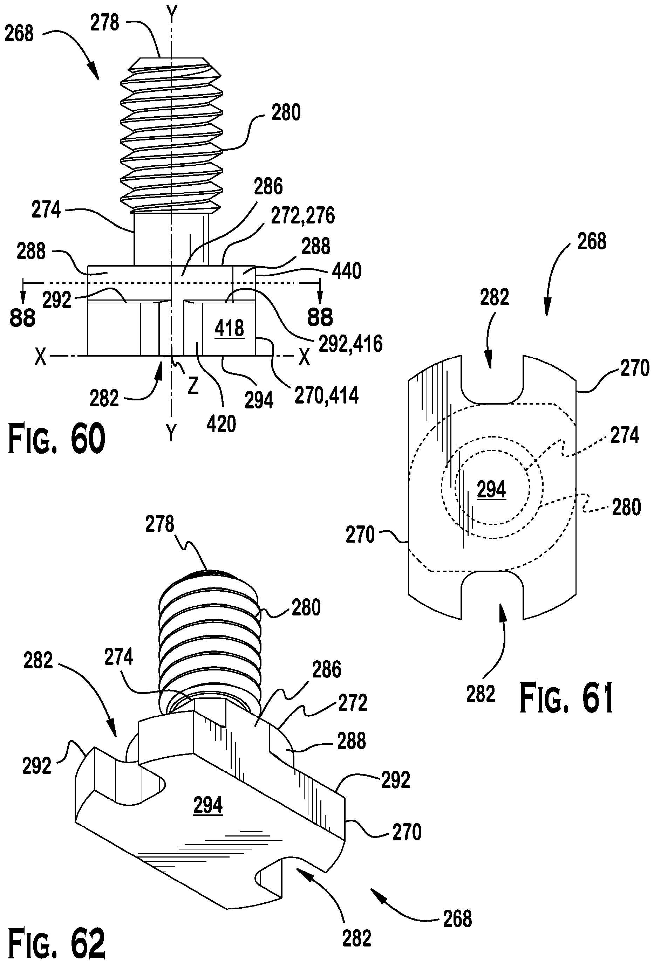

**FIG. 170** is a perspective view of an exemplary grenade launcher for use with the exemplary embodiment of the universal interface system of **FIG. 60**;

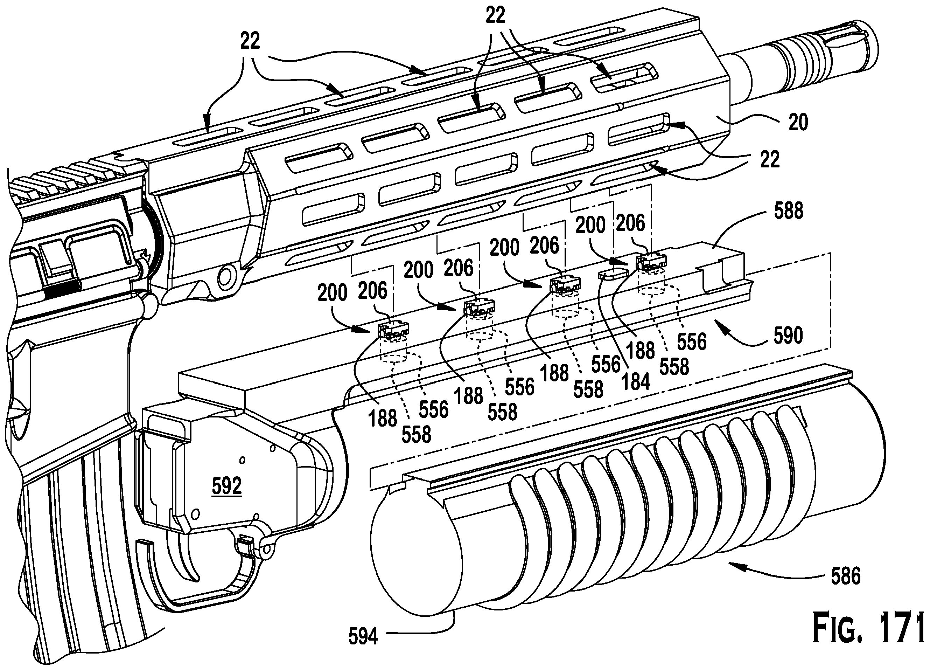

**FIG. 171** is a perspective view of an exemplary optical sight mounted on an exemplary 6-slot accessory rail that secured to the exemplary universal interface system of **FIG. 60**;

### DESCRIPTION

Accessories may be secured to small arms weapons using various mounting methods. Generally, the various mounting methods may include a rail interface system having an integral accessory mounting rail (*e.g*., Rail Interface Systems developed by Knight's Armament Company of Titusville, Florida or by Daniel Defense, Inc. of Black Creek, Georgia) or a universal interface system (*e*.*g*., the KeyMod system developed by VLTOR Weapon Systems of Tucson, Arizona or the M-LOK system developed by Magpul Industries, Corp. of Austin, Texas).

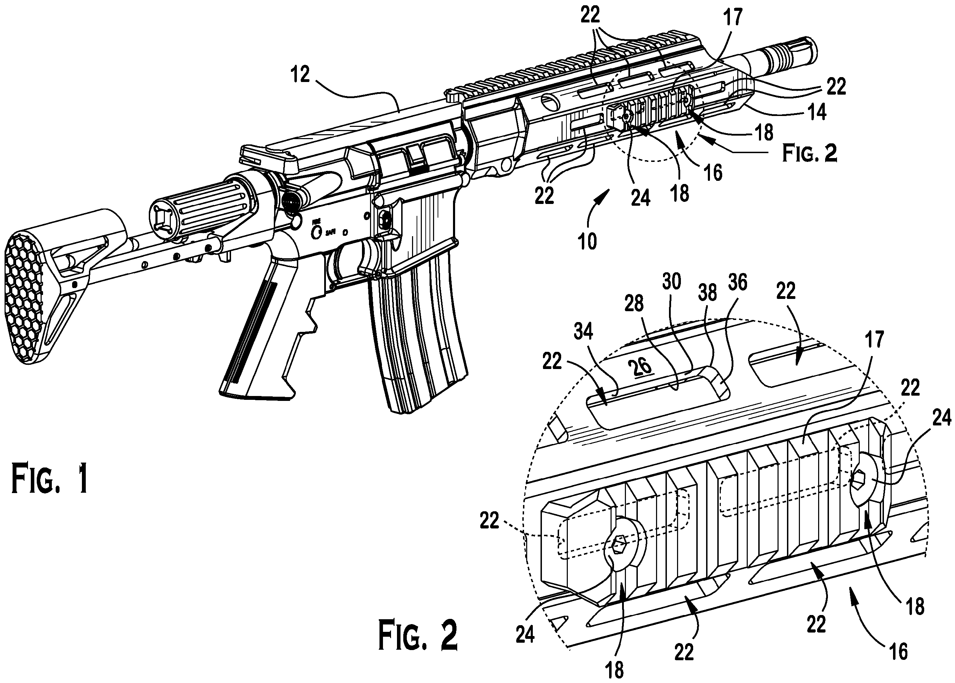

**FIG. 1** presents an illustrative embodiment of a universal interface system **10** in accordance with the present invention. The universal interface system **10** may be used to secure accessories to a firearm **12**, as well as to other small arms weapons or equipment. The universal interface system **10** may include a slotted object **14**, an accessory **16**, and a fastener apparatus **18.** For instance, the object may be a rifle handguard **20** which includes one or more slots **22.** The accessory **16** may be an accessory mounting rail (or accessory rail) **17.** The fastener apparatus **18** may be a spring-loaded fastener which is housed in the accessory **16**, and that cooperates with one or more slots **22** to securely connect the accessory rail **17** to the handguard **20.**

Referring to **FIG. 1** and **FIG. 2**, the one or more slots **22** on the handguard **20** may be substantially the same. Each slot may pass through the handguard **20** and may extend from an exterior surface **26** to an interior surface **28** of the handguard. Each slot **22** may have a shape that is defined by a sidewall **30** which extends from the exterior surface **26** to the interior surface **28** of the handguard. The sidewall **30** may include multiple segments. Referring to **FIGS. 63-66**, each slot **22** may be generally rectangular, have a longitudinal axis **32**, and may include two parallel segments **34** aligned with the longitudinal axis, as well as two parallel segments perpendicular **36** to the longitudinal axis. The corners **38** of each slot may be rounded.

Referring to **FIG. 1**, the accessory rail **17** may be a Picatinny rail (MIL-STD-1913), Weaver rail, NATO Accessory rail (Stanag 4694) or other type of accessory mounting rail. The accessory rail **17** may be configured and dimensioned to connect with two adjacent slots **22** on the handguard **20.** The accessory rail **17** further may be configured and dimensioned to cover the two adjacent slots **22.** Thus, the accessory rail **17** of **FIG. 1** may be identified as a 2-slot accessory rail.

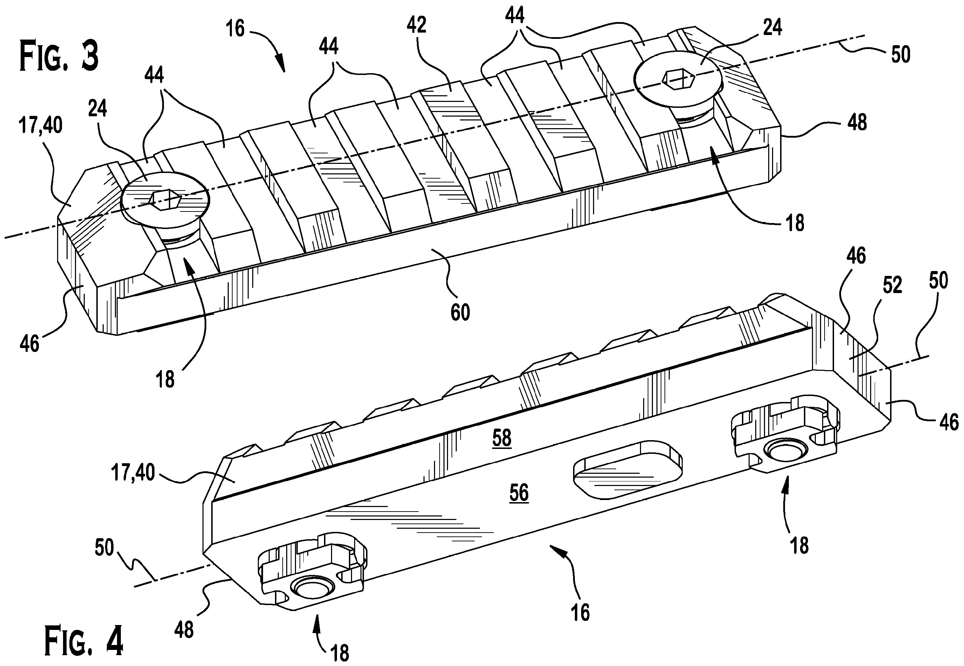

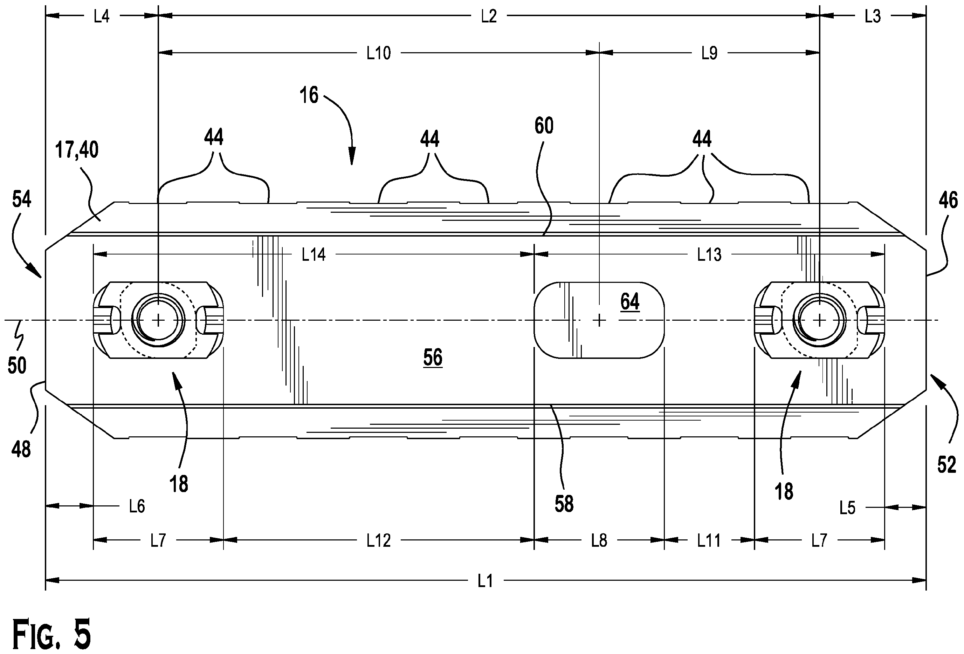

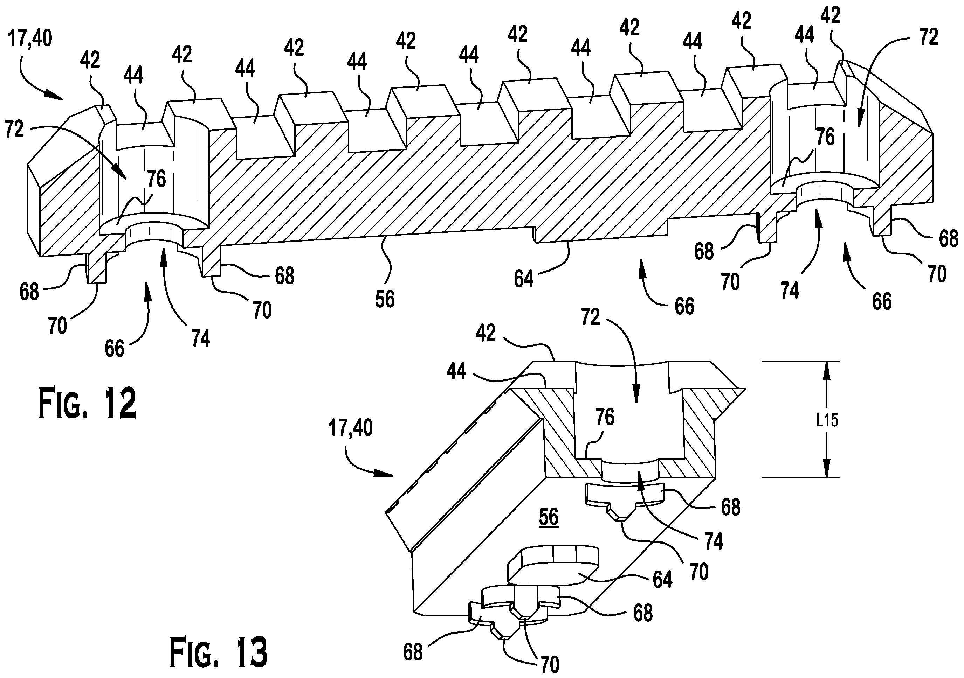

**FIGS. 3-5** and **FIGS. 8-13** depict a first exemplary embodiment of an accessory rail **17**, **40** in accordance with the present invention. Referring to **FIG. 3**, the accessory rail **17**, **40** may include a top surface **42.** The top surface **42** may include plurality of parallel grooves **44.** Each of the parallel groves **44** may have a rectangular cross section (*see e.g*., **FIG. 12**). Although the accessory rail **40** may comply with MIL-STD-191, the rail **17, 40** may conform to other mounting rail standards or form any shape or configuration which may serve a particular use or application, provided that the accessory rail **17**, **40** may be secured to a slotted object in accordance with the present invention. Referring to **FIGS. 3-5**, the accessory rail **17**, **40** may include a distal end **46** and a proximal end **48.** The accessory rail **17**, **40** further may possess a longitudinal axis **50** extending from the distal end **46** to the proximal end **48.** The distal end **46** and the proximal end **48** may be flat surfaces. Referring to **FIG. 5**, the distal end surface **52** and the proximal end surface **54** may be parallel surfaces.

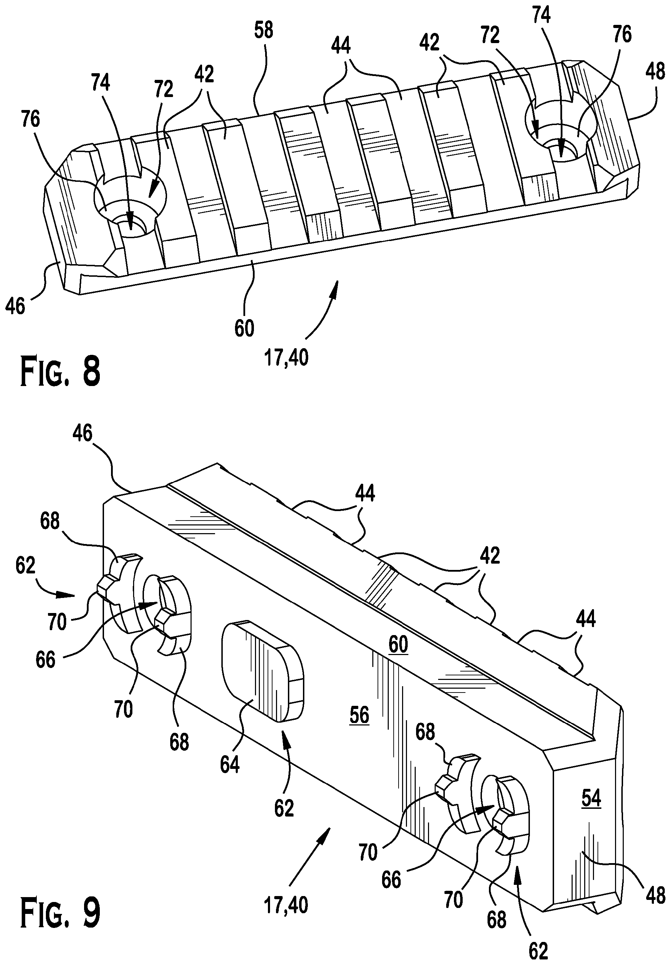

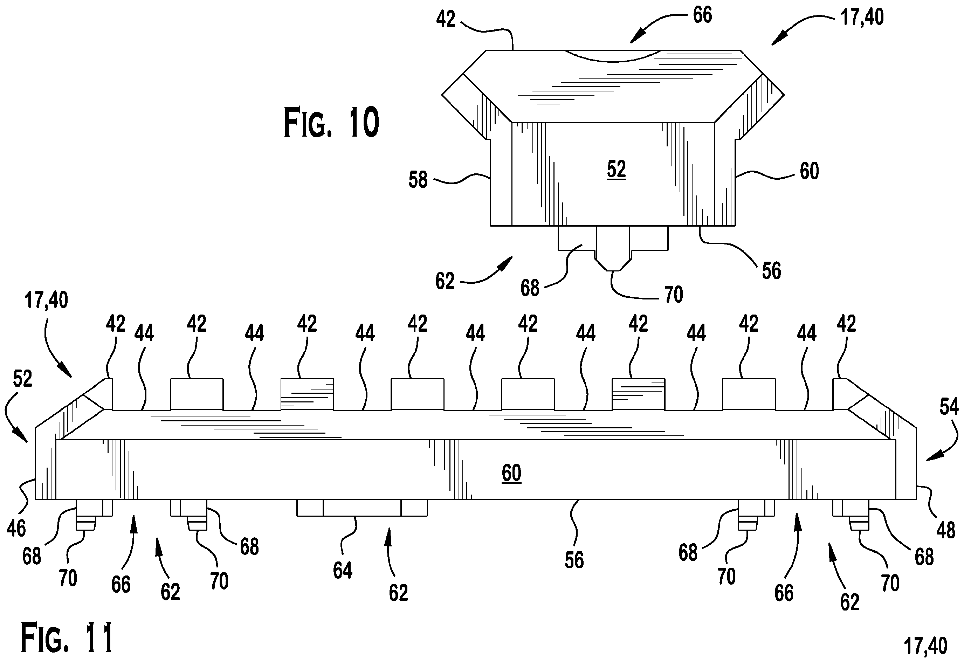

As shown in **FIGS. 4** and **5** and **FIGS. 9-11**, the accessory rail **17**, **40** may include a bottom surface **56.** Referring to **FIG. 10**, the accessory rail **17**, **40** further may include a right side surface **58** and a left side surface **60.** The right side surface **58** and the left side surface **60** may each extend between the top surface **42** and the bottom surface **56.** As shown in **FIGS. 4-5** and **9-10**, although the bottom surface **56** generally may be flat and smooth, the bottom surface **56** may include one or more raised features **62.** For example, the bottom surface **56** may include a projection **64** located between the two fastener receiving holes **66.** The projection **64** may be aligned with the fastener receiving holes **66.** Additionally, each of the faster receiving holes **66** may include one or more guides **68.** Referring to **FIG. 9**, each guide **68** may be a curved wall. Further, the curved wall may be crescent shaped. As shown in **FIGS. 5**, **10** and **11**, the guides **68** may include a tip or crest **70.** The tips **70** may be aligned with the longitudinal axis **50** of the accessory rail **17**, **40.**

**In** **FIG. 5****,** the accessory rail **17** may have a length **L1** measured from the distal end **46** to the proximal end **48.** The fastener receiving holes **66** holes (*see e.g*., **FIG. 8** and **FIG. 9**) may be spaced, on center, a distance **L2.** The center of each fastener hole **66** may be spaced a distance **L3** and **L4** respectively from the nearest end of the accessory rail. The distance **L3** and the distance **L4** may be the same. Two guides **68** may be positioned near each fastener receiving hole **66.** As described further below, two guides may define a seat **86** for the T-nut **82** or more generally for an interior fastener. Each seat **86** may be spaced a distance **L5** and **L6** respectively from the nearest end of the accessory rail. The distance **L5** and the distance **L6** may be the same. Each seat may have a length **L7.**

Moreover, the accessory rail may include a projection **64** (*see e.g*., **FIG. 12** and **FIG. 13**)**.** The projection may have a length **L8.** The length **L8** of the projection may be the same as the length **L7** of each seat **86.** The projection may be spaced, on center, from the nearest fastener receiving hole by a distance **L9.** The projection may also be spaced, on center, from the furthest fastener receiving hole by a distance **L10.** Accordingly, the projection may be spaced a distance **L11** from the nearest seat and a distance **L12** from the other seat.

Generally, the distance **L13** measured from the guide **68** nearest the distal end **46** of the accessory rail **17** to the proximal end of the projection **64** may define dimension identified as a first accessory feature span. Additionally, the distance **L14** measured from the guide **68** nearest the proximal end **48** of the accessory rail **17** to the proximal end of the projection **64** may define a dimension identified as a second accessory feature span. Illustrative approximate values for the dimensions disclosed in **FIG. 5** are presented in **Table 1.** Other feature configurations or dimensions are contemplated, however, and may be implemented in other embodiments.

**Table 1**

| **Exemplary Dimensions for Accessory Rail Features** | |
|---|---|
| Dimension | Length (Inches) |
| **L1** | 3.1450 |
| **L2** | 2.3620 |
| **L3** | 0.3915 |
| **L4** | 0.3915 |
| **L5** | 0.1590 |
| **L6** | 0.1590 |
| **L7** | 0.4650 |
| **L8** | 0.4650 |
| **L9** | 0.7870 |
| **L10** | 1.5750 |
| **L11** | 0.3220 |
| **L12** | 1.1100 |
| **L13** | 1.2520 |
| **L14** | 1.5750 |

Referring to **FIGS. 3** and **6****-9,** the accessory rail **17**, **40** may include a fastener receiving hole **66** adjacent the distal end **52.** Also, the accessory rail **17**, **40** may include a fastener receiving hole **66** adjacent to the proximal end **54.** The fastener receiving holes **66** may be disposed along the longitudinal axis **50.** Referring to **FIG. 12** and **13**, the fastener receiving holes **66** may extend from the top surface **42** to the bottom surface **56.** Each fastener receiving hole **66** may include a counterbore. For example, the fastener receiving hole **66** may include a larger diameter bore **72** extending from the top surface **42** toward the bottom surface **56.** The larger diameter bore **72** may include an end wall **76** which is parallel to the top surface. The end wall **72** may be parallel to the bottom surface **56.** A smaller diameter bore **74** may extend from the end wall **72** to the bottom surface **56** of the accessory rail **17**, **40.**

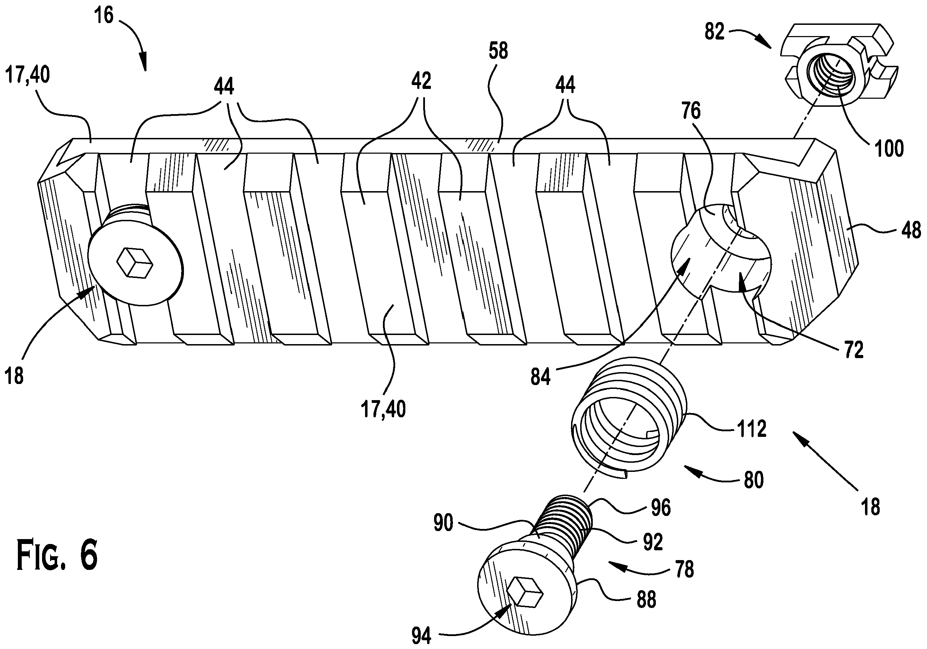

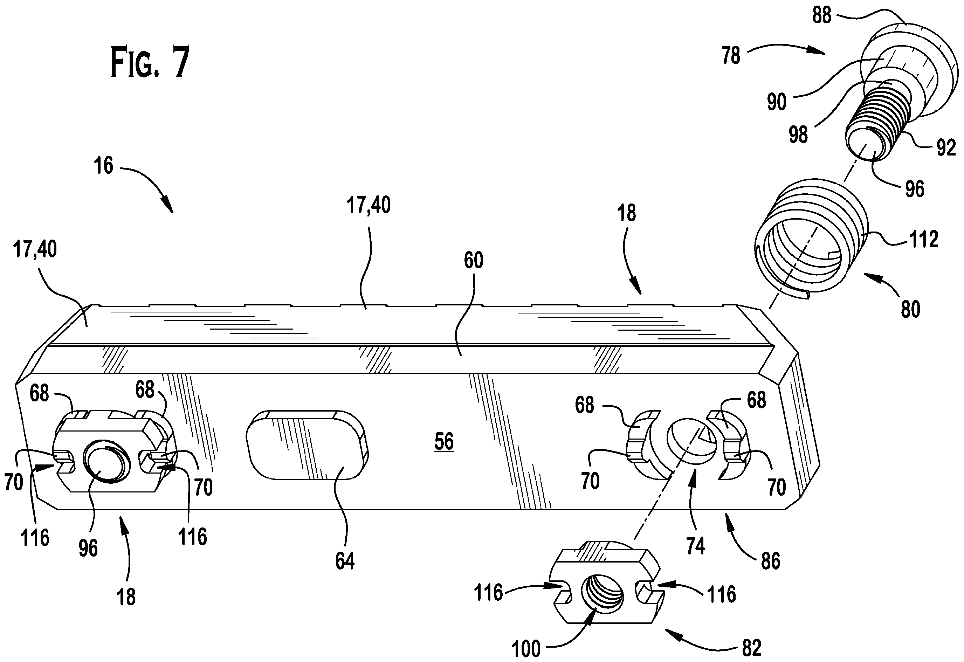

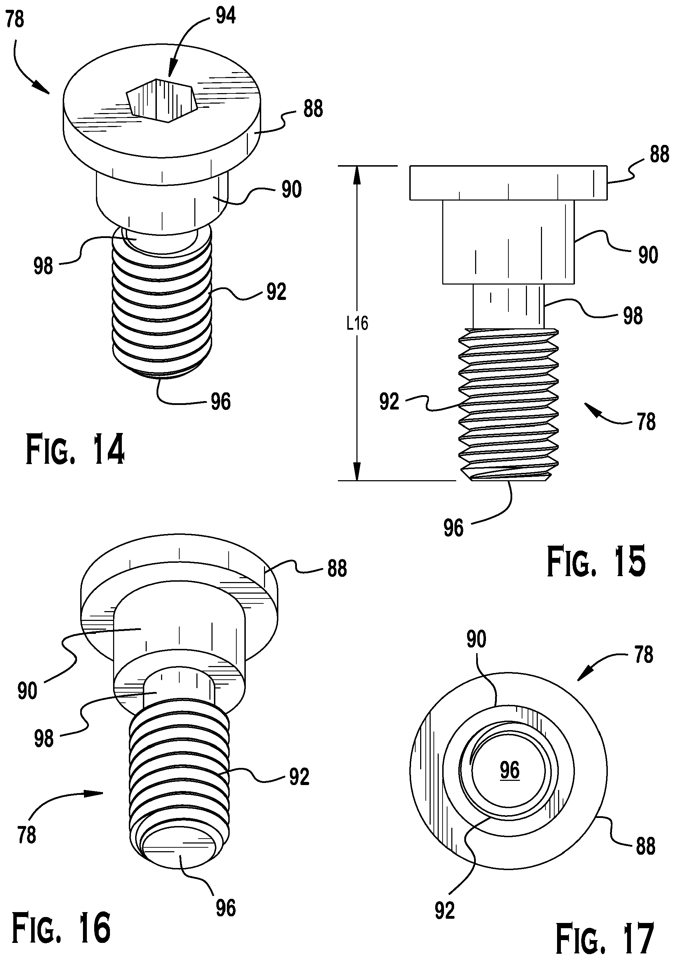

Referring to **FIGS. 6** and **7**, one embodiment of a fastener apparatus **18** in accordance with the present invention may include a fastener (e.g., a bolt or screw) **78**, a resilient member (*e*.*g*., a coil spring) **80**, and a T-nut **82.** Referring to **FIG. 12** and **13**, the counterbore **72, 74** and guides **68** next to the smaller diameter bore **74** on the bottom surface **56** may provide a housing **84** (*see e.g*., **FIG. 6**) and a seat **86** (*see e.g*., **FIG. 7**), respectively for a fastener apparatus **18** in accordance with the present invention. For instance, as shown in **FIGS. 14-17**, the fastener **78** may include a head **88**, a spring guide **90**, and a threaded shaft **92.** Referring to **FIGS. 6** and **14**, the fastener head **88** may further include a drive slot **94.** For example, the drive slot **94** may be a hex socket. Although the disclosed fastener **78** has a hex socket, any suitable drive socket may be used provided it allows the corresponding driver to turn the fastener head **88** when the fastener head is within the recessed rectangular groove **44** of the accessory rail **17.** The fastener **78** may have a length **L16** (*see e.g*., **FIG. 15**) greater than the length **L15** (*see e.g*., **FIG. 13**) of the fastener receiving hole **66.** For example, dimension **L16** may be approximately 0.600 inches and dimension **L15** may be approximately 0.426 inches. The screw threads **92** may extend from the distal end **96** of the fastener **78** along the shaft **98** toward the spring guide **90.** The length of screw threads **92** on the shaft **98** may be sufficient to provide a strong clamping force on different objects **14** having various thickness. The screw threads **92** may be configured and dimensioned to mate with a threaded bore **100** of the T-nut **82.**

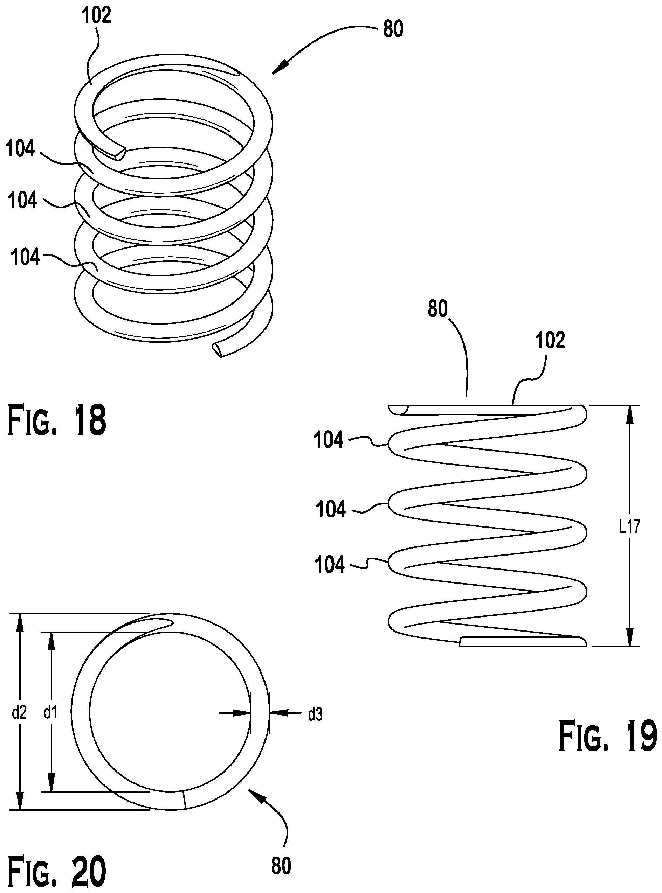

Referring to **FIGS. 18** and **19**, the resilient member **80** may be a coil spring **102**, and the coil spring may include two or more active coils **104.** For instance, the coil spring **102** may have three active coils **104.** The coil spring **102** may be a compression spring. Generally, the coil spring may have a free length **L17** and working length suitable for operation inside the larger diameter bore **74.** For example, the dimension **L17** may be approximately 0.460 inches. Referring to **FIG. 20**, the coil may include an outer diameter, **d₁**, which is less than the diameter of the fastener head **88** and an inner diameter **d**₂ greater than the diameter of the spring guide **90.** Further, the wire may be round wire having diameter **d**₃. For example, the dimension **d₁** may be approximately 0.305 inches, the dimension **d**₂ may be approximately 0.375 inches, and the dimension **d**₃ may be approximately 0.035 inches. The resilient member **80** may be designed for corrosion resistance and repeated and reliable operation of the fastener apparatus. The coil spring **80** may not fully compress during use. The spring force at its maximum working length may be sufficient to position and hold the fastener **78** and T-nut **82** in a retracted configuration, as shown in **FIGS. 4** and **5****.** Generally, the wire may be spring wire, but music wire, chrome silicon, chrome vanadium, 302 stainless steel, 316 stainless steel, other alloys, or materials may be used for a particular application or environmental conditions.

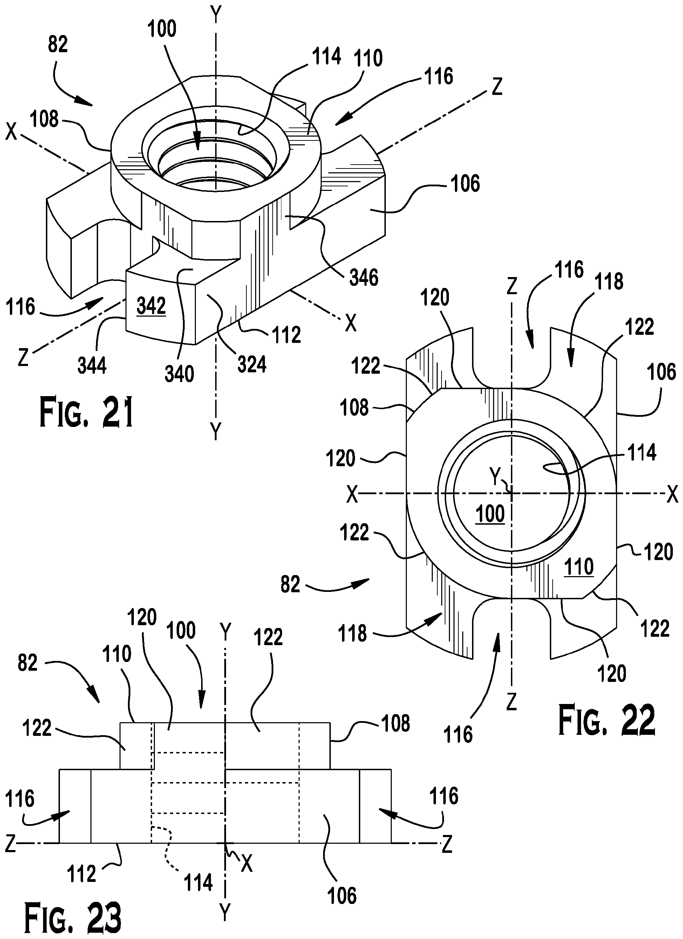

**FIGS. 21-26** show an exemplary embodiment of a T-nut **82** in accordance with the present invention. The T-nut is shown with a three dimensional Cartesian coordinate system. In this embodiment, the T-nut **82** may include an elongated base **106** and a cylindrical head **108.** The elongated base may have a longitudinal axis along the z-axis. The term cylindrical head generally refers herein to a non-circular region. More broadly, however, the cylindrical head **108** may be a shoulder of the fastener. The cylindrical head **108** may be centrally positioned on the elongated base **106.** A bore **100** may extend from the top **110** of the cylindrical head **108** to the bottom **112** of the elongated base. The bottom **112** of the elongated base may lie in the x-z plane, and the bore **100** may have a central axis along the y-axis. The bore **100** may include screw threads **114** which are configured and dimensioned to mate with screw threads **92** on the fastener **78** (*see e.g*., **FIG. 6**)**.** Referring to **FIG. 22**, each end of the elongated base **106** may include a notch **116.** Each notch **116** may be aligned with the center of the bore **100.** Also, the cylindrical head **108** of the T-nut **82** may possess a cam profile **118.** The cam profile **118** may include one or more straight sidewall segments **120** and one or more curved sidewall segments **122.** Except for the notches **116**, the T-nut **82** in other embodiments may be substantially the same as nuts disclosed in U.S. Patent No. 9,239,209 to Mayberry et al, which is incorporated in its entirety by reference herein.

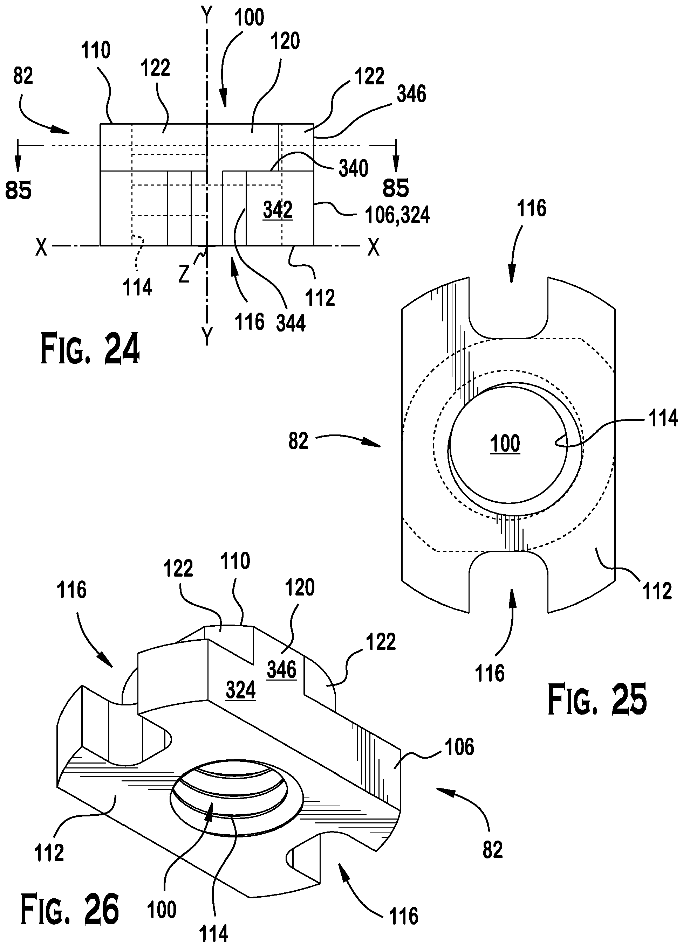

Referring to **FIG. 21**, the elongated base **106** may include a bottom or lower surface **112.** Further, the elongated base may include a first side **324** near the lower surface **112**, a second side **340** near the first side **324**, and a third side **342** near the first side **324** and the second side **340.** Referring to **FIG. 21** and **FIG. 24**, the elongated base may include a notch **116.** The notch **116** may include a first interior sidewall **344** which extends from the second side **340** to the lower surface **112** of the elongated base.

The T-nut may further include a shoulder **108** next to the elongated base **106.** The shoulder **108** may have a longitudinal axis along the y-axis. The shoulder **108** may include a first sidewall-segment **346** near the first side **324** of the elongated base **106.** The shoulder **108** further may include an end surface **110.** A bore **100** may extend from the end surface **110** to the lower surface **112.** The bore **100** may include a screw thread **114** for receiving a mating fastener.

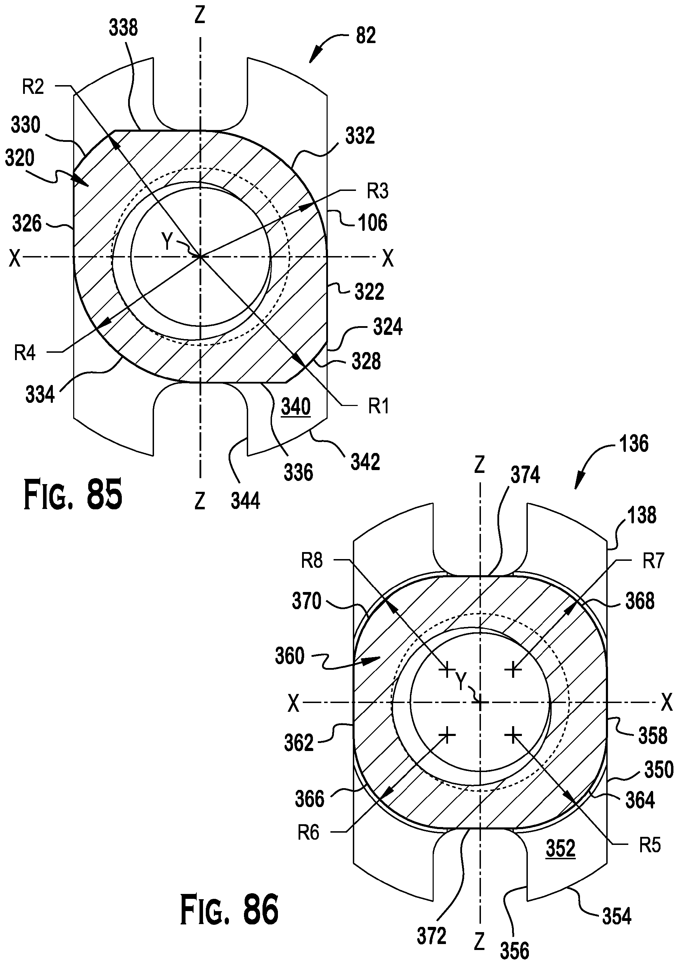

Referring to **FIG. 85**, the T-nut **82** may include a cross-sectional profile **320** normal to the y-axis. The cross-sectional profile **320** may include a first straight wall segment **322** next to the first side **324** of the elongated base **106.** The cross-sectional profile **320** may include a second straight wall segment **326** spaced from the first straight wall segment **322.** A first curved wall segment **328** may be disposed between the first straight wall segment **322** and the second straight wall segment **326.**

A second curved wall segment **330** may be disposed between the first straight wall segment **322** and the second straight wall segment **326.** The first curved wall segment **328** may possess a first radius of curvature **R1** and the second curved wall segment **330** may possess a second radius of curvature **R2.** The first radius of curvature **R1** may be substantially equal to the second radius of curvature **R2.**

The cross-sectional profile **320** may further include a third curved wall segment **332** abutting the first straight wall segment **322**, as well as a fourth curved wall segment spaced **334** from the first straight wall segment **322.** The third curved wall segment **332** may possess a third radius of curvature **R3** and the fourth curved wall segment **334** may possess a fourth radius of curvature **R4.** The third radius of curvature **R3** may be substantially equal to the fourth radius of curvature **R4.** And, the first radius of curvature **R1** may be substantially unequal to the third radius of curvature **R3.** For example, the third radius of curvature **R3** may be less than the first radius of curvature **R1**. Illustrative approximate values for the dimensions disclosed in **FIG. 85** are presented in in **Table 2.** Other feature configurations or dimensions are contemplated, however, and may be implemented in other embodiments.

**Table 2**

| **Exemplary Shoulder Dimensions for First Interior Fastener** | |
|---|---|
| Dimension | Length (Inches) |
| **R1** | 0.163 |
| **R2** | 0.163 |
| **R3** | 0.135 |
| **R4** | 0.135 |

The cross-sectional profile **320** may further include a third straight wall segment **336** abutting the first curved wall segment **328**, as well as a fourth straight wall segment **338** abutting the third curved wall segment **332.** The third straight wall segment **336** may abut the fourth curved wall segment **334.** Additionally, the fourth straight wall segment **338** may abut the second curved wall segment **330.**

Referring to **FIGS. 6** and **7**, the coil spring **112** may be positioned over the threaded shaft **92** and spring guide **90** of the fastener. The fastener **78** and coil spring **112** assembly then may be inserted (threaded shaft end first) into the larger diameter bore **72.** The fastener head **88** may be depressed toward the accessory rail **17**, **40** until the distal end **96** of the fastener **78** extends from the smaller diameter bore **74.** Depressing the fastener **78** in this fashion may compress the coil spring **112** between the end wall of the larger diameter bore **76** and the fastener head. One T-nut **82** may be threaded (cylindrical head **108** first) onto a portion of the threaded shaft **92** that extends from the smaller diameter bore **74.** The T-nut **82** may be advanced onto the threaded shaft **92** of the fastener until the distal end **96** of the fastener is flush (or level) with the bottom surface **112** of the elongated base **106** of the T-nut. Then the fastener head **88** may be depressed, and the T-nut **82** and fastener **78** rotated until the notches **116** in the elongated base **106** of the T-nut **82** are aligned with the tips **70** of the accessory rail **17**, **40** guides **68.** After the T-nut **82** and guides **68** are aligned in this manner, the fastener head **88** may be released to allow the T-nut **82** to seat between the guides **68**, as shown in **FIGS. 4** and **5****.** When properly seated, the notches **116** of the T-nut **68** are engaged by the tips **70** of the accessory rail. In this configuration, the coil spring **112** may press against the end wall of the larger diameter bore **72** and the fastener head **88** to pull the T-nut **82** against the accessory rail **17**, **40.** The accessory rail **17**, **40** may be deployed (i.e., mounted on a suitable slotted object **14**) after the fasteners **78**, coil springs **112**, and T-nut **82** assemblies are assembled and positioned in this manner.

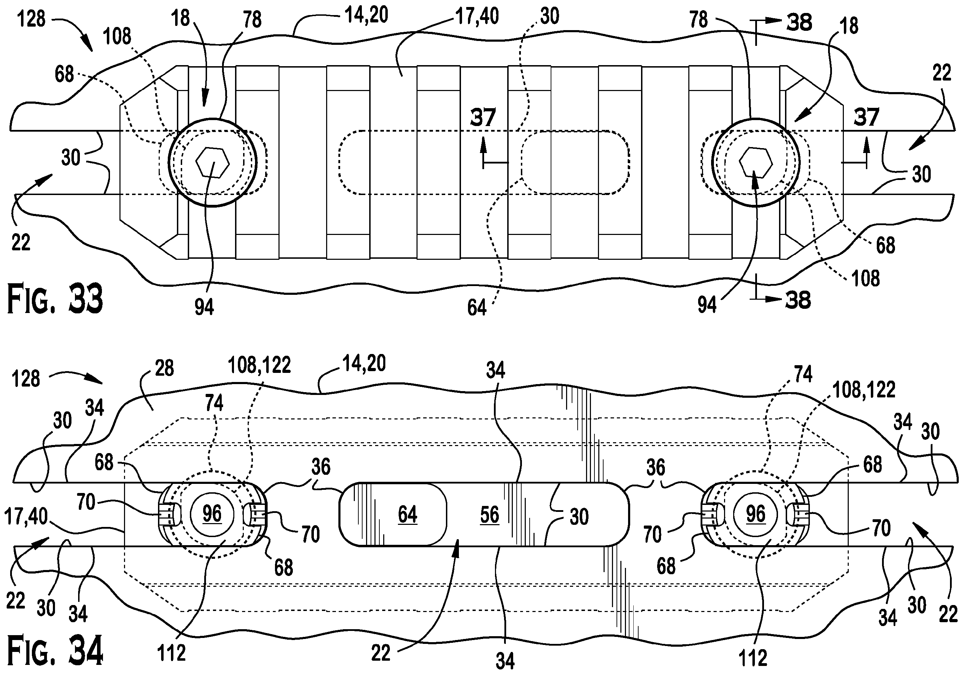

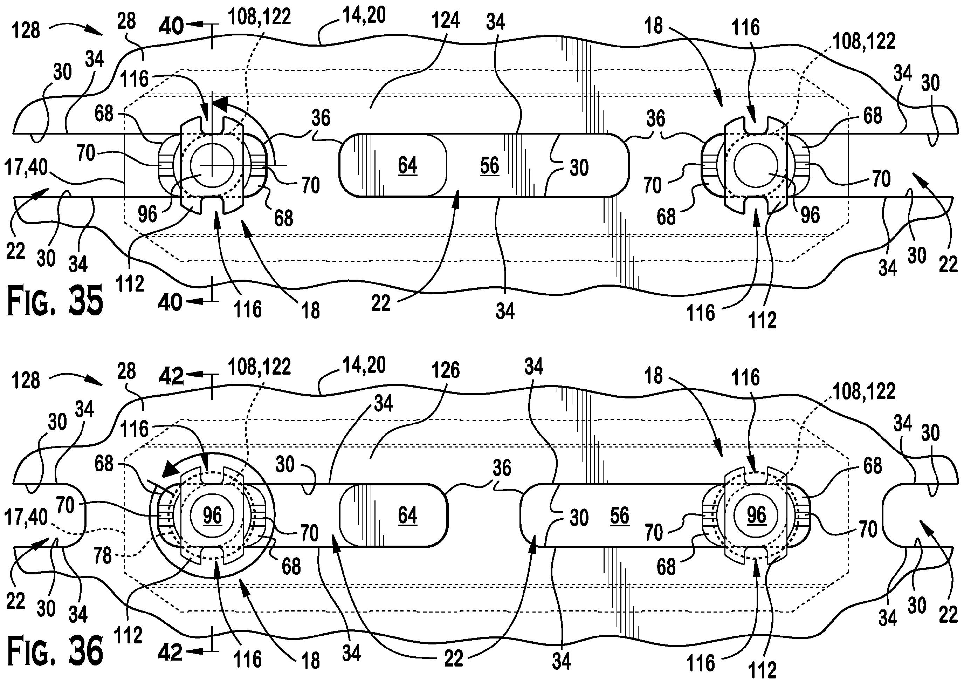

Referring to **FIG. 33**, the exemplary two-slot accessory rail **17**, **40** may cooperate with two or more slots of an object, such as the rifle handguard. It is preferred, however, that a two-slot accessory rail mount over two adjacent slots as depicted in **FIGS. 1** and **36****.** Still, the slot configuration and pattern of the handguard in **FIG. 1** may accept a two-slot accessory rail connected to three slots, as illustrated in **FIGS. 33-35****.**

Referring to **FIGS. 33-34** and **37-38**, the two-slot accessory rail **17, 40** may be placed over three adjacent slots **22** such that a projection **64** and a T-nut **82** of each fastener apparatus **18** is seated in one slot **22.** The bottom **56** of the two-slot accessory rail **17**, **40** around the T-nut **82** and guides **68** may be pressed flat against the exterior surface **26** of the handguard abutting the slots **22** (*see e.g*., **FIG. 33**). More generally, the handguard **20** may be an object **14** that includes an exterior surface **26** (*see e.g*., **FIG. 33**) and an interior surface **28** (*see e.g*., **FIG. 34**)**.** As shown in **FIG. 33**, the exterior surface of the handguard **28** near each slot **22** may be a mounting surface **124**; whereas, as shown in **FIG. 34** the interior surface of the handguard **20** near the slots **22** may be a locking surface **126.** The mounting surface **124** and the locking surface **126** may be flat and smooth.

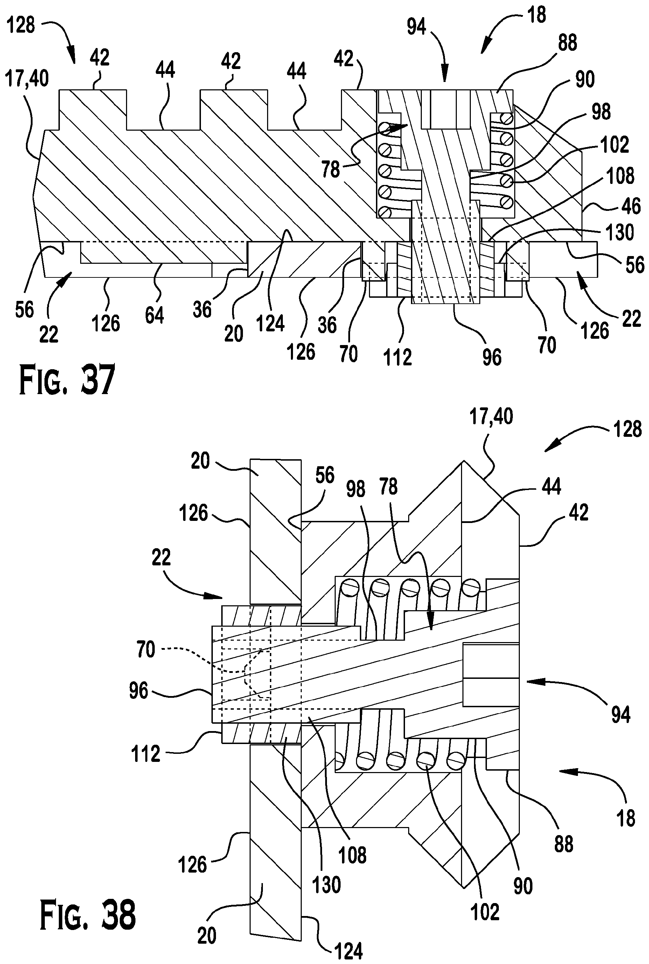

**FIGS. 33** and **34** depict the two-slot accessory rail **17**, **40** in a ready configuration **128**. In the ready configuration **128** the accessory **16** contacts the mounting surface **124** of the object **14**, each T-nut **82** is seated on the adjacent guides **68**, and the elongated base **106** of each T-nut **82** is held by the guide tips **70** in alignment with the longitudinal axis **50** of the accessory rail **17**, **40.** Referring to **FIG. 37**, the top surface of the elongated base **130** is inside the slot **22**. As shown in **FIGS**. **33** and **34**, the curved sidewall segments **122** of the cylindrical head (or stud) **108** of each T-nut **82** may be positioned to allow approximately 90° of rotation in a clockwise direction.

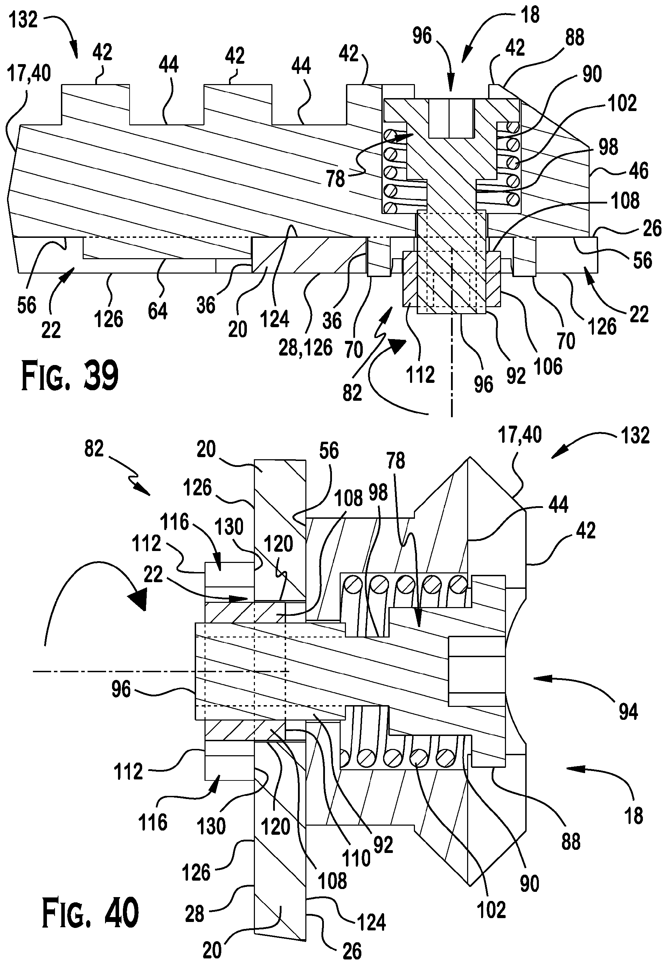

**FIGS. 35**, **39** and **40** depict the two-slot accessory rail **17**, **40** in a rotated configuration **132**. Referring to **FIG. 39**, an operator may insert an appropriate drive tool (not shown), such as a hex socket drive, into the drive slot **94** and depress the fastener **78** sufficiently to disengage the T-nut **82** from the guides **68** and move the elongated base **112** of the T-nut **68** through the slot **22** past the locking surface **126** of the handguard. Referring to **FIGS. 35** and **40**, the operator may then rotate the driver until the straight wall segments **120** of the stud **108** block further rotation of the T-nut **68.** In this embodiment, the maximum allowable degree of rotation may be approximately 90 degrees in a clockwise direction.

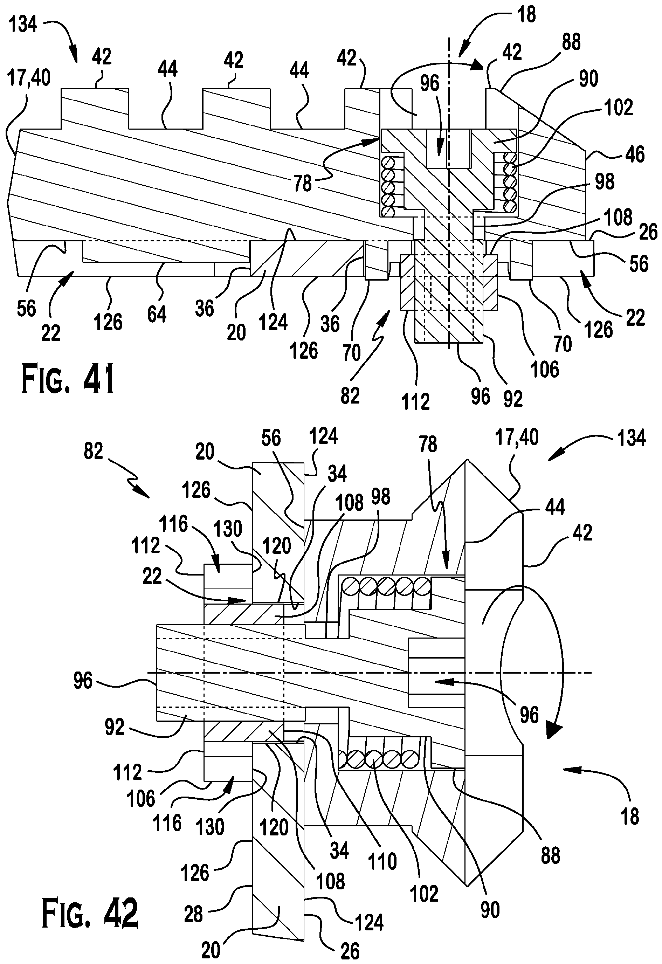

**FIGS. 36** and **41****-42** depict the two-slot accessory rail **17**, **40** in a locked configuration **134.** Referring to **FIGS. 36** and **42**, after the T-nut **82** has been rotated in this manner, the elongated base **106** of the T-nut **82** may be positioned generally perpendicular to the slot **22** (**FIG. 36**), and the top surface of the elongated base **130** may contact the locking face **126.** The operator may then advance the fastener **78** into the T-nut **82** to securely clamp (or fix) the accessory rail **14**, **40** to the handguard **20.**

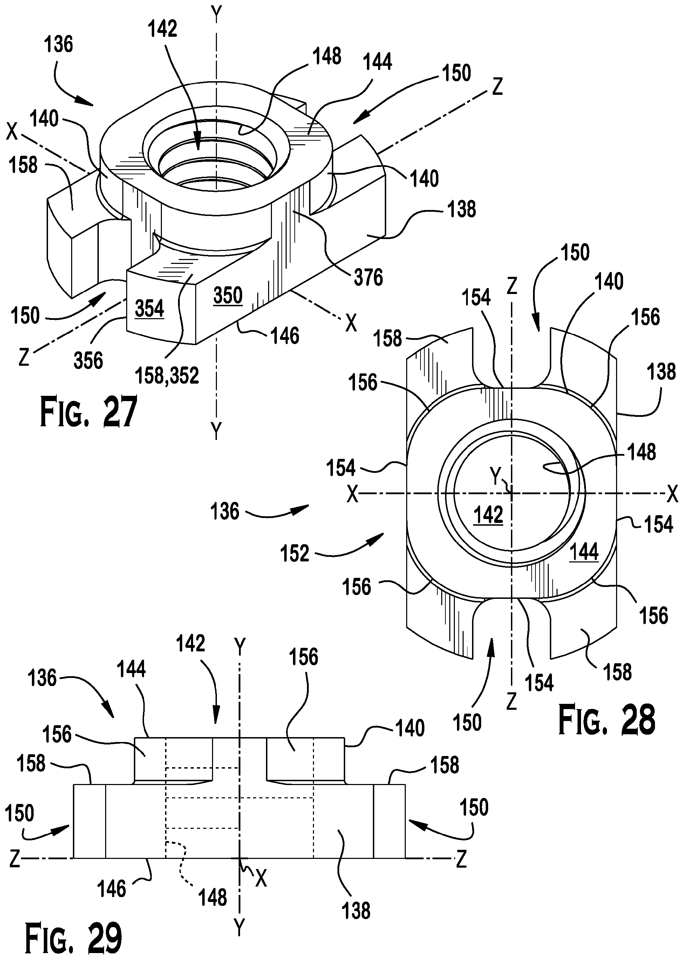

**FIGS. 27-31** show another embodiment of a T-nut **136** in accordance with the present invention. The T-nut is shown with a three dimensional Cartesian coordinate system. In this embodiment, the T-nut **136** may include an elongated base **138** and a cylindrical head (or shoulder) **140.** The elongated base may have a longitudinal axis along the z-axis. The cylindrical head **140** may be centrally positioned on the elongated base **138.** A bore **142** may extend from a top surface of the cylindrical head **144** to the bottom **146** of the elongated base **146.** The bottom **146** of the elongated base may lie in the x-z plane. The bore **142** may have a central axis along the y-axis. The bore **142** may include screw threads **148** which are configured and dimensioned to mate with screw threads **92** on a fastener **78** (*see e.g*., **FIG. 14**). Each end of the elongated base **138** may include a notch **150.** Each notch **150** may be aligned with the center of the bore. Referring to **FIG. 28**, the cylindrical head **140** of the T-nut may possess a rounded square profile perpendicular to the axis of the bore. The rounded square profile **152** may include four straight sidewall segments **154** and four curved sidewall segments **156.**

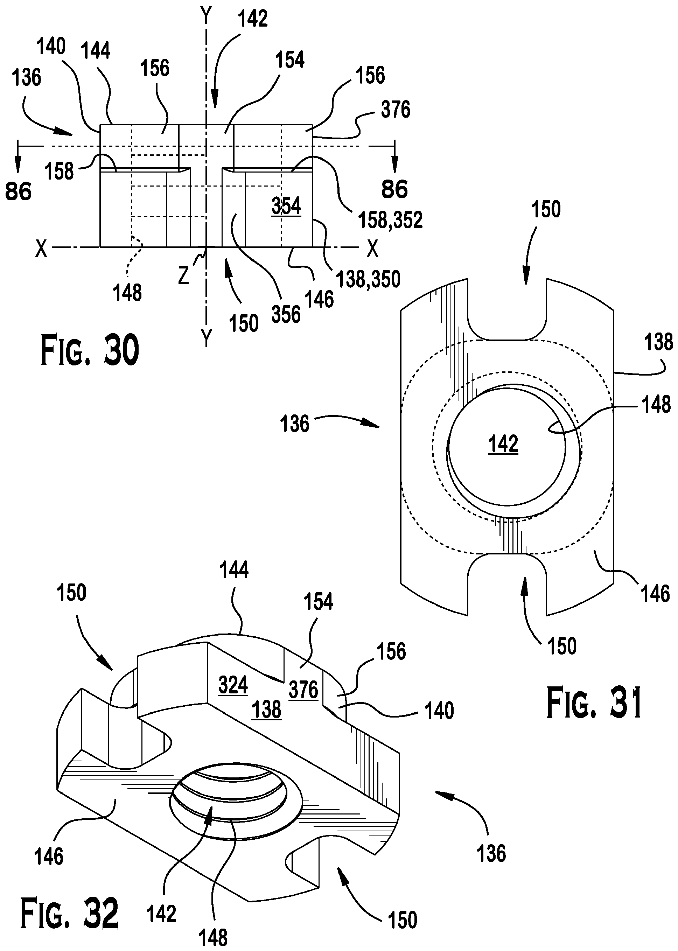

Referring to **FIG. 27**, the elongated base **138** may include a bottom or lower surface **146**. Further, the elongated base may include a first side **350** near the lower surface **146**, a second side **352** near the first side **350**, and a third side **354** near the first side **350** and the second side **352**. Referring to **FIG. 27** and **FIG. 30**, the elongated base **138** may include a notch **150.** The notch **150** may include a first interior sidewall **356** which extends from the second side **352** to the lower surface **146** of the elongated base.

The T-nut **136** may further include a shoulder **140** next to the elongated base **138.** The shoulder **140** may have a longitudinal axis along the y-axis. The shoulder **140** may include a first sidewall-segment **376** near the first side **350** of the elongated base **136.** The shoulder further may include an end surface **144.** A bore **142** may extend from the end surface **144** to the lower surface **146.** The bore may include a screw thread **148** for receiving a mating fastener.

Referring to **FIG. 86**, the T-nut **136** may include a cross-sectional profile **360** normal to the y-axis. The cross-sectional profile **360** may include a first straight wall segment **358** next to the first side **350** of the elongated base **136.** The cross-sectional profile **360** may include a second straight wall segment **362** spaced from the first straight wall segment **358.** A first curved wall segment **364** may be disposed between the first straight wall segment **358** and the second straight wall segment **362.**

A second curved wall segment **366** may be disposed between the first straight wall segment **358** and the second straight wall segment **362.** The first curved wall segment **364** may possess a first radius of curvature **R5** and the second curved wall segment **366** may possess a second radius of curvature **R6.** The first radius of curvature **R5** may be substantially equal to the second radius of curvature **R6.**

The cross-sectional profile **360** may further include a third curved wall segment **368** abutting the first straight wall segment **358**, as well as a fourth curved wall segment spaced **370** from the first straight wall segment **358.** The third curved wall segment **368** may possess a third radius of curvature **R7** and the fourth curved wall segment **370** may possess a fourth radius of curvature **R8.** The first radius of curvature **R5** may be substantially equal to the third radius of curvature **R7.** Illustrative approximate values for the dimensions disclosed in **FIG. 86** are presented in in **Table 3.** Other feature configurations or dimensions are contemplated, however, and may be implemented in other embodiments.

**Table 3**

| **Exemplary Dimensions for a Second Embodiment of an Interior Fastener** | |
|---|---|
| Dimension | Length (Inches) |
| **R5** | 0.100 |
| **R6** | 0.100 |
| **R7** | 0.100 |
| **R8** | 0.100 |

The cross-sectional profile **360** may further include a third straight wall segment **372** between the first curved wall segment **364** and the second curved wall segment **366.** The cross-sectional profile further may include a fourth straight wall segment **374** between the third curved wall segment **368** and the fourth curved wall segment **370.**

The cross-sectional profile **360** may include a first plane of symmetry (*e*.*g*., a plane formed by the z-axis and y-axis). The cross-sectional profile **360** further may include a second plane of symmetry (*e*.*g*., a plane formed by the x-axis and y-axis).

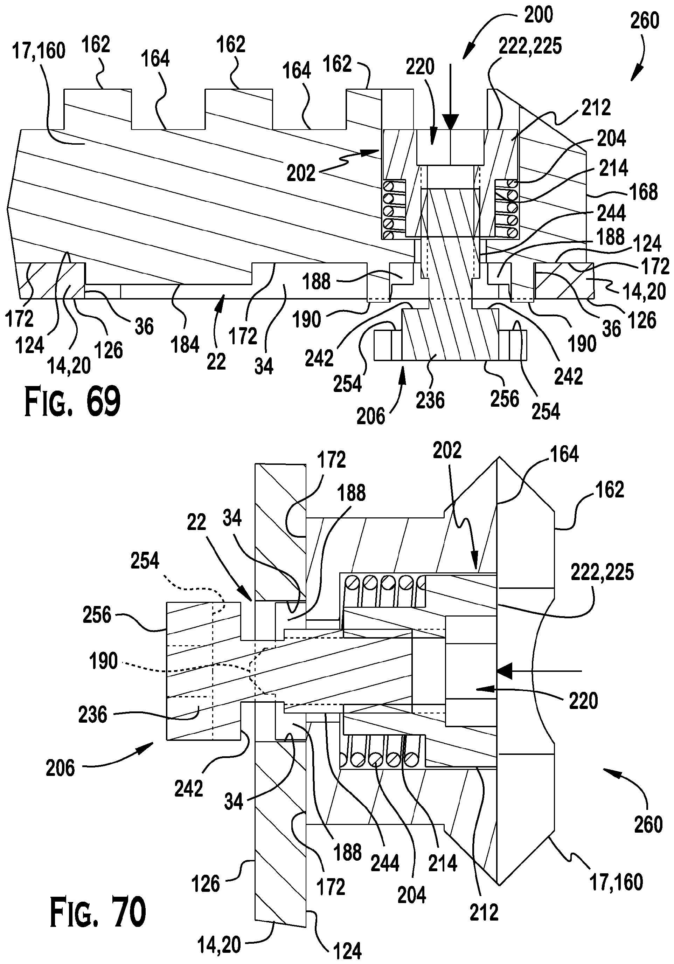

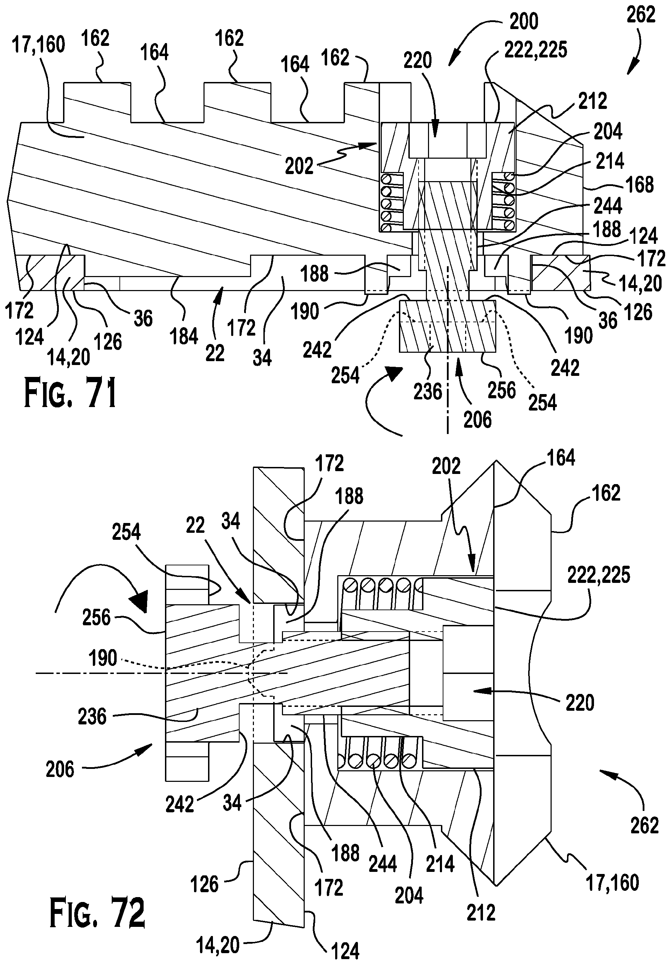

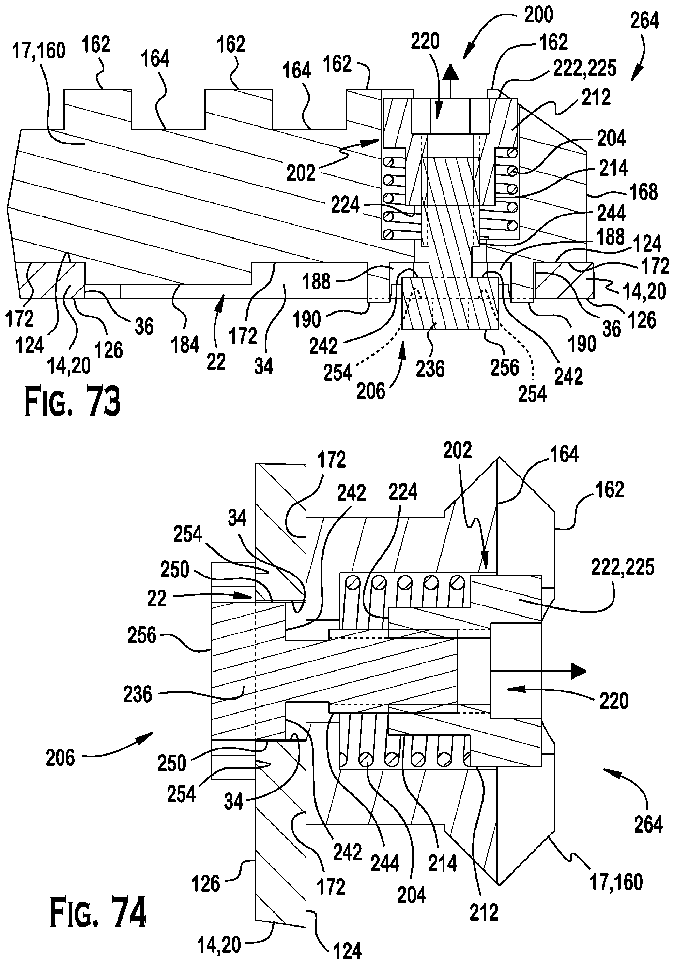

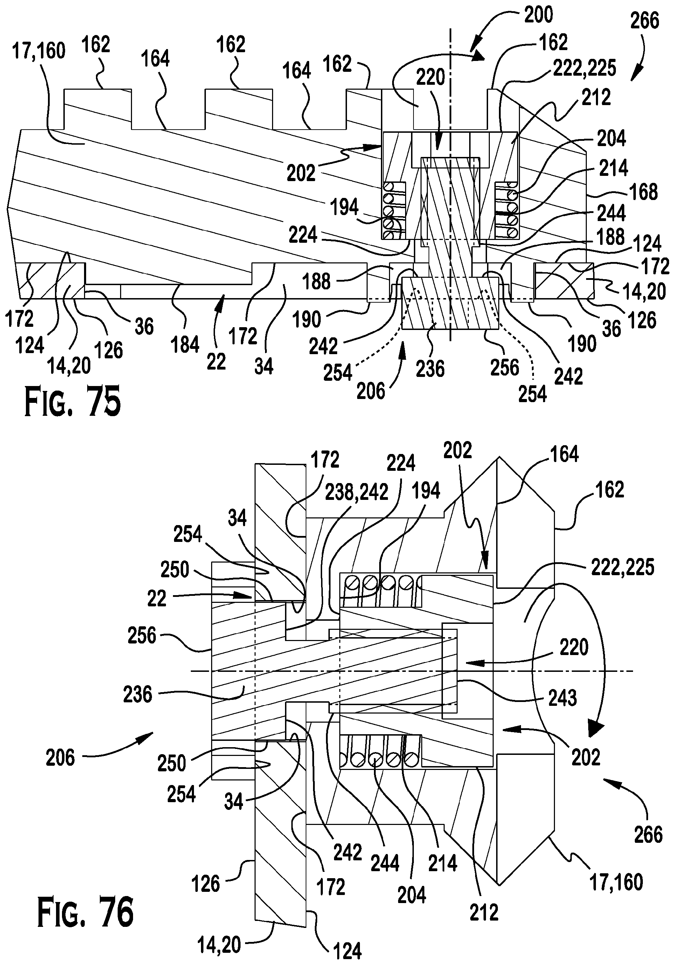

The T-nut of **FIGS. 27-32** may replace the T-nuts shown in **FIGS. 6** and **7****.** Once assembled, however, such an embodiment may operate like the fastener apparatus **18** and accessory **16** of **FIGS. 63-76****.** For example, an operator may insert an appropriate drive tool, such as a hex socket drive, into the drive slot **94** and depress the fastener **78** sufficiently to disengage the T-nut **136** from the guide(s) **68** and tips **70** of the accessory rail **17**, **40**, and then move the T-nut (including the cylindrical head) **136** through the slot **22** past the locking surface **126** of the handguard **20** (*see also*, **FIGS. 69** and **70**). The operator may then rotate the driver approximately 90° (in either direction). Accordingly, the elongated base **138** of the T-nut **136** may be positioned generally perpendicular to the slot **22,** and two opposite straight side wall segments **154** on the cylindrical head **140** may be aligned with the slot **22** (*see also*, **FIGS. 71-72**). An operator may then release downward pressure on the fastener head **88** to allow the coil spring **102** to bias the cylindrical head **140** into the slot **22** (*see also*, **FIGS. 73-74**). Further, this may allow the coil spring **102** to bias the top surface of the elongated base **158** against the locking surface **126.** After the T-nut **136** is positioned generally transverse to the slot **22** and two straight sidewall segments **154** of the cylindrical head **140** are positioned in the slot **122**, the operator may then advance the fastener **78** into the T-nut **136** to securely clamp (or fix) the accessory rail **17**, **40** to the handguard **20** (*see also*, **FIGS. 75-76**).

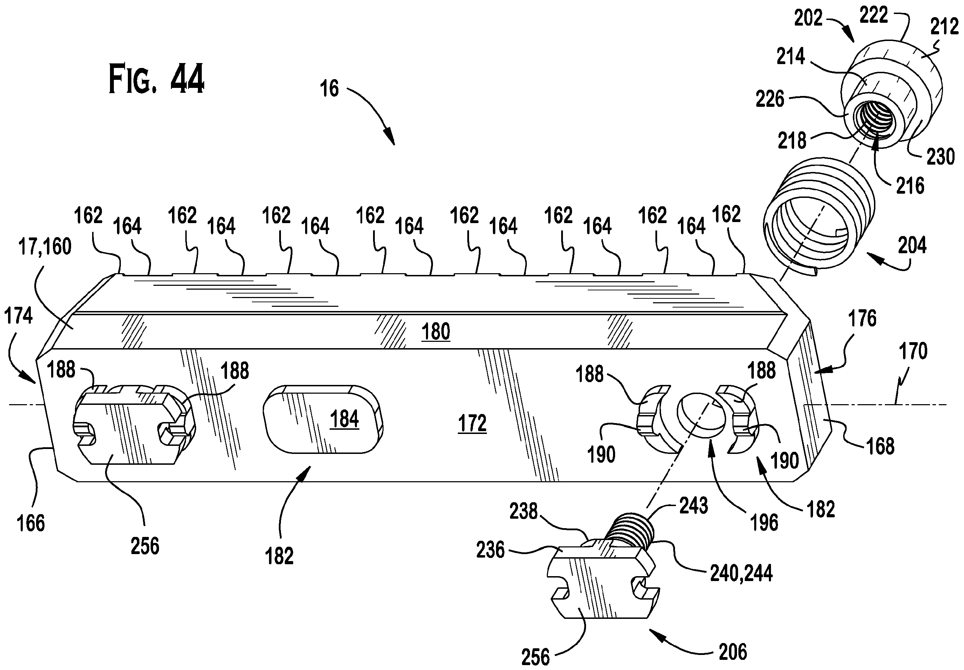

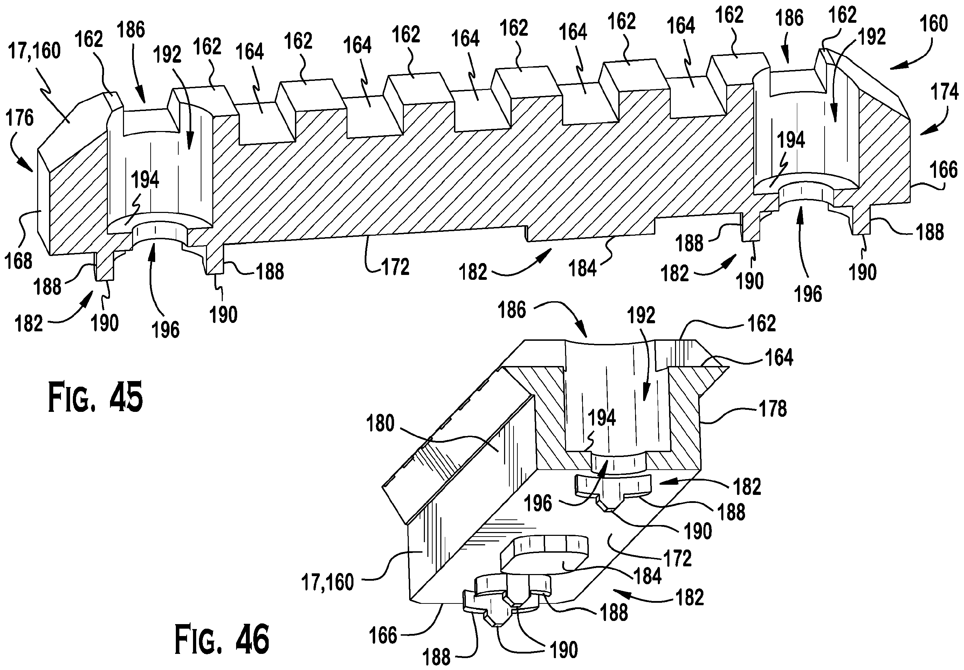

**FIGS. 43-46** depict a second exemplary embodiment of an accessory rail **160** in accordance with the present invention. Referring to **FIG. 43**, the accessory rail **160** may include a top surface **162.** The top surface **162** may include plurality of parallel grooves **164.** Each of the parallel groves **164** may have a rectangular cross section (*see e.g*., **FIG. 45**). Although the accessory rail **160** may comply with MIL-STD-191, the rail **160** may conform to other mounting rail standards or form any shape or configuration which may serve a particular use or application, provided that the accessory rail **160** may be secured to a slotted object in accordance with the present invention. Referring to **FIGS. 43** and **44**, the accessory rail **160** further may include a distal end **166** and a proximal end **168.** Additionally, the accessory rail **160** may possess a longitudinal axis **170** extending from the distal end **166** to the proximal end **168.** The distal end **166** and the proximal end **168** may be flat surfaces. Referring to **FIG. 45**, the distal end surface **174** and the proximal end surface **176** may be parallel surfaces.

As shown in **FIGS. 44**, **45** and **46**, the accessory rail **160** may include a bottom surface **172.** Referring to **FIG. 46**, the accessory rail **160** further may include a right side surface **178** and a left side surface **180.** The right side surface **178** and the left side surface **180** may each extend between the top surface **162** and the bottom surface **172.** As shown in **FIGS. 44-46**, although the bottom surface **172** generally may be flat and smooth, the bottom surface **172** may include one or more raised features **182.** For example, referring to **FIG. 45**, the bottom surface **172** may include a projection **184** located between the two fastener receiving holes **186**. The projection **184** may be aligned with the fastener receiving holes **186.** Additionally, each of the fastener receiving holes **186** may include one or more guides **188.** Referring to **FIGS. 44-46**, each guide **188** may be a curved wall. Further, the curved wall may be crescent shaped. The guides **188** may include a tip or crest **190.** The tips **70** may be aligned with the longitudinal axis **170** of the accessory rail **160.**

Referring to **FIG. 45**, the accessory rail **160** may include a fastener receiving hole **186** adjacent the distal end **166.** Also, the accessory rail **160** may include a fastener receiving hole **186** adjacent to the proximal end **168.** The fastener receiving holes **168** may be disposed along the longitudinal axis **170.** Referring to **FIG. 45** and **46**, the fastener receiving holes **186** may extend from the top surface **162** to the bottom surface **172.** Each fastener receiving hole **186** may include a counterbore. For example, the fastener receiving hole **186** may include a larger diameter bore **192** extending from the top surface **162** toward the bottom surface **172.** The larger diameter bore **192** may include an end wall **194.** The end wall **192** may be parallel to the top surface **162.** The end wall **192** may be parallel to the bottom surface **172.** A smaller diameter bore **196** may extend from the end wall **192** to the bottom surface **172** of the accessory rail **160.**

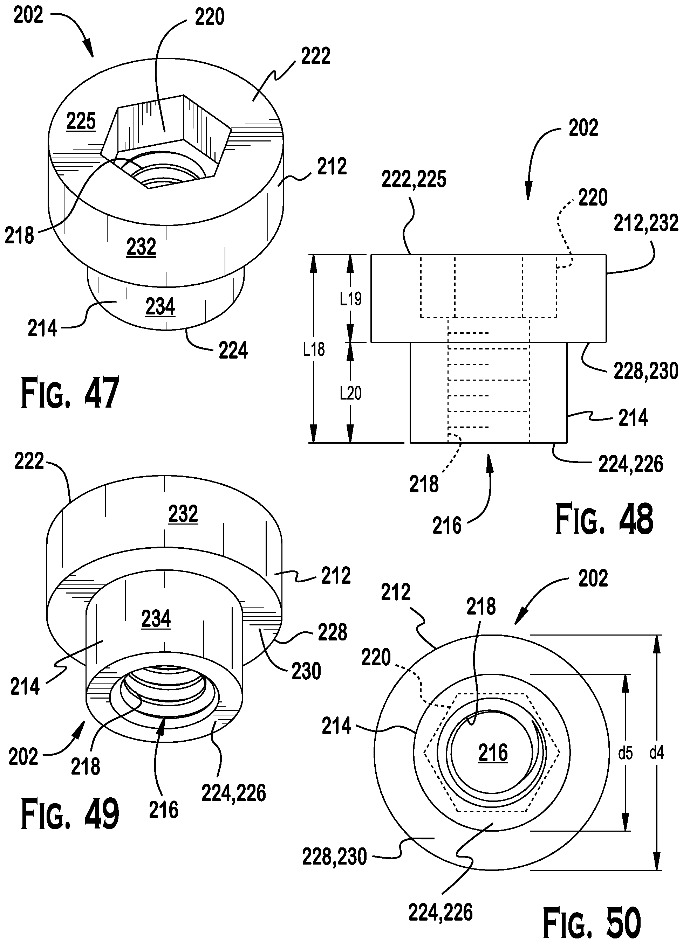

Referring to **FIGS. 43** and **44**, another embodiment of a fastener apparatus **200** in accordance with the present invention may include a fastener (*e*.*g*., nut) **202**, a resilient member *(*e*.g*., a coil spring) **204**, and a T-bolt **206.** Referring to **FIG. 45** and **46**, the counterbore **192**, **196** and guides **188** next to the smaller diameter bore **196** on the bottom surface **172** may provide a housing **208** (*see e.g*., **FIG. 43****)** and a seat **210** (*see e.g*., **FIG. 44**), respectively for a fastener apparatus **200** in accordance with the present invention. For example, as shown in **FIGS. 47-50**, the fastener **202** may include a fastener head **212**, a spring guide **214**, and a central bore **216.** The central bore **216** may include screw threads **218.** Referring to **FIGS. 43** and **44**, the fastener **202** may mate with the T-bolt **206.** Referring to **FIGS. 47** and **48**, the fastener head **212** further may include a drive slot **220.** The drive slot **220** may be a hex socket. Although the fastener **202** may include a hex socket, any suitable drive socket or shape may be used. For example, the drive slot may be a cross, square, double square or other type.

Referring to **FIG. 48**, the fastener **202** may include a proximal end **222** and a distal end **224.** The proximal end **222** may include a proximal end surface **225.** The distal end **224** may include a distal end surface **226.** The central bore **216** may extend from the distal end surface **226** toward the proximal end surface **225.** The distal end surface **226** of the fastener may be annular. The distal end surface **226** of the fastener may be flat. The drive slot **220** may extend from the proximal end surface **225** toward the distal end surface **226** of the fastener **202.** The central bore **216** may terminate in the drive slot **220.** Thus, the fastener 202 may have a length L₁₈ measured from the proximal end of the fastener **222** to the distal end **226** of the fastener. The fastener **202** may further have a length L₁₉ measured from the proximal end surface **222** to the distal end of the fastener head **228.** And, the fastener may have a length L₂₀ measured from the distal end surface **230** of the fastener head **212** to the distal end surface of the fastener **226.** Illustrative values for the dimensions disclosed in **FIG. 48** are presented in **Table 4.** Other feature configurations and dimensions, however, may be implemented in other embodiments.

**Table 4**

| **Exemplary Dimensions for a Fastener** | |
|---|---|
| Dimension | Length (Inches) |
| **L18** | 0.300 |
| **L19** | 0.140 |
| **L20** | 0.160 |

Referring to **FIG. 49**, the fastener head **212** may include a distal end **228.** The distal end **228** of the fastener head **212** may include a distal end surface **230.** A side surface **232** may extend from the proximal end **222** of the fastener **202** to the distal end surface **230** of the fastener head **212.** Referring to **FIG. 50**, the side surface **212** may have a maximum outer dimension, **d**₄. For example, the dimension **d**₄ may be approximately 0.375 inches. The maximum outer dimension of the side surface **212** may be an outer diameter of the fastener head **212.** The distal end surface **230** may be annular. The distal end surface **230** may be flat.

Referring to **FIG. 49****,** the spring guide **214** may be disposed between the distal end surface **230** of the fastener head **212** and the distal end surface of the fastener **226.** Another side surface **234** may extend from the distal end surface **230** of the fastener head **212** to the distal end surface **226** of the fastener **202.** Referring to **FIG. 50****,** the other side surface **234** may have a maximum outer dimension, **d₅.** For example, the dimension **d₅** may be approximately 0.250 inches. The maximum outer dimension of the other side surface **234** may be an outer diameter of the spring guide **212.**

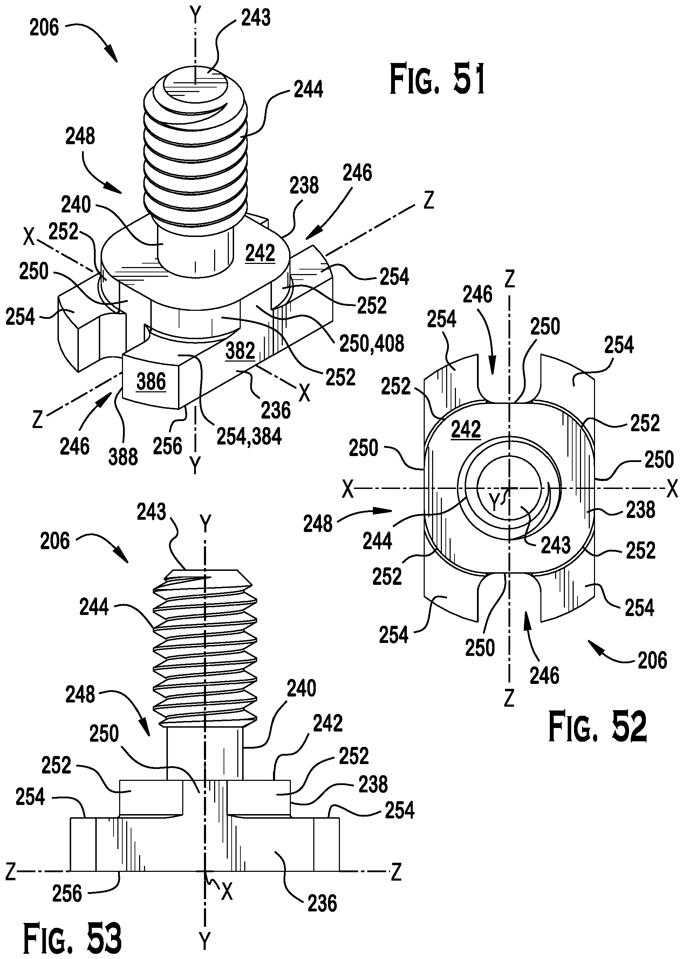

**FIGS. 51-56** show an exemplary embodiment of a T-bolt **206** in accordance with the present invention. The T-bolt is shown with a three dimensional Cartesian coordinate system. In this embodiment, the T-bolt **206** may include an elongated base **236** and a cylindrical head (or shoulder) **238.** The elongated base **236** may have a longitudinal axis along the z-axis. The cylindrical head **238** may be centrally positioned on the elongated base **236.** A shaft **240** may extend from a top surface **242** of the cylindrical head to a proximal end **243.** The shaft **240** may have a central axis along the y-axis. The shaft **240** may include screw threads **244** which are configured and dimensioned to mate with screw threads **218** on a fastener **202** (*see e.g*., **FIG. 44**). Each end of the elongated base **236** may include a notch **246.** Each notch **246** may be aligned with the shaft **240.** Referring to **FIG. 52**, the cylindrical head **238** of the T-bolt **206** may possess a rounded square profile **248** perpendicular to the central longitudinal axis of the shaft **240.** The rounded square profile **248** may include four straight sidewall segments **250** and four curved sidewall segments **252.**

Referring to **FIG. 53**, the T-bolt may include a lower surface **256** of the elongated base **236.** The lower surface **256** may be flat and smooth. The lower surface **256** of the elongated base **236** may define a distal end (or bottom) of the T-bolt **206.** The lower surface **256** of the elongated base **236** may lie in the x-z plane.

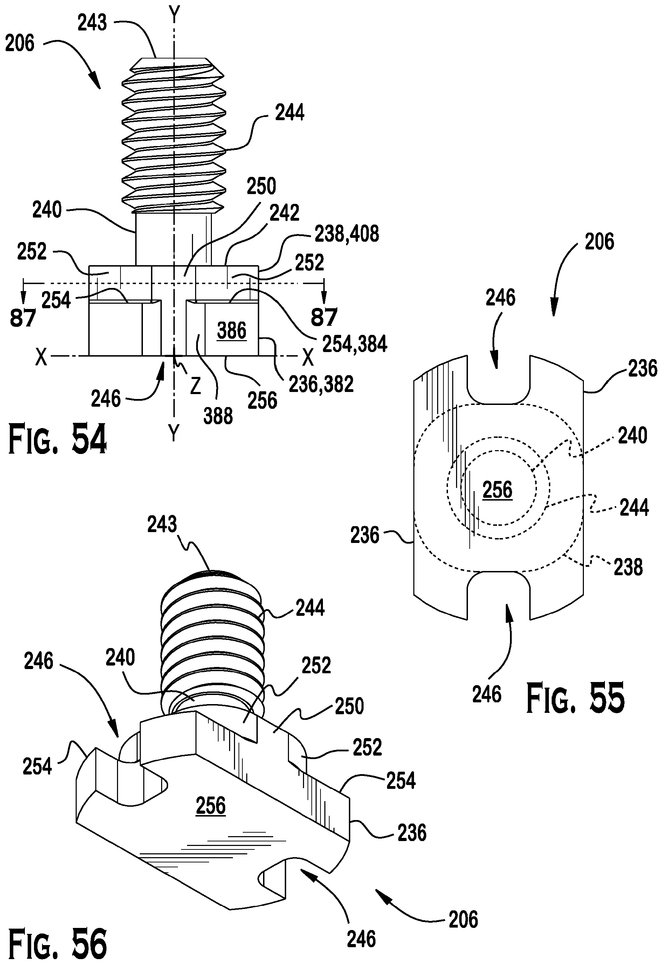

Referring to **FIG. 51**, the elongated base **236** may include a bottom or lower surface **256.** Further, the elongated base may include a first side **382** near the lower surface **256**, a second side **384** near the first side **382**, and a third side **386** near the first side **382** and the second side **384.** Referring to **FIG. 51** and **FIG. 54**, the elongated base **236** may include a notch **246.** The notch **246** may include a first interior sidewall **388** which extends from the second side **382** to the lower surface **256** of the elongated base.

The T-bolt **206** may further include a shoulder **238** next to the elongated base **236.** The shoulder **238** may have a longitudinal axis along the y-axis. The shoulder **238** may include a first sidewall-segment **408** near the first side **382** of the elongated base **236.** The shoulder further may include an end surface **242.** A shaft **240** may extend from the end surface **242.** The shaft **242** may include a screw thread **244** for receiving a mating fastener.

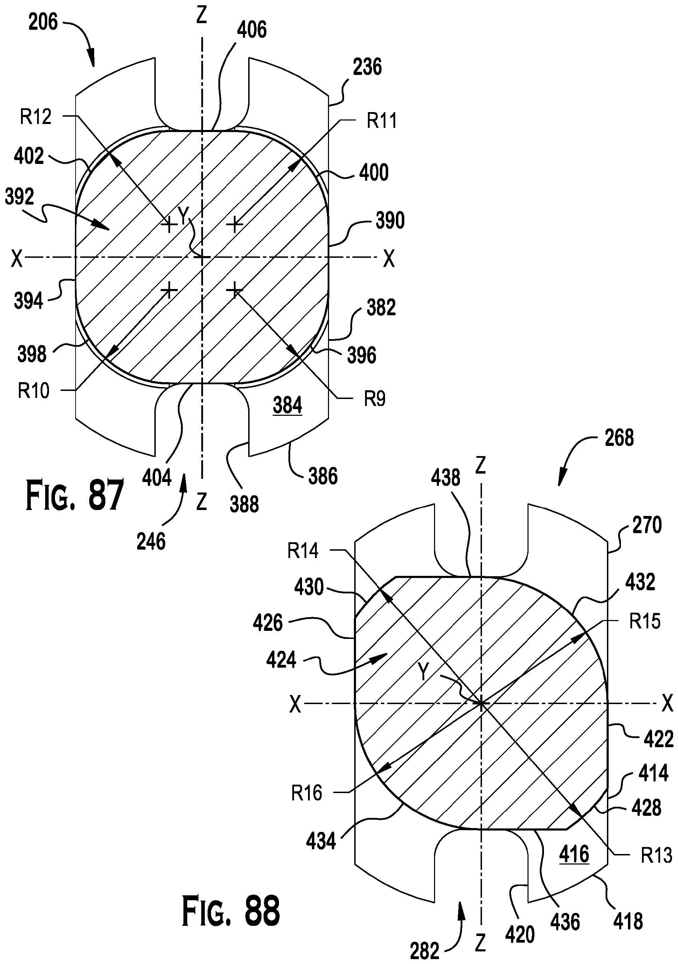

Referring to **FIG. 87**, the T-bolt **206** may include a cross-sectional profile **392** normal to the y-axis. The cross-sectional profile **392** may include a first straight wall segment **390** next to the first side **382** of the elongated base **236.** The cross-sectional profile **392** may include a second straight wall segment **394** spaced from the first straight wall segment **390.** A first curved wall segment **396** may be disposed between the first straight wall segment **390** and the second straight wall segment **394.**

A second curved wall segment **398** may be disposed between the first straight wall segment 390 and the second straight wall segment **394.** The first curved wall segment **396** may possess a first radius of curvature **R9** and the second curved wall segment **398** may possess a second radius of curvature **R10.** The first radius of curvature **R9** may be substantially equal to the second radius of curvature **R10.**

The cross-sectional profile **392** may further include a third curved wall segment **400** abutting the first straight wall segment **390**, as well as a fourth curved wall segment **402** spaced from the first straight wall segment **390.** The third curved wall segment **400** may possess a third radius of curvature **R11** and the fourth curved wall segment **402** may possess a fourth radius of curvature **R12.** The first radius of curvature **R9** may be substantially equal to the third radius of curvature **R11.** Illustrative approximate values for the dimensions disclosed in **FIG. 87** are presented in in **Table 5.** Other feature configurations or dimensions are contemplated, however, and may be implemented in other embodiments.

**Table 5**

| **Exemplary Dimensions for a Third Embodiment of an Interior Fastener** | |
|---|---|
| Dimension | Length (Inches) |
| **R9** | 0.100 |
| **R10** | 0.100 |
| **R11** | 0.100 |
| **R12** | 0.100 |

The cross-sectional profile **392** may further include a third straight wall segment **404** between the first curved wall segment **396** and the second curved wall segment **398.** The cross-sectional profile **392** further may include a fourth straight wall segment **406** between the third curved wall segment **400** and the fourth curved wall segment **402.**

The cross-sectional profile **392** may include a first plane of symmetry (*e*.*g*., a plane formed by the z-axis and y-axis). The cross-sectional profile **392** further may include a second plane of symmetry (*e*.*g*., a plane formed by the x-axis and y-axis).

Referring to **FIGS. 43** and **44**, the lock bolt (or interior fastener) **206** may include a shaft **240** which extends upward through the smaller diameter bore **196** of the accessory rail **160.** The shaft **240** further may include a threaded portion **244** near the tip **243** of the shaft. The shaft **240** may include a stem between the threaded portion **244** of the shaft and the cylindrical head **238.** The threaded portion **244** of the shaft may mate with a nut (or exterior fastener) **202** which may include a centrally aligned bore **216** having mating screw threads **218.** The nut **202** may include a proximal portion or head **212.** The proximal end surface **225** of the nut (or exterior fastener) **202** may include a drive slot **220** (*see e.g*., **FIG. 43**). The nut **202** further may include a spring guide **214** that extends from the head **212.** The bore **216** may extend from the distal end surface **226** to the drive slot **220.** The bore **216** may include screw threads **218** which are configured and dimensioned to mate with screw threads **244** on the T-bolt (or interior fastener) **206.** Hence, the nut **202** may be a receptacle that receives and couples to the shaft **240** of the lock bolt **206** within a counterbore **192**, **196** of the accessory rail **160.** The coil spring **204** may be disposed in the larger diameter bore **192** between an end wall **194** of the larger diameter bore **192** and an annular surface (or spring face) **230** on the head **212** of the nut **202.** After the fastener apparatus **200** is assembled, the coil spring **204** may bias the lock bolt **206** against the accessory rail **160.**

Referring to **FIGS. 63-76**, the accessory rail **160** may be placed over two adjacent slots **22.** One projection **184** and one fastener apparatus **200** may be seated in one slot **22.** Another fastener apparatus **200** may be seated in the adjacent slot **22.** The bottom surface **172** of the accessory rail **140** near the fastener apparatus **200** and projection **184** may be pressed flat against the exterior surface **26** of the handguard **20.** More generally, the handguard **20** may be an object **14** that includes an exterior surface **26** (*see e.g*., **FIG. 63**) and an interior surface **28** (*see e.g*., **FIG. 64**). As shown in **FIG. 63****,** the exterior surface **26** of the rifle handguard **20** near each slot **22** may be a mounting surface **124**; whereas, as shown in **FIG. 64** the interior surface **28** of the handguard **20** near the slots **22** may be a locking surface **126.** The mounting surface **124** and the locking surface **126** may be flat and smooth.

**FIGS. 63-64** and **67-68** depict the accessory rail **160** and handguard **20** in a ready configuration **258.** In the ready configuration **258,** the accessory **16** contacts the mounting surface **124** of the object **14**, each lock bolt **206** is seated on the adjacent guides **188**, and the elongated base **236** of each respective lock bolt **206** notch **246** is held by a guide crest (or tips) **190** in alignment with the longitudinal axis **32** of the accessory rail **160.**

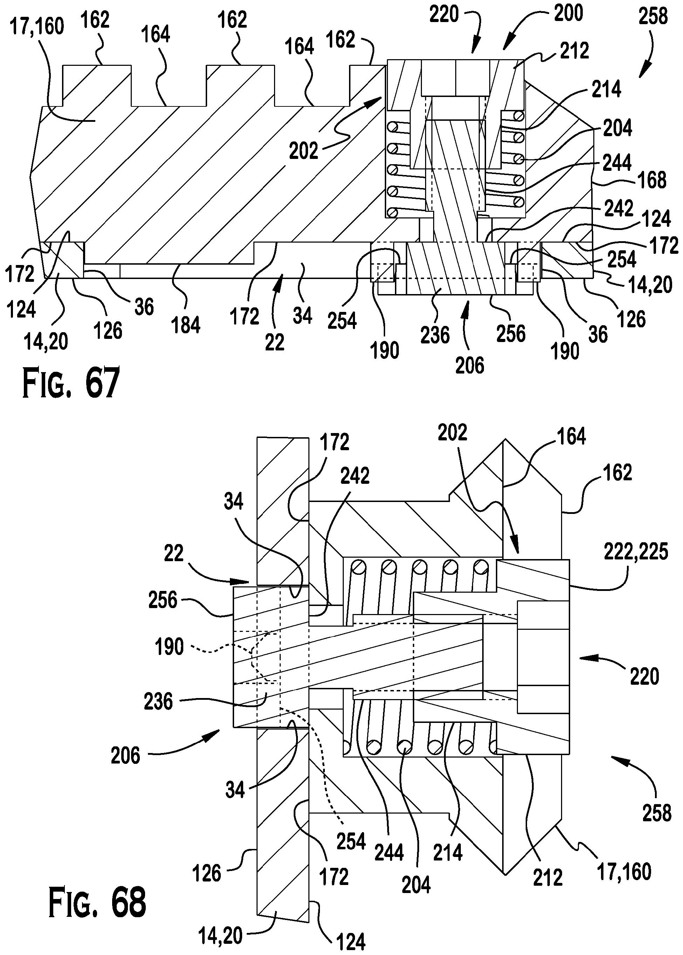

Referring to **FIG. 67** and **FIG. 68**, the top surface **254** of the elongated base **236** may be situated inside the slot **22.** As shown in **FIGS. 63** and **64**, opposite straight sidewall segments **250** of the cylindrical head (or stud) **238** of each lock bolt **206** may be positioned in the slot **22** adjacent to the slot segments **34** which are aligned with the longitudinal axis **32** of the slot. Referring to **FIG. 68****,** rotation of the lock bolt **206** within the slot **22** may be blocked by contact between the lock bolt **206** (*e.g*., elongated base **236** and cylindrical head **238**) and adjacent slot segments **34.**

**FIGS. 69** and **70** depict the accessory rail **160** and handguard **20** in a released configuration **260.** An operator may insert an appropriate drive tool (not shown), such as a hex socket drive, into the drive slot **220** and depress the fastener **202** sufficiently to disengage the lock bolt **206** from the guides **188** and move the elongated base **236** and cylindrical head **238** through the slot **22** past the locking surface **126** of the handguard **20.**

**FIGS. 71** and **72** depict the accessory rail **160** and handguard **20** in a rotated configuration **262.** An operator may rotate the drive tool (not shown) to turn the fastener head **212** and lock bolt **206** and change the orientation of the elongated base **236.** The fastener head **212** and lock bolt **206** may be rotated until the elongated base **236** is oriented generally perpendicular to the longitudinal axis of the slot **22.**

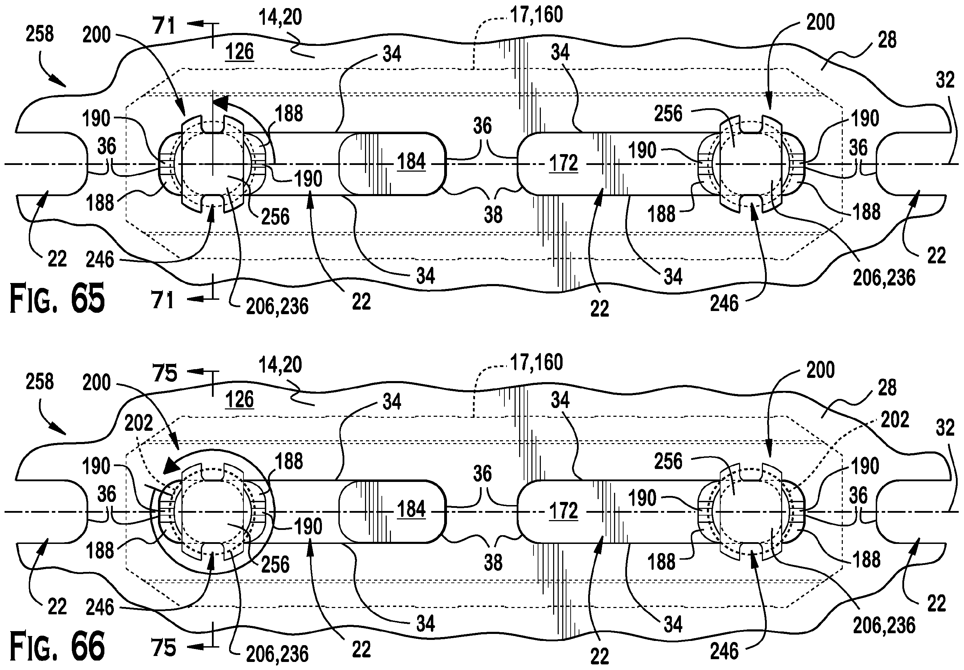

**FIGS. 65** and **73****-74** depict the accessory rail **160** and handguard **20** in a deployed configuration **264.** Referring to **FIGS. 73** and **74**, after the lock bolt **206** has been rotated, the operator may release downward pressure on the fastener head **212** to allow the coil spring **204** to bias the cylindrical head **238** into the slot. Further, this may allow the coil spring **204** to bias the top surface **254** of the elongated base **236** against the locking surface **126.**

**FIGS. 66** and **75****-76** depict the accessory rail **160** in a locked configuration **266.** Referring to **FIGS. 75-76**, after the lock bolt **206** is positioned generally transverse to the slot **22**, and two straight sidewall segments **250** of the cylindrical head **238** may be positioned in the slot **22**, the top surface **254** of the elongated base **236** may contact the locking surface **126.** The operator may then rotate the fastener head **212** with respect to the lock bolt **206**, and thereby advance the proximal fastener **202** with respect to the lock bolt **206** to securely clamp (or fix) the accessory rail **160** to the handguard **20.** For example, the distal end **224** of the proximal fastener **202** may be fixed to the end wall **194** of the larger diameter bore **192**, the bottom surface **172** of the accessory rail **160** may be fixed to the mounting surface **124** of the handguard **20**, and the top surface **254** of the elongated base **236** may be fixed to the locking surface **126** of the accessory **20** to clamp the accessory rail **160** to the handguard **20.**

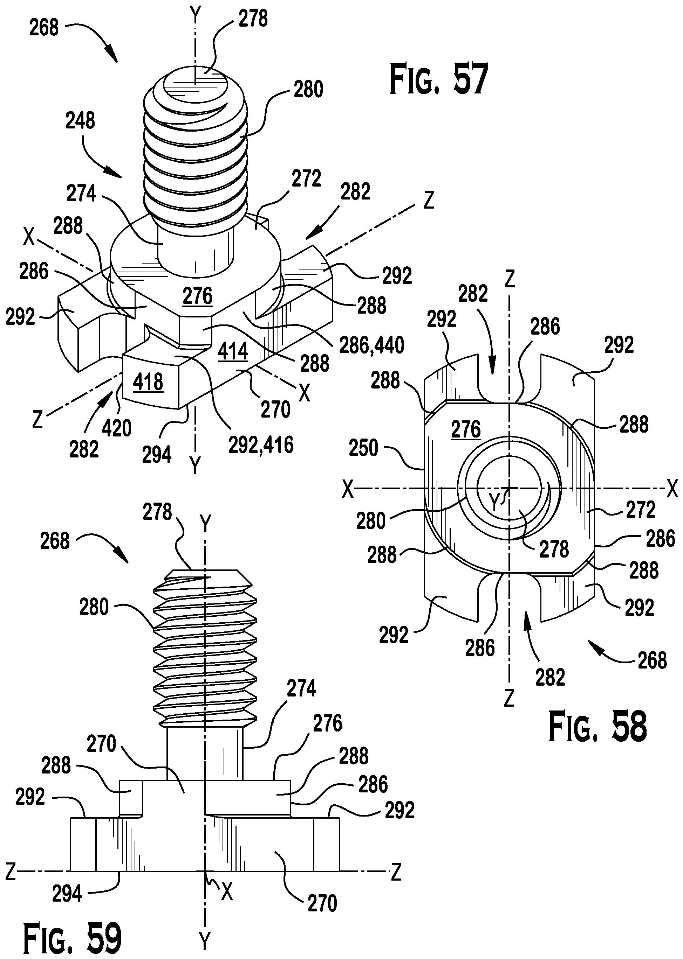

**FIGS. 57-62** show another exemplary embodiment of a T-bolt **268** in accordance with the present invention. The T-bolt is shown with a three dimensional Cartesian coordinate system. In this embodiment, the T-bolt **268** may include an elongated base **270** and a cylindrical head or (shoulder) **272.** The elongated base **270** may have a longitudinal axis along the z-axis. The cylindrical head **272** may be centrally positioned on the elongated base **270.** A shaft **274** may extend from an upper surface **276** of the cylindrical head **272** to a proximal end **278.** The shaft **274** may have a central axis along the y-axis. The shaft **274** may include screw threads **280** which are configured and dimensioned to mate with screw threads **218** on a proximal (or exterior) fastener **202** (*see e.g*., **FIG. 47**). Each end of the elongated base **270** may include a notch **282.** Each notch **282** may be aligned with the center of the shaft **274.** Referring to **FIGS. 57** and **58**, the cylindrical head **272** of the T-bolt **268** may possess a cam profile **284** perpendicular to the central longitudinal axis of the shaft **274.** The cam profile **284** may include one or more straight sidewall segments **286** and one or more curved sidewall segments **288.** The elongated base **270** of the T-bolt **268** may include an upper surface **292** and a lower surface **294.** Thus, the lower surface **294** of the elongated base **270** may lie in the x-z plane.

Referring to **FIG. 57**, the elongated base **270** may include a bottom or lower surface **294.** Further, the elongated base may include a first side **414** near the lower surface **294**, a second side **416** near the first side **414**, and a third side **418** near the first side **414** and the second side **416.** Referring to **FIG. 57** and **FIG. 60**, the elongated base **270** may include a notch **282.** The notch **282** may include a first interior sidewall **420** which extends from the second side **416** to the lower surface **294** of the elongated base.

The T-bolt **268** may further include a shoulder **272** next to the elongated base **270.** The shoulder **272** may have a longitudinal axis along the y-axis. The shoulder **272** may include a first sidewall-segment **440** near the first side **414** of the elongated base **272.** The shoulder further may include an end surface **276.** A shaft **274** may extend from the end surface **276.** The shaft **274** may include a screw thread **280** for receiving a mating fastener.

Referring to **FIG. 88**, the T-bolt **268** may include a cross-sectional profile **424** normal to the y-axis. The cross-sectional profile **424** may include a first straight wall segment **422** next to the first side **414** of the elongated base **270.** The cross-sectional profile **424** may include a second straight wall segment **426** spaced from the first straight wall segment **422.** A first curved wall segment **428** may be disposed between the first straight wall segment **422** and the second straight wall segment **424.**

A second curved wall segment **430** may be disposed between the first straight wall segment **422** and the second straight wall segment **426.** The first curved wall segment **428** may possess a first radius of curvature **R13** and the second curved wall segment **430** may possess a second radius of curvature **R14.** The first radius of curvature **R13** may be substantially equal to the second radius of curvature **R14.**

The cross-sectional profile **424** may further include a third curved wall segment **432** abutting the first straight wall segment **422**, as well as a fourth curved wall segment spaced **434** from the first straight wall segment **422.** The third curved wall segment **432** may possess a third radius of curvature **R15** and the fourth curved wall segment **434** may possess a fourth radius of curvature **R16.**

The third radius of curvature **R15** may be substantially equal to the fourth radius of curvature **R16.** And, the first radius of curvature **R13** may be substantially unequal to the third radius of curvature **R15.** For example, the third radius of curvature **R15** may be less than the first radius of curvature **R13.** Illustrative approximate values for the dimensions identified in **FIG. 88** are presented in **Table 6.** Other feature configurations or dimensions are contemplated, however, and may be implemented in other embodiments.

**Table 6**

| **Exemplary Dimensions for a Fourth Embodiment of an Interior Fastener** | |
|---|---|
| Dimension | Length (Inches) |
| **R13** | 0.163 |
| **R14** | 0.163 |
| **R15** | 0.135 |
| **R16** | 0.135 |

The cross-sectional profile **424** may further include a third straight wall segment **436** abutting the first curved wall segment **428**, as well as a fourth straight wall segment **438** abutting the third curved wall segment **432.** The third straight wall segment **436** may abut the fourth curved wall segment **434.** Additionally, the fourth straight wall segment **438** may abut the second curved wall segment **430.**

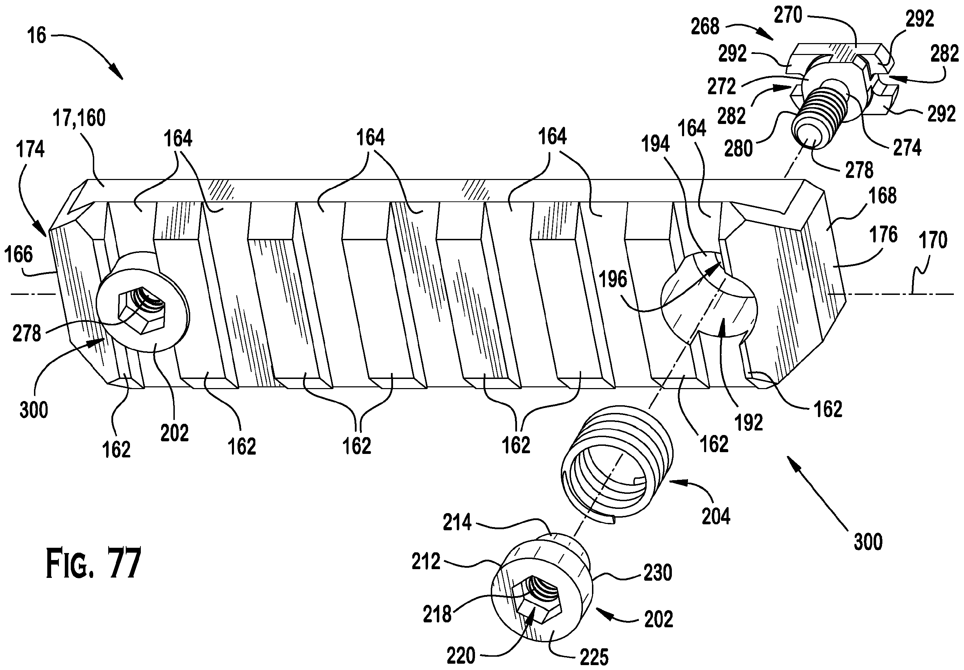

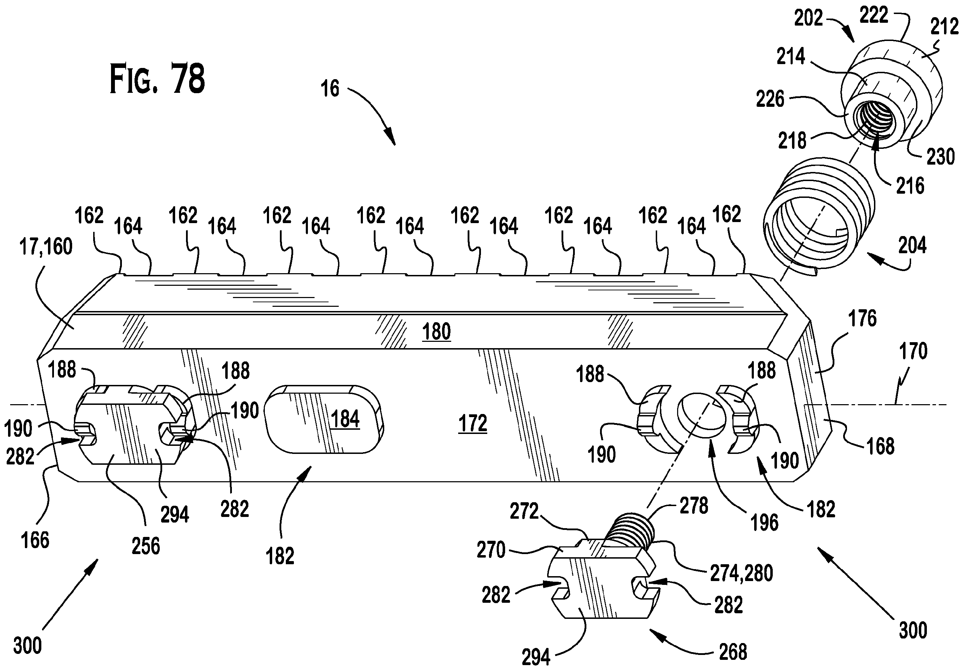

Referring to **FIGS. 77** and **78**, another embodiment of an accessory rail **160** and fastener apparatus **300** may include a fastener (e.g., nut) **202,** a resilient member (*e*.*g*., a coil spring) **204**, and a second exemplary embodiment of a T-bolt **268.** The counterbore **192**, **196** may provide a housing (*see e.g*., **FIG. 77**) and guides **188** next to the smaller diameter bore **196** on the bottom surface **172** may provide a seat **210** (see e.g., **FIG. 78**) for the fastener apparatus **300.** Additionally, the fastener **202** may include a fastener head **212,** a spring guide **214,** and a central bore **216.** The central bore **216** may include screw threads **218.** The fastener **202** may mate with the T-bolt **268.** The fastener head **212** further may include a drive slot **220.** The drive slot **220** may be a hex socket. Although the fastener **202** may include a hex socket, any suitable drive socket or shape may be used. For example, the drive slot may be a cross, square, double square or other type.

Once assembled, the fastener apparatus **300** and accessory rail **160** may operate like the fastener apparatus **18** and accessory **16** of **FIGS. 63-76****.** For example, the curved wall segments **288** of the cylindrical head **272** of each T-bolt may be positioned to allow approximately 90° of rotation in a clockwise direction (*see e.g*., **FIGS. 33** and **34**). Then an operator may insert an appropriate drive tool (not shown), such as a hex socket drive, into the drive slot **220** and depress the proximal fastener **202** sufficiently to disengage the T-bolt **268** from the guides **188** and move the elongated base **270** of the T-bolt **268** through the slot **22** past the locking surface **126** of the handguard **20** (*see e.g*., **FIGS. 39** and **40**) The operator may then rotate the driver to turn the proximate fastener **202** and T-bolt **268** coupling until the straight wall segments **286** of the cylindrical head **272** block further rotation of the T-bolt (*see e.g*., **FIGS. 35** and **40**). In this embodiment, the maximum allowable degree of rotation may be approximately 90° in a clockwise direction. After the T-bolt **268** has been rotated in this manner, the elongated base **270** may be positioned generally perpendicular to the slot **22** (*see e.g*., **FIG. 35**), and the top surface **292** of the elongated base **270** may contact the locking surface **126** (*see e.g*., **FIGS. 39-40**). The operator may then advance the fastener **202** with respect to the T-bolt **268** to securely clamp (or fix) the accessory rail **160** to the handguard **20** (*see e.g*., **FIG. 36** and **41****-42**).

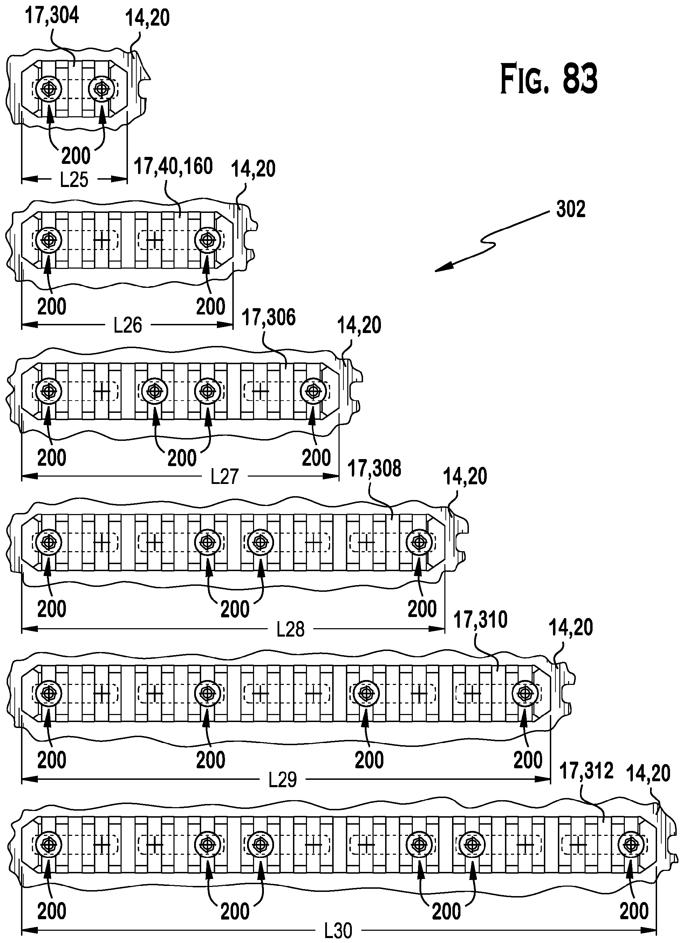

**FIG. 83** depicts an exemplary set **302** of modular accessory rails **17.** Each accessory rail **17** may have a standardized length. The standardized length of each accessory rail **17** may be different. Additionally, the accessory rails **17** may be configured and dimensioned to connect with and cover one or more slots **22** on an object **14** (*see. e.g*., handguard **20**).

For example, one accessory rail **17**, **304** may be configured and dimensioned to connect with and cover one slot **22** on an object **14.** This accessory rail **17**, **304** may be referred to as a "1-slot" accessory rail. In another example, an accessory rail **17**, **160** may be configured and dimensioned to connect with and cover two adjacent slots **22** on an object **14.** This accessory rail **17**, **160** may be referred to as a "2-slot" accessory rail. In another example, an accessory rail **17**, **306** may be configured and dimensioned to connect with and cover three adjacent slots **22** on an object **14.** This accessory rail **17**, **306** may be referred to as a "3-slot" accessory rail. In another example, an accessory rail **17**, **308** may be configured and dimensioned to connect with and cover four adjacent slots **22** on an object **14.** This accessory rail **17**, **308** may be referred to as a "4-slot" accessory rail. In yet another example, an accessory rail **17**, **310** may be configured and dimensioned to connect with and cover five adjacent slots on an object **14.** This accessory rail **17**, **310** may be referred to as a "5-slot" accessory rail. In yet another example, an accessory rail **17**, **312** may be configured and dimensioned to connect with and cover six adjacent slots on an object **14.** This accessory rail **17**, **312** may be referred to as a "6-slot" accessory rail.

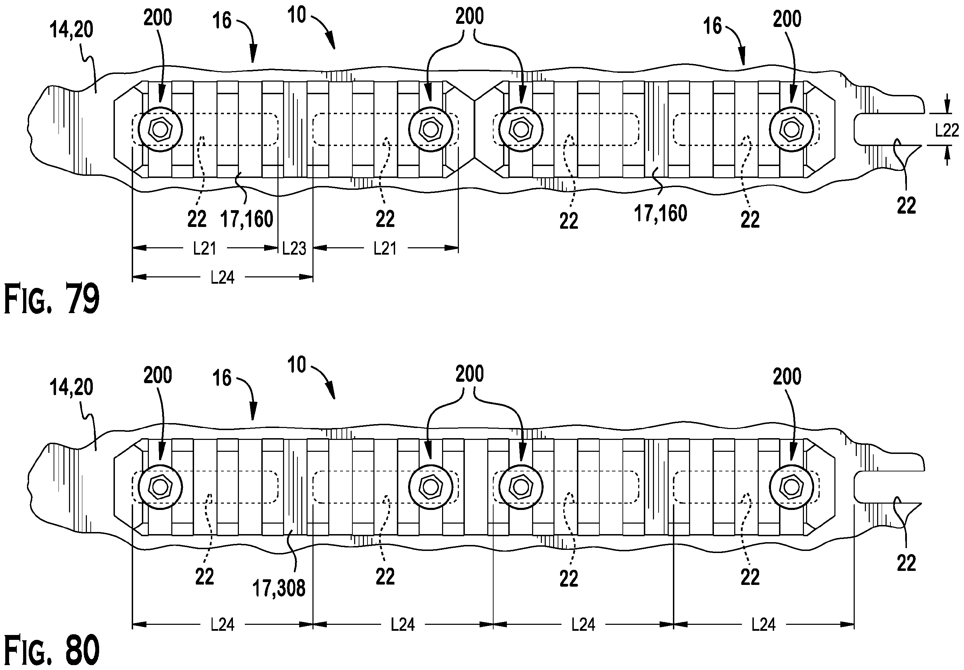

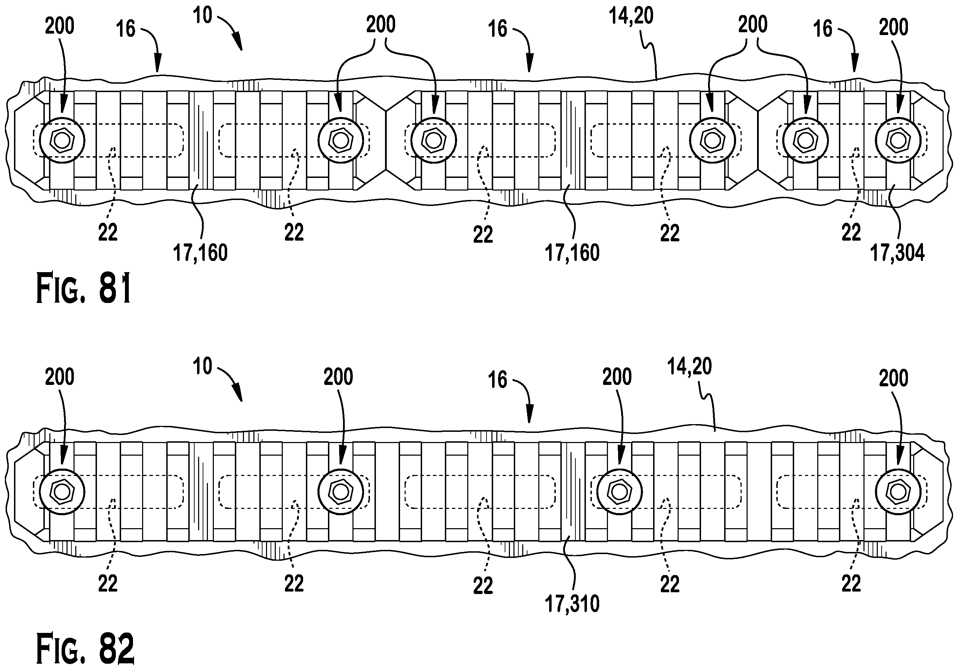

Accordingly, a 3-slot accessory rail may be configured to mate with and cover three adjacent slots **22** on the handguard **20** of **FIG.1****.** And, a 4-slot accessory rail may be configured to mate with and cover four adjacent slots **22** on the handguard **20** of **FIG. 1****.** Moreover, four adjacent slots **22** on a handguard **20** may be mated with two 2-slot accessory rails **17**, **160** or one 4-slot accessory rail **17**, **308** (*see e.g*., **FIG. 79** and **FIG. 80**, respectively). Similarly, five adjacent slots **22** on a handguard **20** may be mated with two 2-slot accessory rails **17,160** and one 1 -slot accessory rail **17**, **302** or by one 5-slot accessory rail **17**, **310** (*see e.g*., **FIG. 81** and **FIG. 82**, respectively). Hence, a set **302** of modular accessory rails of differing lengths and identified by slot counts may be developed for use with a universal interface system in accordance with the present invention.

For example, as shown in **FIG. 79**, each slot **22** may have a length **L21** and a width **L22.** The slots **22** may be spaced from each other by a length **L23.** The proximal ends of two adjacent slots **22** may be spaced from each other by a distance **L24.** Also, the dimension **L24** measured from the proximal end of a first slot **22** to the proximal end of an adjacent slot may be identified as a slot spacing span. Illustrative values for the dimensions disclosed in **FIG. 79** are presented in **Table 7.** Other feature configurations and dimensions, however, may be implemented in other embodiments.

**Table 7**

| **Exemplary Dimensions for a Slotted Object** | |
|---|---|
| Dimension | Length (Inches) |
| **L21** | 1.270 |
| **L22** | 0.2785 |
| **L23** | 0.305 |
| **L24** | 1.575 |

Referring to **Table 1** and **Table 7**, the slot spacing span **L24** and the second accessory feature span **L14** may be the same length. Additionally, referring **FIG. 83**, a "n-slot rail" - where n is the number of slots covered by the rail - the length **LN** of the rail may be approximately equal to the number of slots **n** multiplied by the slot spacing span **L24** of an associated slotted object. For example, the slotted object of **FIG. 79** may have a slot spacing span **L24** of 1.575 inches, and one accessory rail may cover n=2 slots. Thus, the length of the 2-slot accessory rail may be approximately equal to the product of 2 and 1.575 inches or 3.145 inches. Similarly, the 4-slot accessory rail of **FIG. 80** may have a length of 4^{∗}1.575 inches or approximately 6.300 inches.

**Table 8** presents illustrative values for the set **302** of standardized modular accessory rails **17** of **FIG. 83****.** Other feature configurations and dimensions, however, may be implemented in other embodiments.

**Table 8**

| **Illustrative Standardized Lengths for a Set of Modular Accessory Rails** | | | |
|---|---|---|---|
| Description | Dimension | Slot Spacing Span (Inches) | Approximate Length (Inches) |
| 1-Slot Accessory Rail | **L25** | 1.575 | 1.575 |
| 2-Slot Accessory Rail | **L26** | 1.575 | 3.150 |
| 3-Slot Accessory Rail | **L27** | 1.575 | 4.725 |
| 4-Slot Accessory Rail | **L28** | 1.575 | 6.300 |
| 5-Slot Accessory Rail | **L29** | 1.575 | 7.875 |
| 6-Slot Accessory Rail | **L30** | 1.575 | 9.450 |

Hence, a universal interface system may include a slotted object with two or more elongated slots, and an accessory mounted on to the slotted object. The slotted object may include a plurality of slots. Each of the slots may have approximately the same shape and dimensions. Further, the accessory may include features (*e*.*g*., a projection, a seat, etc.) that fit into one or more of the slots (*see e.g*., **FIG. 5**)**.** Adjacent slots may have a slot spacing span **L24** of approximately a first distance. Similarly, the accessory may have a second accessory feature span **L14** of approximately a second distance. The first distance and the second distance may be substantially equal. Further, the accessory may cover the adjacent slots. Moreover, the approximate length of a rail that covers **n** slots may be equal to the number of covered slots n multiplied by the slot spacing span **L24** of the slotted object.

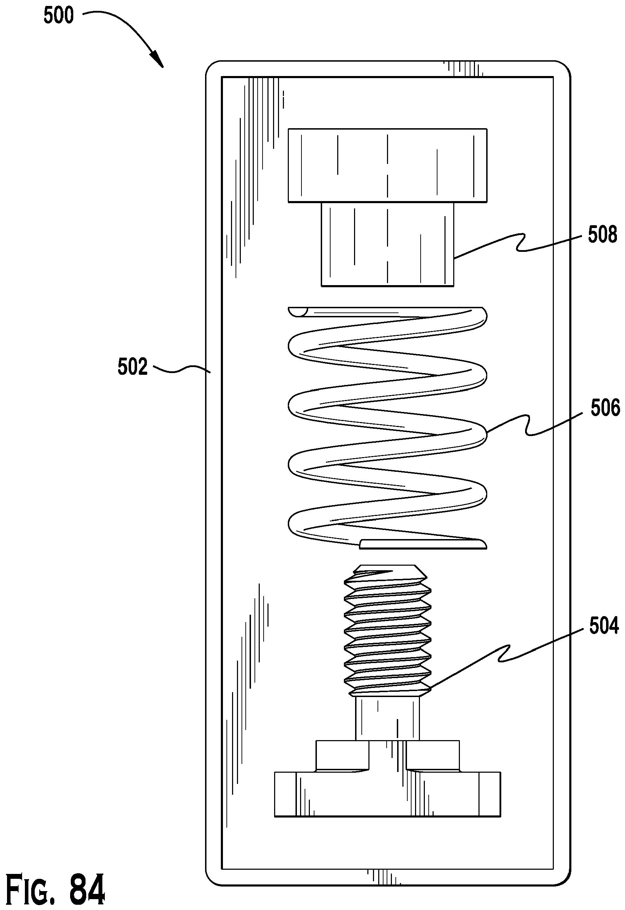

**FIG. 84** shows a kit **500** for use with an accessory **16** and a universal interface system **10** in accordance with the present invention. The kit may include a sealed container **502.** Inside the sealed container **502**, the kit may include an interior fastener **504**, a resilient member **506**, and an exterior fastener **508.** The interior fastener **504** and exterior fastener **508** may be selected from any of the complementary pairs of fastener parts disclosed herein. For instance, in one embodiment the kit **500** may include a lock bolt **206** of **FIG. 51**, a mating fastener **202** of **FIG. 47**, and a coil spring **80** of **FIG. 18****.** In another embodiment, the kit **500** may include a lock nut **136** of **FIG. 27**, a mating fastener **78** of **FIG. 14****,** and a coil spring **80** of **FIG. 18****.** In another embodiment, the kit **500** may include a T-nut **82** of **FIG. 21**, a mating fastener **78** of **FIG. 14**, and a coil spring **80** of **FIG. 18****.** In yet another embodiment, the kit **500** may include a T-bolt **268** of **FIG. 57**, a mating fastener **202** of **FIG. 47**, and a coil spring **80** of **FIG. 18****.** The kit **500** may be used to create a fastener apparatus **18**, **200**, **300** and an accessory **16.** Although the kit may be used to create accessory rails, the kit may be used to create other accessories that may be used with the universal interface system. For example, the kit may be used to create a foregrip, tactical light, or sling mount that may be secured directly to a slotted object of the universal interface system. The slotted object may be the handguard of **FIG. 1****.**

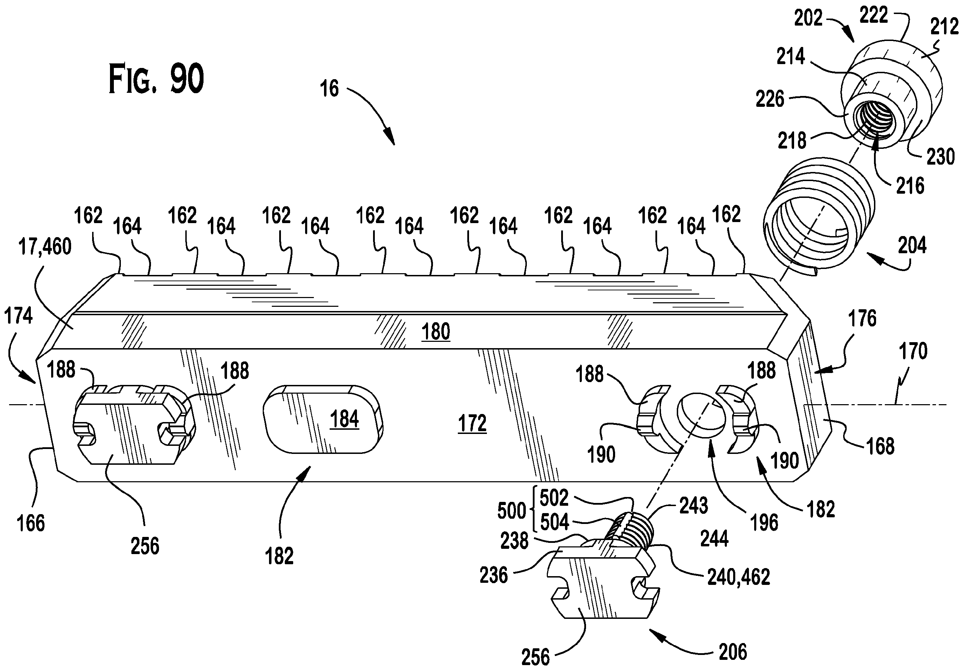

**FIGS. 89** and **90** depict a third exemplary embodiment of an accessory rail **460** in accordance with the present invention. The accessory rail **460** may include structural features and dimensions as described in connection with the second exemplary embodiment of an accessory rail **160** disclosed in **FIGS. 43** and **44****.** For example, the accessory rail **460** may include a top surface **162.** The top surface **162** may include plurality of parallel grooves **164.** Each of the parallel groves **164** may have a rectangular cross section (*see e.g*., **FIG. 45**). Although the accessory rail **460** may comply with MIL-STD-191, the rail **460** may conform to other mounting rail standards or form any shape or configuration which may serve a particular use or application. The accessory rail **460** further may include a distal end **166** and a proximal end **168.** Additionally, the accessory rail **460** may possess a longitudinal axis **170** extending from the distal end **166** to the proximal end **168.** The distal end **166** and the proximal end **168** may be flat surfaces. The distal end surface **174** and the proximal end surface **176** may be parallel surfaces (*see e.g.* **FIG. 45**).

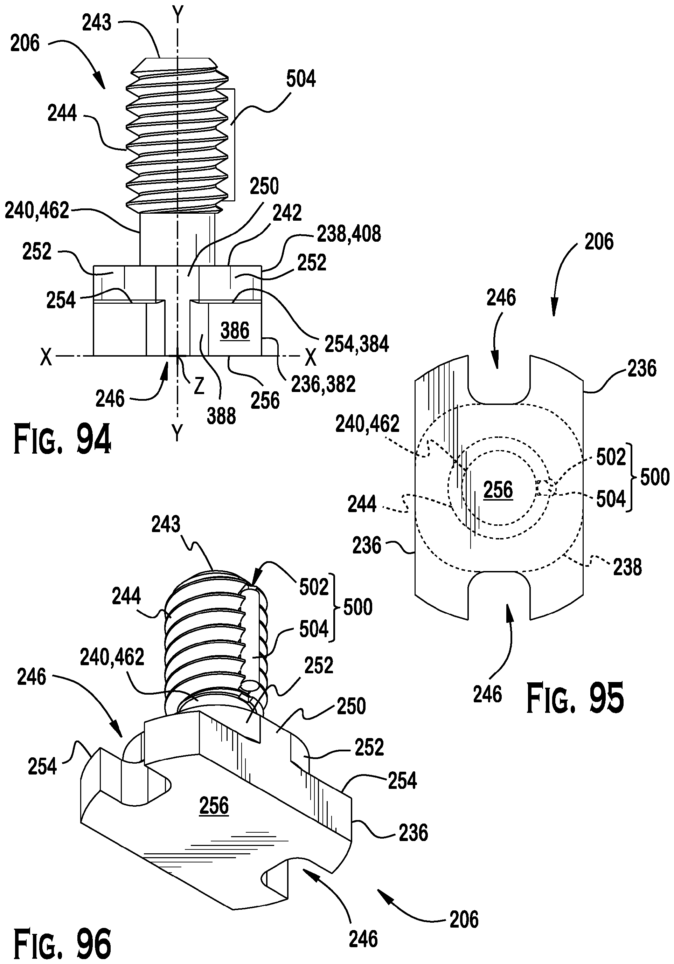

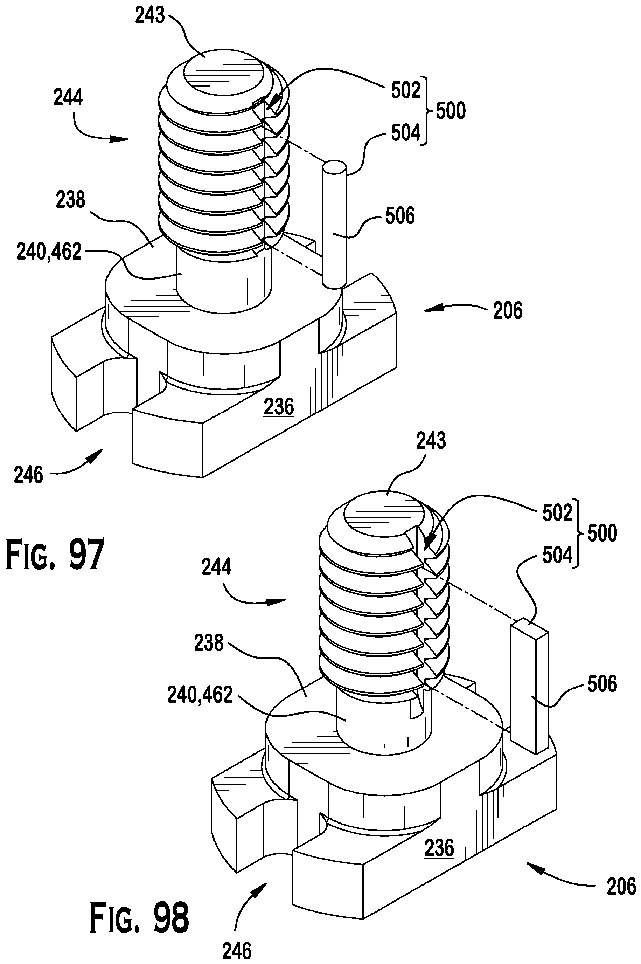

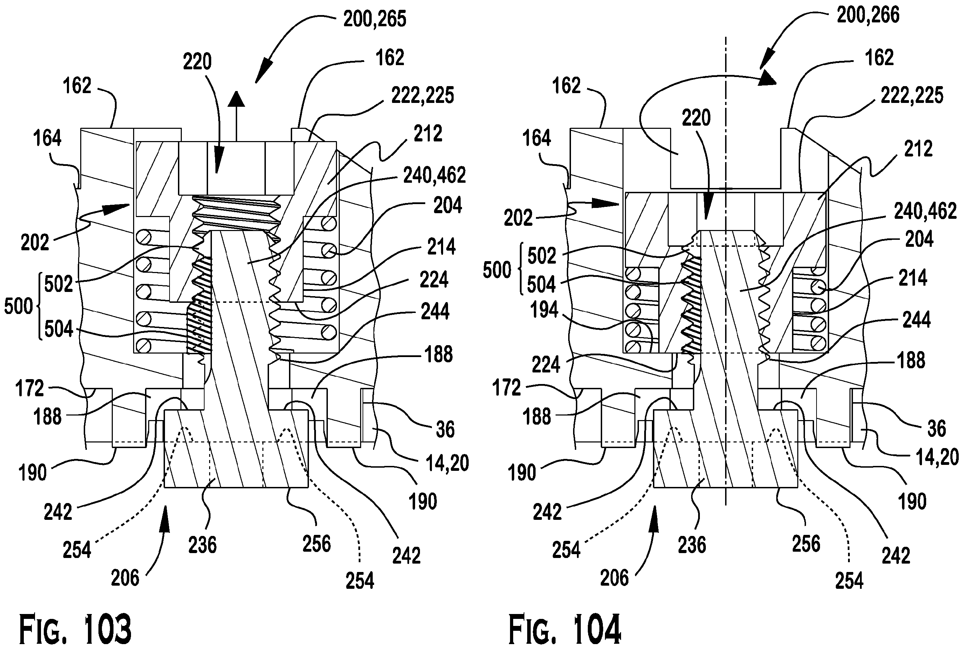

Additionally, the fastener apparatus **200** of **FIGS. 89** and **90** may include a fastening aid **500.** For instance, the T-bolt shaft **240** of the fastener apparatus **200** may include a fastening aid **500.** **FIGS. 91-97** and **99-106** disclose a second exemplary embodiment of a T-bolt shaft **240**, **462**, **FIG. 106** discloses a third exemplary embodiment of a T-bolt shaft **240**, **464**, **FIG. 107** discloses a fourth exemplary embodiment of a T-bolt shaft **240**, **466**, **FIG. 108** discloses a fifth exemplary embodiment of a T-bolt shaft **240**, **468**, **FIG. 109** discloses a sixth exemplary embodiment of a T-bolt shaft **240**, **470**, **FIGS. 98** and **110** disclose a seventh exemplary embodiment of a T-bolt shaft **240**, **472**, **FIGS. 124-131** disclose an eighth exemplary embodiment of a T-bolt shaft **240**, **474**, **FIGS. 138-145** disclose a ninth exemplary embodiment of a T-bolt shaft **240**, **476**, and **FIGS. 146-****153** disclose a tenth exemplary embodiment of a T-bolt shaft **240**, **478.**

Referring to **FIGS. 43** and **44** the fastener **202** of the fastener apparatus **200** may include a fastening aid **500.** **FIGS. 111-114** and **116-119** disclose a second exemplary embodiment of a fastener bore **216**, **480** with a fastening aid **500**; **FIGS. 115** and **120** disclose a third exemplary embodiment of a fastener bore **216**, **482** with a fastening aid **500**; **FIG. 121** discloses a fourth exemplary embodiment of a fastener bore **216**, **484** with a fastening aid **500**; **FIG. 122** discloses a fifth exemplary embodiment of a fastener bore **216**, **486** with a fastening aid 500 with a fastening aid **500**; **FIG. 123** discloses a sixth exemplary embodiment of a fastener bore **216**, **488** with a fastening aid **500**; **FIGS. 132-137** disclose a seventh exemplary embodiment of a fastener bore **216**, **490**, and **FIGS. 156-159** disclose an eighth exemplary embodiment of a fastener bore **492.**

Referring to **FIGS. 89** and **90**, the T-bolt (or interior fastener) **206** may include a shaft **240**, **462** which extends upward through the smaller diameter bore **196** of the accessory rail **460.** The shaft **240**, **462** further may include a threaded portion **244** near the proximal end **243** of the shaft. The threaded portion **244** of the shaft **240**, **462** may include a groove **502.** The groove **502** may be milled into the screw threads **244** of the shaft. The groove **502** may be deburred of any edges, and the T-bolt may be finished or coated. For example, without limitation, the part may be finished in accordance with MIL-STD-171 5.3.1.2-4 Black (31 May 2011).

The groove (or thread locking insert area) **502** may receive a thread locking insert **504.** The thread locking insert **504** may include a resilient bar of nylon which is inserted into the groove **502.** When assembled with a mating part (*e*.*g*., fastener **202**), the resilient bar of nylon may be compressed. This compression may exert a force 180° opposite, increasing metal to metal contact and holding the fastener **202** in place without adhesives or thread distortion. In this manner, an engineered plastic strip may provide locking action in the thread instead of at the bearing surface. The engineered plastic strip further may provide effective locking action under high and low temperature extremes. Also, the T-bolt **206** or the mating fastener **202** may be repeatedly adjusted due to the compressibility, resiliency, and resistance to deformation of the engineered plastic strip. In some embodiments, the engineered plastic strip may comply with MIL - DTL - 18240F (02 Mar 1997) and/or Amendment 1 (13 Mar 2000). Generally, the engineered plastic strip may be an ND Strip® manufactured by ND Industries, Inc., 1000 North Crooks Road, Clawson, MI 48017. Also, the engineering plastic strip may be a Nylok® Blue™ Nylon Strip manufactured by Nylok, LLC, 15260 Hallmark Court, Macomb, MI 48042.

Accordingly, the fastening aid **500** may facilitate a secure fit between the shaft **240**, **462** and the fastener **202.** The secure fit may promote operation of the fastener apparatus. For example, the fastening aid **500** may facilitate a secure fit between the shaft **240**, **462** and the fastener **202** which allows the T-bolt **206** and mating fastener **202** to move in unison when manipulated from a ready configuration **258** (*see e.g*., **FIGS. 67** and **68**) to a rotated configuration **262** (*see e.g*., **FIG. 71** and **72**). Further, the fit may allow the T-bolt **206** and mating fastener **202** to translate relative to each other when the fastener **202** is manipulated from a deployed configuration **264** (*see e.g*., **FIGS 73** and **74**) to a locked configuration **266** (*see e.g*., **FIGS. 75** and **76**). Moreover, these actions may be repeatedly performed and reversed due to the compressibility, resiliency, and resistance to deformation of the engineered plastic strip, including under high and low temperature extremes.

Referring to **FIG. 93**, the groove **502** may possess a width **L31** of approximately 0.023 inches and a length **L32** of approximately 0.180 inches. The groove **502** may be spaced from the proximal end **243** of the shaft **240**, **462** by approximately 0.050 inches. The engineered plastic strip may have a width of 0.030 inches. The thread locking insert **504** may include one or more segments of material. Generally, the material may be an engineered material or a suitable natural material. For example, one suitable natural material may be rubber. Preferably, however, the material may be an engineered material. More preferably, the engineered material may be an engineered plastic material (*e.g*., nylon, nylon 6/6, polyether ether ketone (PEEK), teflon, or other polymer based materials, which may include commercially available proprietary mechanical thread locking and sealing products).

As shown in **FIGS. 97** and **98**, the fastening aid **500** may include thread locking insert **504** constructed from a single segment **506** of material. In **FIG. 97**, the segment **506** may be a generally circular cylindrical strip of material. In **FIG. 98**, the segment **506** may be a rectangular strip of material. The segment **506**, however, may have other cross-sectional shapes or forms. The thread locking insert **504** may be secured to the shaft **240**, **462** by an interference fit with the groove **502.** Other fastening techniques may be used to supplement or replace an interference fit between the thread locking insert **504** and the shaft **240**, **462.**

Referring to **FIGS. 91-97**, the groove **502** may have a longitudinal axis which is generally parallel to the longitudinal axis of the shaft **240**, **462.** Referring to **FIGS. 105** and **106**, the groove **502** may include a cross-section taken perpendicular to the longitudinal axis of the groove. The cross-section of the groove may have a generally U-shape profile. Although, the base of the groove is shown approximately at a depth approximately equal to the depth of the screw threads **244**, the base of the grove may be set at other depths within the shaft **240**, **462.** For example, the groove **502** may have a generally U-shaped profile with a shallower base such that the groove is not as deep as the screw threads **244.** In another example, the groove **502** may have a generally U-shaped profile with a deeper base such that the groove **502** is deeper than the screw threads **244.** Moreover, the cross-section of the groove **502** may have another shape provided that the groove **502** can properly and securely receive the thread locking insert **504.**

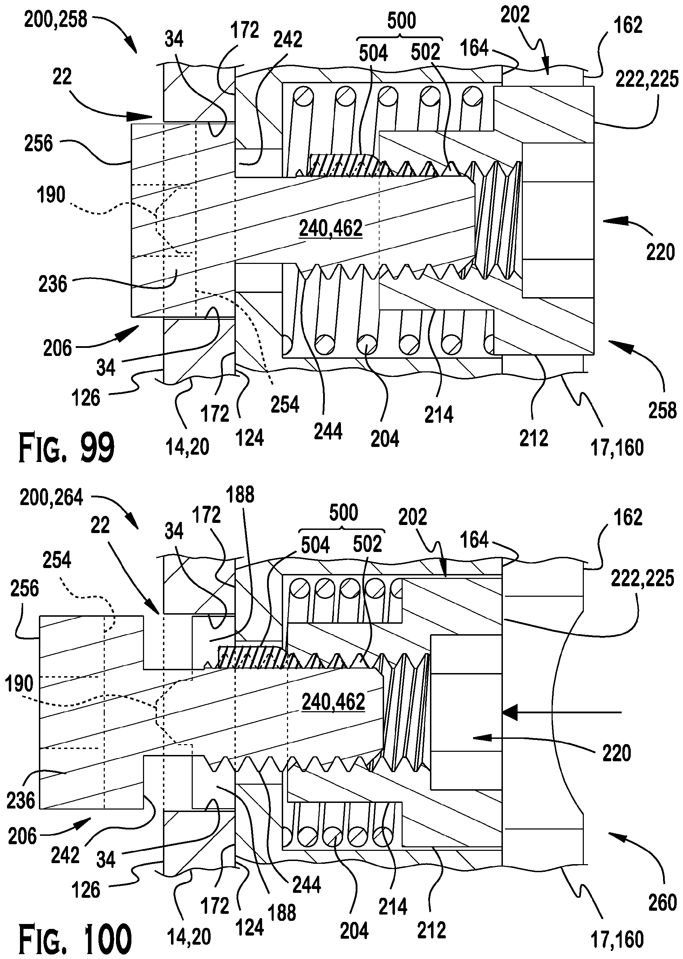

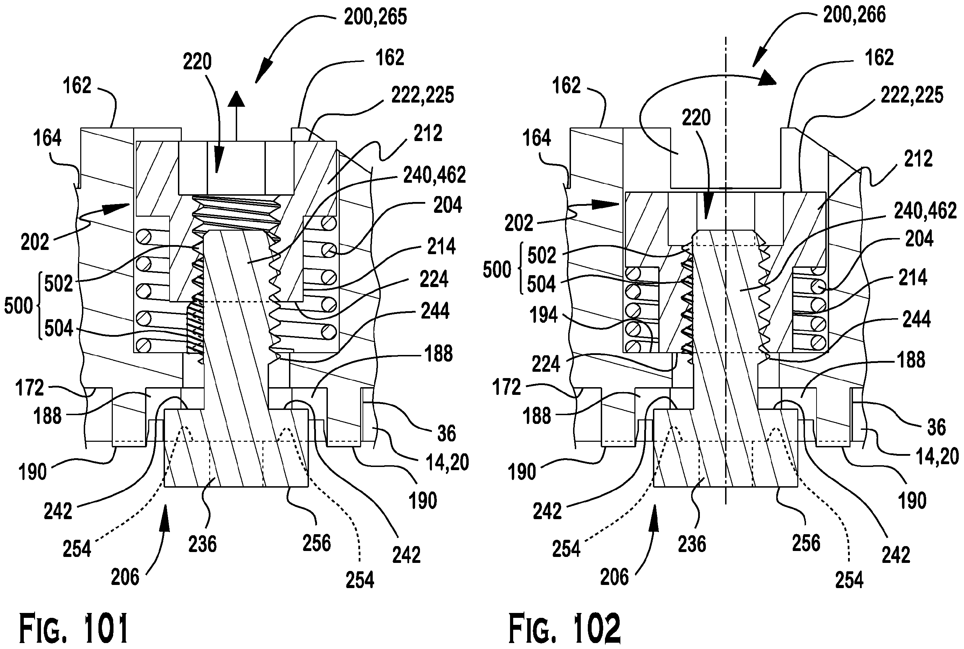

Referring to **FIGS. 99-104**, the fastening aid **500** may be compressed between the shaft **240**, **462** and the mating fastener **202.** As shown in **FIG. 99** and **100**, the thread locking insert **504** may be disposed near the proximal end of the shaft **240**, **462** such that as the mating fastener **202** advances down the shaft **240**, **462**, the thread locking insert **504** may be compressed between the mating screw threads **218**, **244** and the groove **502.** The fastener **202**, T-bolt **206** and compressed portion of the thread locking insert **504** may form a coupling which facilitates controlled movement of the T-bolt and fastener in unison when the fastener apparatus is manipulated from a ready configuration **258** (e.g., **FIG. 99**) to a deployed configuration **264** (*see e.g*., **FIG. 100**), and a latched configuration **265** (*see e.g*., **FIG. 101**). Further, as the fastener **202** is advanced on the shaft **240**, **246** and the slotted object **14** is clamped between the T-bolt **206** and the bottom surface **172** of the accessory rail **460** to achieve a locked configuration **266** (*see e.g*., **FIG. 102**), any remaining uncompressed length of the thread locking insert **504** may be compressed between the mating screw **218**, **244** and the groove **502** and may more evenly distribute forces acting between the fastener **202** and the shaft **240**, **462.** The forces acting between the fastener **202**, the shaft **240**, **462**, and the thread locking insert **504** may provide a secure connection by preventing inadvertent slippage between the fastener **202** and the shaft **240, 462** which may otherwise result from vibrations or impact forces acting upon the accessory rail **460** during use.

Still further, **FIGS. 105-110**, show illustrative fastening aid configurations **500** for the shaft **240** of a T-bolt **206** which may be used in the fastener apparatus **200** of **FIGS. 89** and **90****.**

In **FIG. 105**, the shaft **240**, **462** may have a fastening aid **500** which includes a segment **506** of material (*e*.*g*., nylon) that is disposed within a groove **502** cut in the screw threads **244** of the shaft **240**, **462** at a location adjacent to the first wall segment **390.**

In **FIG. 106****,** the shaft **240, 464** may have a fastening aid **500** which includes a segment **506** of material (*e*.*g*., nylon) that is disposed within a groove **502** cut in the screw threads **244** of the shaft **240**, **464** at a location adjacent to the third straight wall segment **404.**

In **FIG. 107**, the shaft **240, 466** may have a fastening aid **500** which includes two segments **506** of material (*e*.*g*., nylon). One segment **506** of material may be disposed within a groove **502** cut in the screw threads **244** at a location adjacent the first straight wall segment **390,** and a second segment **506** of material may be disposed within a groove **502** cut in the screw threads **244** at a location adjacent to the second straight wall segment **394.**

In **FIG. 108**, the shaft **240, 468** may have a fastening aid **500** which includes three segments **506** of material (*e*.*g*., nylon). Each of the three segments **506** of material may be disposed within a groove **502.** Each groove **502** may be cut in the screw threads **244.** The grooves **502** may be spaced equally about the circumference of the shaft **240**, **468**, and thus the grooves **502** may be spaced approximately at 120° intervals. One groove **502** may be located adjacent to the first straight wall segment **390.**

In **FIG. 109**, the shaft **240**, **470** may have a fastening aid **500** which includes four segments **506** of material (*e*.*g*., nylon). Each of the four segments **506** of material may be disposed within a groove **502.** Each groove **502** may be cut in the screw threads **244.** The grooves **502** may be spaced equally about the circumference of the shaft **240**, **470**, and thus the grooves **502** may be spaced approximately at 90° intervals. One groove **502** may be located adjacent to the first straight wall segment **390.**

In **FIG. 110**, the shaft **240**, **472** may have a fastening aid **500** that includes a segment **506** of material (*e*.*g*., nylon 6/6) that is disposed within a groove **502** cut in the screw threads **244** at a location adjacent the first wall segment **390.** The groove **502** may extend into the shaft **240**, **472** beyond the base of the screw thread. The segment **506** of material may have a rectangular cross-section perpendicular to the longitudinal axis of the segment.

Referring to **FIGS. 124-131**, the shaft **240**, **474** may have a fastening aid which is disposed circumferentially around the screw threads near the proximal end **243** of the shaft. As shown in **FIGS. 130** and **131** the fastening aid **500** may be received in a circumferential groove **508.** The circumferential groove **508** may include a cross-section taken through the longitudinal axis of the shaft **240, 474.** The cross-section of the circumferential groove **508** may have a generally U-shape profile. Although, the base of the groove **508** is shown approximately at a depth approximately equal to the depth of the screw threads, the base of the circumferential groove **508** may be set at other depths within the shaft. For example, the circumferential groove **508** may have a generally U-shaped profile with a shallower base such that the circumferential groove **508** is not as deep as the screw threads. In another example, the circumferential groove **508** may have a generally U-shaped profile with a deeper base such that the circumferential groove **508** is deeper than the screw threads. Moreover, the cross-section of the circumferential groove **508** may have another shape provided that the circumferential groove **508** can securely receive the thread locking insert **504.** The thread locking insert **504** may be compressed between the shaft **240**, **476**, the fastener **202**, and the circumferential groove **508.** As shown in **FIG. 130**, the fastening aid **500** may be disposed near the proximal end **243** of the shaft **240**, **474** such that as the fastener **202** advances down the shaft, the thread locking insert **504** is compressed between the mating screw threads **218**, **244** and the circumferential groove **508.** As shown in **FIG. 131**, the thread locking insert **504** may be retained within the circumferential groove **508** in the shaft **240, 474** as the fastener **202** advances down the shaft.

Referring to **FIGS. 138-145**, the shaft **240**, **476** may have a fastening aid **500** which is disposed on the screw threads **244.** The fastening aid **500** may include a material which is applied to the screw threads **244** as a liquid, aerosol, or film. Although a liquid, aerosol or film based coating of material **510** may be applied to the entire threaded portion of the shaft **240, 476,** the coating of material **510** may be applied to a selected portion of the screw threads **244.** For example, the coating of material **510** may be applied in a patch on one localized portion of the screw threads **244** or as a band which circumscribes an area of the screw threads **244.** For example, nylon may be bonded to the screw threads **244** to form a patch (*e*.*g*., approximately 90-120° coverage) or a band (360° degree coverage) about the screw threads. Generally, 1-2 threads near the proximal end **243** of the shaft **240**, **476** may remain uncovered and the next 4-6 threads may be covered by the patch or band. Other patch or band locations and coverage may be implemented as appropriate for a given application or material. One material which may be used to create a fastening aid **500** on the screw threads **244** of the shaft **240**, **476** may be Loctite® Threadlocker Blue 242® manufactured by Henkel Corporation, 26235 First Street, Westlake Ohio 44145. Another material may be Nylok® Blue Nylon Torq-Patch® Tuflok® manufactured by Nylok, LLC located at 15260 Hallmark Court, Macomb, MI 48042-4007. For instance, when the Nylok® Blue Nylon Torq-Patch® Tuflok® is engaged, it may create a wedge between the fastener **202** and the shaft **240**, **476** compressing the nylon and creating metal to metal contact opposite the patch. The metal to metal between the screw threads **218**, **244** may result in a positive resistance to vibration and loosening. Also, a Teflon (PTFE) tape may be wrapped on (or otherwise applied) to the screw threads **240**, **476** serve as a fastening aid **500.**

Referring to **FIGS. 146-153**, the shaft **240**, **478** may have a fastening aid **500** which includes a plug or pellet **512** of material which may be disposed in a transverse bore **514** within the screw threads **244** and the shaft. Generally, the plug or pellet **512** may be formed from an engineered plastic material, a metal, an alloy or other material. As shown in **FIGS. 152** and **153**, the plug or pellet **512** may be retained within the transverse bore **514** as the fastener **202** advances down the shaft **240**, **478.** The plug or pellet **512** may create a wedge between the fastener **202** and the shaft **240**, **478** compressing the material (*e*.*g*. nylon) and creating metal to metal contact opposite the plug or pellet **512.** Metal to metal contact may result in a positive resistance to vibration and loosening. The plug or pellet **512** may be a replaceable part of the fastener apparatus **200.** The shape and placement of the plug or pellet **512** may vary based on the application. Additionally, the fastening aid **500** may be implemented with more than one transverse bore **514** and its associated plug or pellet **512.** Accordingly, the fastening aid **500** may be a plug or pellet **512** of oversized nylon which is wedged into a transverse bore **514** in the screw threads **244** of the shaft **240**, **478.**

Referring to **FIGS. 111-114** and **116-119**, the fastener **202** of the fastener apparatus **200** may include a fastening aid **500.** For example, the fastener bore **216, 480** may include a fastening aid **500** which includes a thread locking insert **504** that is disposed within a groove **516** cut in the screw threads **218** of the fastener bore **216, 480.** As shown in **FIGS. 115** and **116**, the fastening aid **500** may include a thread locking insert **504** constructed from a single segment **506** of material. In **FIG. 115**, the segment **506** may be a generally circular cylindrical strip of material. In **FIG. 116**, the segment **506** may be a rectangular strip of material. The segment, however, may have other cross-sectional shapes or forms. The thread locking insert **504** may be secured to the fastener bore **216**, **480** by an interference fit with the groove **516.** Other fastening techniques may be used to supplement or replace an interference fit between the thread locking insert **504** and the groove **516.** As shown in **FIGS. 117** and **118**, the thread locking insert **504** may be retained within the groove **516** as the fastener **202** advances down the shaft **240.** The thread locking insert **504** may create a wedge between the fastener **202** and the shaft **240** compressing the material and creating metal to metal contact opposite the thread locking insert **504.** This may result in a positive resistance to vibration and loosening.

**FIGS. 119-123**, show illustrative fastening aid **500** configurations for the fastener bore **216** of the fastener apparatus **200** of **FIGS. 43** and **44****.** In **FIG. 119**, the fastener bore **216**, **480** may have a fastening aid **500** which includes a segment **506** of material that is disposed within a groove **516** cut into the screw threads **218** and abutting portions of the fastener. In this embodiment, the segment **506** may be a rectangular strip of material. In **FIG. 120**, the fastener bore **216**, **482** may have a fastening aid **500** which includes a segment **506** of material that is disposed within a groove **516** cut into the screw threads **218** of the fastener **202.** In this embodiment, the segment **506** may be a circular cylindrical strip of material.

In **FIG. 121**, the fastener bore **216**, **484** may have a fastening aid **500** which includes two segments **506** of material that are each disposed within a groove **516** cut into the screw threads of the fastener. The grooves **516** may face one another. In this embodiment, the segments **506** may be a circular cylindrical strip of material.

In **FIG. 122****,** the fastener bore **216, 486** may have a fastening aid **500** which includes three segments **506** of material which may each be disposed within a groove **516** cut into the screw threads **218** of the fastener **202.** The grooves **516** may be evenly spaced about the fastener bore, and thus the channels may be spaced at approximately 120° intervals. In this embodiment, the segments **506** may be circular cylindrical strips of material.

In **FIG. 123****,** the fastener bore **216, 488** may have a fastening aid **500** which includes four segments **506** of material each of which may be disposed within a groove **516** cut into the screw threads **218** of the fastener **202.** The channels may be evenly spaced about the fastener bore, and thus the grooves **516** may be spaced at approximately 90° intervals. In this embodiment, the segments **506** may be a circular cylindrical strip of material.

Referring to **FIGS. 132-137****,** the fastener bore **216, 450** may have a fastening aid **500** which includes a thread locking insert **504** in the shape of a ring. The ring of material may be disposed in a circumferential groove **518** within the screw threads **218.** The thread locking insert may be constructed from an engineered plastic material. As shown in **FIGS. 136** and **137**, the thread locking insert **504** may be retained within the circumferential groove **518** as the fastener **202** advances down the shaft **240.** The ring of material may create a wedge between the fastener **202** and the shaft **240** compressing the thread locking insert **504** and creating positive resistance to vibration and loosening.

Referring to **FIGS. 154-159**, the bore **216**, **490** may have a fastening aid **500** which includes a thread locking insert **504** in the form of a plug or pellet **512** that is disposed in a transverse bore **520** within the screw threads **218.** The transverse bore **520** may extend into the fastener. The plug or pellet **512** may be constructed from an engineered plastic material, a suitable metal, alloy or other appropriate material. As shown in **FIGS. 158** and **159****,** the plug or pellet **512** may be retained within the transverse bore **520** as the fastener **202** advances down the shaft **240.** The plug or pellet **512** may create a wedge between the fastener **202** and the shaft **240** compressing the thread locking insert **504** and creating metal to metal contact opposite the plug or pellet **512.** This may result in a positive resistance to vibration and loosening. The plug or pellet **512** may be a replaceable part of the fastener apparatus **200.**

Accordingly, the fastener apparatus **200** may incorporate a fastening aid **500.** Generally, the fastening aid **500** may be associated with external screw threads **244** of the fastener apparatus, internal screw threads **218** of the fastener apparatus, or a combination thereof. The fastening aid **500** may facilitate operation of fastener apparatus **200** by forming a coupling with the interior fastener **206** and exterior fastener **202.** The coupling may provide controlled movement of the internal fastener **206** and the external fastener **202** in unison when the fastener apparatus **200** is manipulated between a ready configuration **258** (*e.g*., **FIG. 99**) and a deployed configuration **264** (see e.g., **FIG. 100**).

Referring to **FIGS. 89** and **90****,** the threaded portion **244** of the shaft may mate with a nut (or exterior fastener) **202** which may include a centrally aligned bore **216** having mating screw threads **218.** The nut **202** may include a proximal portion or head **212.** The proximal end surface **225** of the nut (or exterior fastener) **202** may include a drive slot **220** (*see e.g*., **FIG. 89**)**.** The nut **202** further may include a spring guide **214** that extends from the head **212.** The bore **216** may extend from the distal end surface **226** to the drive slot **220.** The bore **216** may include screw threads **218** which are configured and dimensioned to mate with screw threads **244** on the T-bolt (or interior fastener) **206.** Hence, the nut **202** may be a receptacle that receives and couples to the shaft **240** of the lock bolt **206** within a counterbore **192**, **196** of the accessory rail **460.** The coil spring **204** may be disposed in the larger diameter bore **192** between an end wall **194** of the larger diameter bore **192** and an annular surface (or spring face) **230** on the head **212** of the nut **202.** After the fastener apparatus **200** is assembled, the coil spring **204** may bias the lock bolt **206** against the accessory rail **460.**

**FIG. 160** shows an illustrative rifle **530** with an exemplary hand guard **20** and upper receiver **532** each bearing a plurality of slots **22.** The firearm **530** may include a first exemplary configuration of weapon accessories that are secured to various slots **22** using a fastener apparatus as disclosed herein. For example, a front flip sight **534,** a tactical flashlight **536**, an angled fore grip **538**, and a quick disconnect mount **540** may be secured to various slots **22** on the handguard **14**, **20**; whereas, a rear flip sight **542** and an electronic optical sight (or other active device *e.g.* a laser sight, a night vision sight, etc.) **544** may be secured to slots on the upper receiver **14, 532.** By contrast, **FIG. 161** shows the rifle **530** with a second exemplary configuration of weapon accessories secured to various slots using a fastener apparatus as disclosed herein. The second exemplary configuration of weapon accessories may include a front flip sight **534**, five 2-slot accessory rails **460**, a bipod **546**, a vertical grip **548**, and a quick disconnect mount secured to various slots **22** on the handguard **14**, **20.** A scope **550** may be secured to two of the 2-slot accessory rails **460**, and a rear flip sight **542** may be secured to a slot **22** on the upper receiver **14**, **532.** Each of the first and second exemplary configurations of weapon accessories may be selected for an operational purpose.

**FIG. 162** shows an exemplary front flip site **534** with a fastener apparatus **18**, **200** for use with a universal interface system **10.** The front flip sight **534** may include a block **552**, a front sight **554** pivotally connected to the block, a counterbore **556** in the block, a guide **188** adjacent the counterbore, and a T-bolt **206** depending from the counterbore. The exterior fastener **202** and spring **240** may be disposed within the counterbore **556.** Access to the exterior fastener may be provided from the open end **558** of the counterbore. In use, the front flip sight **534** may be positioned over a slot **22** of a slotted object **14** such that the T-bolt **206** is received within the slot. A tool may be inserted into the open end **558** of the counterbore **556** to manipulate the exterior fastener **202.** The fastening apparatus **200** may be operated as previously described (*see e.g*., **FIGS. 63-76**) to secure an accessory **16, 534** to a slotted object **14**, **30** which is associated with the firearm **530.**

**FIG. 163** shows an exemplary rear flip site **542** with a fastener apparatus **200** for use with a universal interface system **10.** The rear flip sight **542** may include a block **560**, a rear sight **562** pivotally connected to the block, a counterbore **566** in the block, a guide **188** adjacent the counterbore, and a T-bolt **206** depending from the counterbore. The exterior fastener **202** and spring **240** may be disposed within the counterbore. Access to the exterior fastener **202** may be provided from the open end **558** of the counter bore. In use, the rear flip sight **542** may be positioned over a slot **22** of a slotted object **14** such that the T-bolt **206** is received within the slot. A tool may be inserted into the open end **558** of the counterbore to manipulate the exterior fastener **202.** The fastening apparatus **200** may be operated as previously described (*see e.g*., **FIGS. 63-76**) to secure an accessory **16, 542** to a slotted object **14**, **532** which is associated with the firearm **530.**

**FIG. 164** shows an exemplary angled foregrip **538** with three fastener apparatus **200** and a projection **184** of a universal interface system **10.** The angled foregrip **538** may include an elongated block **566** having a triangular shaped portion **568,** three counterbores **556** in the block, guides **188** adjacent the counterbores, a projection **184** adjacent one of the counterbores **556**, and a T-bolt **206** depending from each counterbore. The exterior fastener **202** and spring **204** may be disposed within the counter bore. Access to the exterior fasteners **202** may be provided from the open end **558** of the respective counterbores. In use, the angled fore grip **538** may be positioned over three adjacent slots **22** of a slotted object **14.** One T-bolt **206** may be received within each slot **22.** The projection **148** may be received in one of the slots **22** such that one end of the projection abuts a short end of the slot and the guide **188** for the adjacent T-bolt **206** abuts the opposite short end of the slot. A tool may be inserted into the open ends **558** of the counterbores **556** to manipulate the exterior fasteners **202.** The fastening apparatus **200** may be operated as previously described (see e.g., **FIGS. 63-76**) to secure an accessory **16, 538** to a slotted object **14**, **20** which is associated with the firearm **530.**

**FIG. 165** shows an exemplary tactical flashlight **536** with a fastener apparatus **200** and projection **148** of a universal interface system **10.** The tactical flashlight **536** may be secured within a clamp **570.** The base of the clamp **570** is connected to a block **572.** The block **572** includes a counterbore **556**, a guide **188** adjacent the counterbore, a T-bolt **206** depending from the counterbore, and a projection **184** adjacent the T-bolt. An exterior fastener **202** and spring **204** may be disposed within the counterbore. Access to the exterior fastener **202** may be provided from the open end **558** of the counterbore. In use, the block **572** may be positioned over a slot **22** of a slotted object **14.** The T-bolt **206** and projection **184** may be received in the slot **22** such that one end of the projection abuts a short end of the slot and the guide **188** for the adjacent T-bolt abuts the opposite short end of the slot. A tool may be inserted into the open end **558** of the counterbore to manipulate the exterior fastener **202.** The fastening apparatus **200** may be operated as previously described (see e.g., **FIGS. 63-76**) to secure an accessory **16, 536** to a slotted object **14, 20** which is associated with the firearm **530.**

**FIG. 166** shows an exemplary optical sight **544** with a fastener apparatus **200** and projection **184** of a universal interface system **10.** The optical sight **544** may be fixed to a mounting device **576.** The mounting device **576** may include a counterbore **556**, a guide **188** adjacent the counterbore, a T-bolt **206** depending from the counterbore, and a projection **184** adjacent the T-bolt. An exterior fastener **202** and spring **204** may be disposed within the counterbore. Access to the exterior fastener may be provided from the open end **558** of the counter bore. In use, the mounting device **576** may be positioned over a slot **22** of a slotted object **14.** The T-bolt **206** and projection **184** may be received in the slot **22** such that one end of the projection **184** abuts a short end of the slot and the guide **188** for the adjacent T-bolt abuts the opposite short end of the slot. A tool may be inserted into the open end **558** of the counterbore to manipulate the exterior fastener **202.** The fastening apparatus **200** may be operated as previously described (see e.g., **FIGS. 63-76**) to secure an accessory **16, 544** to a slotted object **14**, **532** which is associated with the firearm **530.**

**FIG. 167** shows a quick disconnect (QD) mount **540** with a fastener apparatus **200** of a universal interface system **10.** The QD mount **540** includes a block **578,** a counterbore **556** in the block, a guide **188** adjacent the counterbore, and a T-bolt **206** depending from the counterbore **556.** Referring to **FIG. 168**, the counterbore **556** may include a receptacle **580** for a quick disconnect fitting near the open end **558** of the counterbore. Also, the external fastener **202** and spring **204** may be disposed within the counterbore. Access to the exterior fastener **202** may be provided from the open end **558** of the counterbore. In another embodiment, the block **578** may include a projection **184** adjacent the T-bolt. In use, the QD mount **540** may be positioned over a slot **22** of a slotted object **14** such that the T-bolt **206** is received within a slot **22.** A tool may be inserted into the open end **558** of the counterbore **556** to manipulate the exterior fastener **202.** The fastening apparatus **200** may be operated as previously described (see e.g., **FIGS. 63-76**) to secure an accessory **16**, **540** to a slotted object **14**, **30** which is associated with the firearm **530.**

**FIG. 169** shows an exemplary vertical grip **548** with a fastener apparatus **200** and a projection **184** of a universal interface system **10.** The vertical grip **548** may be fixed to a mounting device **582.** The mounting device **582** may include a counterbore **556**, a guide **188** adjacent the counterbore, a T-bolt **206** depending from the counterbore **556**, and a projection **184** adjacent the T-bolt **206.** An exterior fastener **202** and spring **204** may be disposed within the counterbore. Access to the exterior fastener may be provided from the open end **558** of the counter bore. In use, the mounting device **582** may be positioned over a slot **22** of a slotted object **14.** The T-bolt **206** and projection **184** may be received in the slot **22** such that one end of the projection **184** abuts a short end of the slot and the guide **188** for the adjacent T-bolt abuts the opposite short end of the slot. A tool may be inserted into the open end **558** of the counterbore **556** to manipulate the exterior fastener **202.** The fastening apparatus **200** may be operated as previously described (see e.g., **FIGS. 63-76**) to secure an accessory **16, 548** to a slotted object **14**, **30** which is associated with the firearm **530.**

**FIG. 170** shows an exemplary bipod **546** with a fastener apparatus **200** and a projection **184** of a universal interface system **10.** The bipod **546** may be fixed to a mounting device **584.** The mounting device **584** may include a counterbore **556**, a guide **188** adjacent the counterbore **556**, a T-bolt **206** depending from the counterbore, and a projection **184** adjacent the T-bolt. An exterior fastener **202** and spring **204** may be disposed within the counterbore **556.** Access to the exterior fastener **202** may be provided from the open end **558** of the counterbore. In use, the mounting device **584** may be positioned over a slot **22** of a slotted object **14.** The T-bolt **206** and projection **184** may be received in the slot **22** such that one end of the projection **184** abuts a short end of the slot and the guide **188** for the adjacent T-bolt abuts the opposite short end of the slot. A tool may be inserted into the open end **558** of the counterbore **556** to manipulate the exterior fastener **202.** The fastening apparatus **200** may be operated as previously described (*see e.g*., **FIGS. 63-76**) to secure an accessory **16**, **546** to a slotted object **14**, **30** which is associated with the firearm **530.**

**FIG. 171** shows an exemplary grenade launcher **586** with four fastener apparatus **200** and a projection **184** of a universal interface system. The grenade launcher **586** may include an elongated member **588** having a dovetail track **590**, a trigger housing **592** adjacent the dovetail track, and a barrel **594** that mounts within the dovetail track and abuts the trigger housing. The grenade launcher **586** may be configured for 40mm ammunition. The elongated member **588** further may include four counterbores **556**, guides **188** adjacent the counterbores, a projection **184** adjacent one of the counterbores, and a T-bolt **206** depending from each counterbore. An exterior fastener **202** and spring **204** may be disposed within each counterbore **556.** Access to the exterior fastener **202** may be provided from the open ends **558** of the counterbores. In use, the elongated member **588** may be positioned over four or more adjacent slots **22** of a slotted object **14.** One T-bolt **206** may be received within each slot **22.** The projection **184** may be received in one of the slots **22** such that one end of the projection **184** abuts a short end of the slot and the guide **188** for the adjacent T-bolt abuts the opposite short end of the slot. A tool may be inserted into the open ends **558** of the counterbores **556** to manipulate the exterior fasteners **202.** The fastening apparatus **200** may be operated as previously described (see e.g., **FIGS. 63-76**) to secure an accessory **16, 586** to a slotted object **14, 30** which is associated with the firearm **530.**

Accordingly, these and other accessories **16** may be secured to a slotted object **14** of a universal interface system **10**, using a fastener apparatus **18**, **200**, and accessory rails **17**, **160**, **460** as disclosed and described herein.

According to the present invention, an interior fastener **82,136, 206, 268** (preferably having a proximal end and a distal end) for a universal interface system **10** which comprises an object **14** that includes a mounting surface **26,** a locking surface **28**, and an elongated slot **22** extending from the mounting surface to the locking surface is provided. The interior fastener comprises an elongated base **106, 138, 236, 270** having a first longitudinal axis. The elongated base includes a lower surface **112, 146, 256, 294,** a first side **324, 350, 382, 414** proximate to the lower surface, a second side **340, 352, 384, 416** proximate to the first side, and a third side **342, 354, 386, 418** proximate to the first side and the lower surface. The third side includes a notch **116, 150, 246, 282** which comprises a first interior sidewall **344, 356, 388, 420**, the first interior sidewall extending from the second side to the lower surface of the elongated base. The interior fastener further comprises a shoulder **108, 140, 238, 272** next to the elongated base, the shoulder having a second longitudinal axis. The shoulder includes a first sidewall-segment **346, 376, 408, 440** proximate to the first side of the elongated base; and an end surface **110, 144, 242, 276** spaced from the second side of the elongated base along the second longitudinal axis. The interior fastener further comprises a first screw thread **114, 148, 244, 280** proximate to the end surface for receiving a mating fastener.

The first side **324, 350, 382, 414** may abut the lower surface 112,146, **256, 294.** The second side **340, 352, 384, 416** may abut the first side **324, 350, 382, 414** and the third side **342, 354, 386, 418.**

The fastener may further comprise a bore **100, 142** in the end surface **110, 144,** the bore being internally threaded with the first screw thread **114, 148.** The bore **100, 142** may extend from the end surface **110, 144** to the lower surface **112, 146.**

The fastener may further comprise a shaft **240, 274** extending from the end surface **242, 276**, the shaft being-externally threaded with the first screw thread **244, 280.**

The shoulder **108, 140, 238, 272** may further comprise a first cross-sectional profile **320, 360, 392, 424** perpendicular to the second longitudinal axis. The first cross-sectional profile comprises a first straight wall segment **322, 358, 390, 422** proximate the first side **324, 350, 382, 414**; a second straight wall segment **326, 362, 394, 426** spaced from the first straight wall segment; a first curved wall segment **328, 364, 396, 428** between the first straight side wall segment and the second straight wall segment; and a second curved wall segment **330, 366, 398, 430** between the first straight side wall segment and the second straight wall segment.

The first cross-sectional profile **320, 360, 392, 424** may further comprise a third curved wall segment **332, 368, 400, 432** abutting the first straight wall segment; a third straight wall segment **336, 372, 404, 436** abutting the first curved wall segment; and a fourth straight wall segment **338, 374, 406, 438** abutting the third curved wall segment.

The shoulder **140, 238** may further comprise a first cross-sectional profile **360, 392** normal to the second longitudinal axis, and the first cross-sectional profile has a first plane of symmetry **Y-Z.** The first cross-sectional profile preferably has a second plane of symmetry **Y-X.** The first cross-sectional profile preferably is generally square.

The fastener may further comprise a wedge **504** in the first screw thread **244.** The wedge preferably comprises an engineered plastic material. The engineered plastic material preferably comprises nylon 6/6. The engineered plastic material preferably is a strip **506.**

According to the present invention, a fastener apparatus **200** for a universal interface system **10** is provided and comprising the interior fastener **82, 136, 206, 268** of the present invention; and an exterior fastener **78, 202** including a distal end **96, 224** comprising a head **88, 212**, and a second screw thread **92, 218** adjacent to the distal end **96, 224,** the second screw thread being configured and dimensioned to mate with the first screw thread **114,148, 244, 280.** A spring **80, 204** is disposed around the exterior fastener **78, 202,** the spring being positioned adjacent to the distal end surface **226** and spaced from the second side of the elongated base **340, 352, 384, 416.**

According to the present invention, a fastener apparatus for a universal interface system is provided and comprising the interior fastener of the present invention; and an exterior fastener including a proximal end and a distal end comprising a head which comprises a proximal end surface, a distal end surface, the distal end surface comprising annular shape, and a side surface extending from the proximal end surface to the distal end surface. The exterior fastener further comprises a tubular member extending from the head to the distal end, the tubular member comprising a bore extending from the distal end toward to the head, the bore comprising a sidewall, a second screw thread disposed on the sidewall, the second screw thread being configured and dimensioned to mate with the first screw thread, and a side surface extending from the distal end to the annular surface. A spring is disposed over the side surface between the annular surface and the distal end.

The fastener apparatus may further comprise a fastening aid **500** wherein the first screw thread **244**, the second screw thread **218**, and the fastening aid **500** are engaged and form a coupling.

According to the present invention, an accessory **16** for a small arms weapon is provided and comprising a device **17, 304, 306, 308, 310, 312, 460, 534, 536, 538, 540, 542, 544, 546, 548, 550** comprising a weapon accessory; and the fastener apparatus of the present invention incorporated into the device.

The device may be an accessory rail **17.**

According to the present invention, a universal interface system **10** is provided and comprising an object **14** which comprises a mounting surface **26**, a locking surface **28**, and an elongated slot **22** extending from the mounting surface to the locking surface. The universal interface system **10** further comprises the accessory of the present invention fixed to the mounting surface **26.**

While it has been illustrated and described what at present are considered to be embodiments of the present invention, it will be understood by those skilled in the art that various changes and modifications may be made, and equivalents may be substituted for elements thereof without departing from the true scope of the invention. For example, different spring types, biasing mechanisms, fastening aids, thread locking insert materials, accessories or slot spacing span values may be used in modified configurations and combinations as those embodiments of a fastener apparatus, accessory rails, and universal interface system disclosed herein. Additionally, features and/or elements from any embodiment may be used singly or in combination with other embodiments. Therefore, it is intended that these inventions not be limited to the particular embodiments disclosed herein, but that they have the full scope defined by the language of the following claims, and equivalents thereof.

## Claims

1. An interior fastener (82, 136, 206, 268) for a universal interface system (10) which comprises an object (14) that includes a mounting surface (26), a locking surface (28), and an elongated slot (22) extending from the mounting surface to the locking surface, the interior fastener comprising:
an elongated base (106, 138, 236, 270) having a first longitudinal axis, the elongated base including
a lower surface (112, 146, 256, 294),
a first side (324, 350, 382, 414) proximate to the lower surface,
a second side (340, 352, 384, 416) proximate to the first side, and
a third side (342, 354, 386, 418) proximate to the first side and the lower surface, the third side including
a notch (116, 150, 246, 282) which comprises
a first interior sidewall (344, 356, 388, 420), the first interior sidewall extending from the second side to the lower surface of the elongated base;
a shoulder (108, 140, 238, 272) next to the elongated base, the shoulder having a second longitudinal axis, the shoulder including
a first sidewall-segment (346, 376, 408, 440) proximate to the first side of the elongated base; and
an end surface (110, 144, 242, 276) spaced from the second side of the elongated base along the second longitudinal axis; and
a first screw thread (114, 148, 244, 280) proximate to the end surface for receiving a mating fastener.

2. The fastener of claim 1, wherein the first side (324, 350, 382, 414) abuts the lower surface (112, 146, 256, 294).

3. The fastener of claim 2, wherein the second side (340, 352, 384, 416) abuts the first side (324, 350, 382, 414) and the third side (342, 354, 386, 418).

4. The fastener of any one of claims 1 to 3, further comprising a bore (100, 142) in the end surface (110, 144), the bore being internally threaded with the first screw thread (114, 148).

5. The fastener of claim 4, wherein the bore (100, 142) extends from the end surface (110, 144) to the lower surface (112, 146).

6. The fastener of any one of claims 1 to 5, further comprising a shaft (240, 274) extending from the end surface (242, 276), the shaft being-externally threaded with the first screw thread (244, 280).

7. The fastener of any one of claims 1 to 6, wherein the shoulder (108, 140, 238, 272) further comprises a first cross-sectional profile (320, 360, 392, 424) perpendicular to the second longitudinal axis, the first cross-sectional profile comprises:
a first straight wall segment (322, 358, 390, 422) proximate the first side (324, 350, 382, 414);
a second straight wall segment (326, 362, 394, 426) spaced from the first straight wall segment;
a first curved wall segment (328, 364, 396, 428) between the first straight side wall segment and the second straight wall segment; and
a second curved wall segment (330, 366, 398, 430) between the first straight side wall segment and the second straight wall segment.

8. The fastener of claim 7, wherein the first cross-sectional profile (320, 360, 392, 424) further comprises:
a third curved wall segment (332, 368, 400, 432) abutting the first straight wall segment;
a third straight wall segment (336, 372, 404, 436) abutting the first curved wall segment; and
a fourth straight wall segment (338, 374, 406, 438) abutting the third curved wall segment.

9. The fastener of any one of claims 1 to 8, wherein the shoulder (140, 238) further comprises a first cross-sectional profile (360, 392) normal to the second longitudinal axis, and the first cross-sectional profile has a first plane of symmetry (Y-Z),
wherein the first cross-sectional profile preferably has a second plane of symmetry (Y-X), and
wherein the first cross-sectional profile preferably is generally square.

10. The fastener of any one of claims 1 to 9, further comprising a wedge (504) in the first screw thread (244),
wherein the wedge preferably comprises an engineered plastic material,
wherein the engineered plastic material preferably comprises nylon 6/6, and/or wherein the engineered plastic material preferably is a strip (506).

11. A fastener apparatus (200) for a universal interface system (10) comprising:
the interior fastener (82, 136, 206, 268) of any one of claims 1 to 10; and
an exterior fastener (78, 202) including a distal end (96, 224) comprising
a head (88, 212), and
a second screw thread (92, 218) adjacent to the distal end (96, 224), the second screw thread being configured and dimensioned to mate with the first screw thread (114, 148, 244, 280), and
a spring (80, 204) disposed around the exterior fastener (78, 202), the spring being positioned adjacent to the distal end surface (226) and spaced from the second side of the elongated base (340, 352, 384,416).

12. The fastener apparatus of claim 11, further comprising a fastening aid (500) wherein the first screw thread (244), the second screw thread (218), and the fastening aid (500) are engaged and form a coupling.

13. An accessory (16) for a small arms weapon comprising:
a device (17, 304, 306, 308, 310, 312, 460, 534, 536, 538, 540, 542, 544, 546, 548, 550) comprising a weapon accessory; and
the fastener apparatus of claim 11 or 12 incorporated into the device.

14. The accessory of claim 13, wherein the device is an accessory rail (17).

15. A universal interface system (10) comprising:
an object (14) which comprises
a mounting surface (26),
a locking surface (28), and
an elongated slot (22) extending from the mounting surface to the locking surface; and
the accessory of claim 13 or 14 fixed to the mounting surface (26).
